# EUROPEAN PATENT APPLICATION

(11) **EP 4 694 159 A1**
(43) Date of publication of application: **11.02.2026**
(21) Application number: 24785155.3
(22) Date of filing: 02.04.2024
(51) Int. Cl.: H04N 23/54, H04N 23/55, G03B 3/10, G03B 13/36, G03B 17/12, G02B 7/02, G02B 7/08, H02K 33/18, G03B 5/00

(54) **LENS ACTUATOR, CAMERA DEVICE, AND OPTICAL INSTRUMENT**

(30) Priority: 06.04.2023 KR 20230045589; 21.04.2023 KR 20230052962
(71) Applicant: LG INNOTEK CO., LTD., Seoul 07796 (KR)
(72) Inventor: NOH, Yun Ho, Seoul 07796 (KR); KWON, Tae Hoon, Seoul 07796 (KR); SON, Byung Wook, Seoul 07796 (KR)
(74) Representative: DREISS Patentanwälte PartG mbB
(86) International application number: PCT/KR2024/004223
(87) International publication number: WO 2024/210449

(57) **Abstract**

A first embodiment of the present invention relates to a lens actuator comprising: a base; a housing disposed on the base; a bobbin disposed inside the housing; a first ball disposed between the housing and the base; a second ball disposed between the housing and the lower side of the bobbin; and a coil spring coupled to the bobbin and the housing, wherein the coil spring pressurizes the second ball.

## Description

### [Technical Field]

The present embodiment relates to a lens actuator, a camera device, and an optical instrument.

### [Background Art]

A camera device is a device that photographs a picture or video of a subject, and is installed in optical instruments such as smartphones, drones, and vehicles.

An auto-focus function that automatically adjusts the focus according to the distance of the subject is applied to the camera device. In addition, a handshake correction function is applied to prevent a phenomenon in which the focus is shaken by the user's handshake.

The autofocus function and the handshake correction function may be performed through electromagnetic interaction between the magnet and the coil.

However, in the conventional lens driving device, a magnet that does not require electrical connection is disposed in the moving unit and the coil is disposed in the fixed unit. In this case, there is a problem in that a magnet having a greater weight than a coil is disposed in the moving unit, thereby increasing current consumption.

In particular, recently, as image sensors become more pixelated, the lens diameter has increased, and the weight of the lens has also increased, which has exacerbated the problem.

In addition, in conventional lens actuators, there is a problem in that the height of the camera device in an optical axis direction increases because the guide structure for OIS-x-axis driving and the guide structure for OIS-y-axis driving are disposed in separate layers.

Meanwhile, the autofocus function is performed as the lens moves along the optical axis against the image sensor, and the movement of the lens along the optical axis can be guided by a ball. At this time, the attractive force between the magnet and the yoke can be used to hold the ball between the fixed unit and the moving unit.

However, in this case, there is a problem that a centering force exists in the direction of the optical axis.

Additionally, there is a problem that linearity between current and travel distance is not secured over the entire stroke range of the drive for the handshake correction function.

Patent Literature 1 KR 10-2015-0118005 A

### [Detailed Description of the Invention]

### [Technical Subject]

The present embodiment is intended to provide a lens actuator that reduces current consumption for performing an autofocus function by placing a coil that is lighter in weight than a magnet in a moving unit.

In addition, it is intended to provide a lens actuator with a minimized height in the optical axis direction by forming a guide structure for OIS-x-axis driving and a guide structure for OIS-y-axis driving as one body.

The present embodiment is intended to provide a lens actuator that pressurizes a ball through an elastic member so that there is no centering force in the optical axis direction that occurs when the ball is pressurized through a yoke and a magnet.

In addition, it is intended to provide a lens actuator with improved linearity between current and travel distance over the entire stroke range of the drive for handshake correction function.

### [Technical Solution]

A lens actuator according to a first embodiment of the present invention comprises: a base; a housing disposed on the base; a bobbin disposed inside the housing; a first ball disposed between the housing and the base; a second ball disposed between the housing and the lower side of the bobbin; and a coil spring coupled with the bobbin and the housing, wherein the coil spring is configured to press the second ball.

The base may comprise a first guide configured to guide movement of the first ball.

The housing may comprise a second guide configured to guide movement of the first ball and formed on a side surface of the housing.

The first guide and the second guide may comprise grooves.

The housing may comprise a first housing comprising a lower plate having a metal member and a second housing coupled with the first housing and having a protrusion configured to guide the second ball.

The lens actuator comprises a first substrate disposed between the first housing and the second housing, the first substrate is coupled with a lower surface of the first housing, and the second housing may be coupled with the first substrate.

The second housing may be in contact with the second ball to press a portion of the coil spring.

The lens actuator comprises a cover coupled with the base, and the first ball may be disposed between the cover and a pillar of the base.

The coil spring may have a circular ring shape when viewed from above.

The coil spring can be formed by bending one strand so that it may be overlapped with one another multiple times in an optical axis direction.

The bobbin comprises a protruded portion protruded from an outer surface of the bobbin, and the coil spring can connect the protruded portion of the bobbin and the lower plate of the housing.

The coil spring can connect the bobbin and the metal member of the housing.

The bobbin comprises first to fourth corners, the coil spring comprises first to fourth coil springs disposed at the first to fourth corners of the bobbin, and the first to fourth coil springs can be spaced apart from one another in a direction perpendicular to the optical axis direction.

A camera device according to a first embodiment of the present invention may comprise: a printed circuit board; an image sensor disposed in the printed circuit board; the lens actuator disposed in the printed circuit board; and a lens coupled with the lens actuator.

An optical instrument according to a first embodiment of the present invention may comprise: a main body; a camera device disposed in the main body; and a display disposed in the main body and outputting at least one of an image and a video photographed by the camera device.

A lens actuator according to a second embodiment of the present invention comprises: a fixed unit; a first moving unit being disposed within the fixed unit; a second moving unit being disposed within the first moving unit; a first magnet and a first coil for moving the first moving unit in the optical axis direction; and a second magnet and a second coil that move the second moving unit in a first direction perpendicular to the optical axis, wherein the second magnet comprises a first magnet portion comprising a north pole and a south pole, and a second magnet portion comprising a south pole and a north pole, wherein the first magnet portion and the second magnet portion are disposed on a first side surface of the second moving unit, wherein the second coil comprises a first coil portion interacting with the first magnet portion, and a second coil portion interacting with the second magnet portion, and wherein the polarity of the first magnet portion facing the first coil portion and the polarity of the second magnet portion facing the second coil portion may be different from each other.

The polarity of the entire area of the first magnet portion facing the first coil portion is a single polarity as the S pole, and the polarity of the entire area of the second magnet portion facing the second coil portion may be a single polarity as the N pole.

The first magnet portion comprises an inner surface disposed on the first side surface of the second moving unit and an outer surface opposite to the inner surface, wherein the inner surface of the first magnet portion is formed as an N pole in its entirety, and wherein the outer surface of the first magnet portion may be formed as an S pole in its entirety.

The first coil portion is overlapped with the first magnet portion in the first direction, and the second coil portion may be overlapped with the second magnet portion in the first direction.

When current is applied to the second coil, the second magnet can move away from or toward the second coil in the first direction.

The first magnet portion and the second magnet portion can be formed as separate magnets.

The second magnet comprises a neutral portion being disposed between the first magnet portion and the second magnet portion, wherein the first magnet portion, the second magnet portion, and the neutral portion can be formed integrally.

The first magnet portion and the second magnet portion can be overlapped with each other in a second direction perpendicular to the optical axis direction and the first direction.

The first coil portion is electrically connected to the second coil portion, and the winding direction of the first coil portion may be opposite to the winding direction of the second coil portion.

The lens actuator comprises a third magnet and a third coil that move the second moving unit in a second direction perpendicular to the optical axis direction and the first direction, wherein the third magnet comprises a third magnet portion comprising a north pole and a south pole, and a fourth magnet portion comprising a south pole and a north pole, wherein the third coil comprises a third coil portion interacting with the third magnet portion, and a fourth coil portion interacting with the fourth magnet portion, and wherein the polarity of the third magnet portion facing the third coil portion and the polarity of the fourth magnet portion facing the fourth coil portion may be different from each other.

The second moving unit comprises a second side surface opposite the first side surface, and a third side surface and a fourth side surface being disposed opposite to each other, wherein the first magnet may be disposed on the third side surface of the second moving unit or disposed opposite to the third side surface, and wherein the third magnet may be disposed on the fourth side surface of the second moving unit.

The lens actuator may comprise a ball being disposed between the first moving unit and the second moving unit.

A lens actuator according to a second embodiment of the present invention comprises: a fixed unit; a first moving unit being disposed within the fixed unit; a second moving unit being disposed within the first moving unit; a first magnet and a first coil that move the first moving unit in an optical axis direction; and a second magnet and a second coil that move the second moving unit in a first direction perpendicular to the optical axis direction, wherein the second magnet comprises a first magnet portion comprising a north pole and a south pole, and a second magnet portion comprising a south pole and a north pole, wherein the second coil comprises a first coil portion interacting with the first magnet portion, and a second coil portion interacting with the second magnet portion, and wherein the first coil portion is overlapped with the first magnet portion in the first direction, and the second coil portion may be overlapped with the second magnet portion in the first direction.

A camera device according to a second embodiment of the present invention may comprise: a printed circuit board; an image sensor being disposed on the printed circuit board; the lens actuator being disposed on the printed circuit board; and a lens being coupled to the lens actuator.

An optical instrument according to a second embodiment of the present invention may comprise: a main body; a camera device being disposed in the main body; and a display being disposed in the main body and outputting at least one of an image and a video photographed by the camera device.

### [Advantageous Effects]

Through the present embodiment, the current consumption for performing the autofocus function can be reduced by placing a coil that is lighter in weight than the magnet in the moving unit.

In addition, since the guide structure for OIS-x-axis driving and the guide structure for OIS-y-axis driving are formed integrally, the height of the lens actuator in the optical axis direction can be minimized.

Through this, the height at which the camera device being protruded from the smartphone to be minimized.

In addition, since the centering force in an optical axis direction that occurs when the ball is pressurized through the yoke and magnet is eliminated, that is, there is no force to return to the centering position, the current consumption for AF driving is reduced, even if only slightly, and the accuracy of AF driving can be improved.

In addition, the elastic member can expect a stress relief effect due to an increase in spring volume as the coil spring is used, for an example. Consequently, reliability and durability characteristics can be improved. Furthermore, the drivable stroke length can be increased.

In addition, when using a coil spring as an elastic member, the number of parts can be reduced compared to a leaf spring and wire combination structure, simplifying the process and improving the cost.

In addition, linearity between current and travel distance can be ensured over the entire stroke range of the drive for the handshake correction function.

### [Brief Description of Drawings]

FIG. 1 is a conceptual diagram of a lens actuator according to a first embodiment of the present invention.
FIG. 2 is a perspective view of a lens actuator according to a first embodiment of the present invention.
FIG. 3 is a cross-sectional view taken along line A-A of FIG. 2.
FIG. 4 is a cross-sectional view taken along line B-B of FIG. 2.
FIG. 5 is an enlarged view of area F of FIG. 4.
FIG. 6 is a cross-sectional view taken along line C-C of FIG. 2.
FIG. 7 is an enlarged view of area G of FIG. 6.
FIG. 8 is a cross-sectional view taken along line D-D of FIG. 2.
FIG. 9 is an enlarged view of area H of FIG. 8.
FIG. 10 is a cross-sectional view taken along line E-E of FIG. 2.
FIG. 11 is a cross-sectional view of a lens actuator according to a first embodiment of the present invention, cut perpendicular to the optical axis and viewed from above.
FIG. 12 is an exploded perspective view of a lens actuator according to a first embodiment of the present invention.
FIG. 13 is an exploded perspective view of a lens actuator according to a first embodiment of the present invention, viewed from a different direction than FIG. 12.
FIG. 14 is a perspective view of a lens actuator according to a first embodiment of the present invention, with the cover omitted.
FIG. 15 is a perspective view illustrating a fixed unit and related components of a lens actuator according to a first embodiment of the present invention.
FIG. 16 is a perspective view illustrating a moving unit and related components of a lens actuator according to a first embodiment of the present invention.
FIG. 17 is a perspective view illustrating a coupling structure of an inner substrate and an outer substrate of a lens actuator according to a first embodiment of the present invention.
FIG. 18 is a bottom perspective view illustrating a moving unit and related components of a lens actuator according to a first embodiment of the present invention.
FIG. 19 is a bottom perspective view illustrating a coupling structure of inner and outer substrates of a lens actuator according to a first embodiment of the present invention.
FIG. 20 is a perspective view of FIG. 16 with a cover removed.
FIG. 21a is a perspective view of FIG. 20 with an OIS moving unit and related components removed.
FIG. 21b is an enlarged perspective view of a coupling structure between a coil spring and an AF carrier.
FIG. 21c is an enlarged perspective view of a coupling structure between a coil spring and an OIS carrier.
FIG. 22 is an exploded perspective view of a coil spring of FIG. 21a with the coil spring removed.
FIG. 23 is a perspective view illustrating an OIS moving unit and related components of a lens actuator according to a first embodiment of the present invention.
FIG. 24 is a bottom perspective view viewed from a different direction than FIG. 23.
FIG. 25 is a bottom perspective view of FIG. 16 viewed from a different direction.
FIG. 26 is a bottom view of FIG. 25 with a preload member and an inner substrate removed.
FIG. 27 is a perspective view illustrating a coupling structure of an OIS carrier, a coil spring, and a metal member of a lens actuator according to a first embodiment of the present invention.
FIG. 28 is an enlarged view of area I of FIG. 27.
FIG. 29 is a perspective view of a lens actuator according to a first embodiment of the present invention with a cover and a lid removed.
FIG. 30 is a bottom perspective view of a driving unit of the lens actuator according to a first embodiment of the present invention.
FIG. 31 is a cross-sectional perspective view illustrating a coupling structure of a coil spring of a lens actuator according to a first embodiment of the present invention.
FIG. 32 is a cross-sectional view illustrating a coupling structure of a coil spring of a lens actuator according to a first embodiment of the present invention.
FIG. 33a is a front view illustrating a coil spring of a lens actuator according to a modified embodiment.
FIG. 33b is a perspective view illustrating a coil spring and its coupling structure of a lens actuator according to another modified embodiment.
FIG. 33c is a drawing illustrating a coil spring according to additional various modified embodiments.
FIG. 34 is a cross-sectional view of a lens actuator according to a modified embodiment, cut perpendicular to an optical axis and viewed from above.
FIG. 35 is a bottom perspective view of a driving unit of a lens actuator according to a modified embodiment.
FIG. 36 is a plan view of a lens actuator according to a first embodiment of the present invention with its cover removed.
FIG. 37 is a plan view of a portion of FIG. 36 enlarged with a cover omitted.
FIG. 38 is a perspective view illustrating a ball and related components of a lens actuator according to a first embodiment of the present invention.
FIG. 39 is a perspective view illustrating a ball accommodating structure of a base of a lens actuator according to a first embodiment of the present invention.
FIG. 40 is a perspective view illustrating a state in which a ball, a plate member, an elastic member, and a reinforcing member in FIG. 39 are disposed.
FIG. 41 is a perspective view of FIG. 40 viewed from a different direction.
FIG. 42 is a perspective view of a moving unit and a ball of a lens actuator according to a first embodiment of the present invention.
FIG. 43 is a perspective view of FIG. 42 viewed from a different direction.
FIG. 44 (a) is a drawing comparing the heights of a ball and a pressure point when a moving unit moves upward, and (b) is a drawing comparing the heights of a ball and a pressure point when a moving unit moves downward.
FIGS. 45 to 47 are drawings for explaining an autofocus driving of a lens actuator according to a first embodiment of the present invention. FIG. 45 is a cross-sectional view illustrating a moving unit in an initial state where no current is applied to an AF coil. FIG. 46 is a cross-sectional view illustrating a moving unit moving upward in an optical axis direction when a positive current is applied to an AF coil. FIG. 47 is a cross-sectional view illustrating a state in which a reverse current is applied to an AF coil and a moving unit moves downward in an optical axis direction.

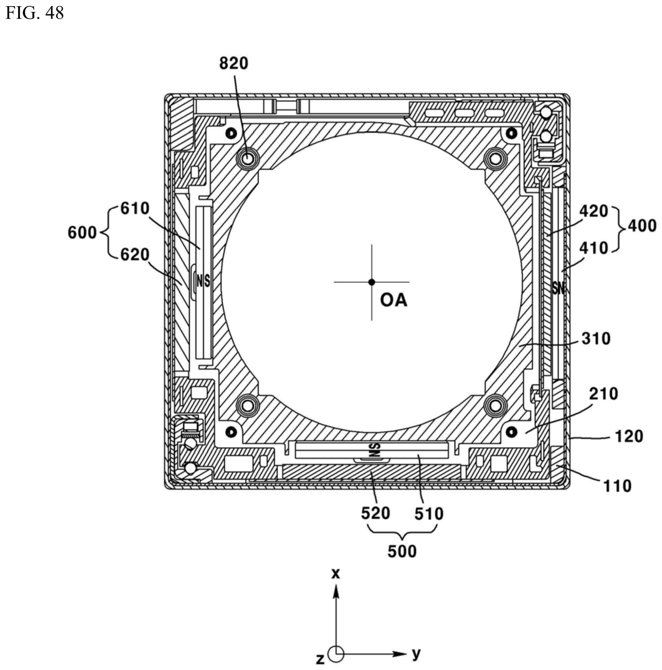

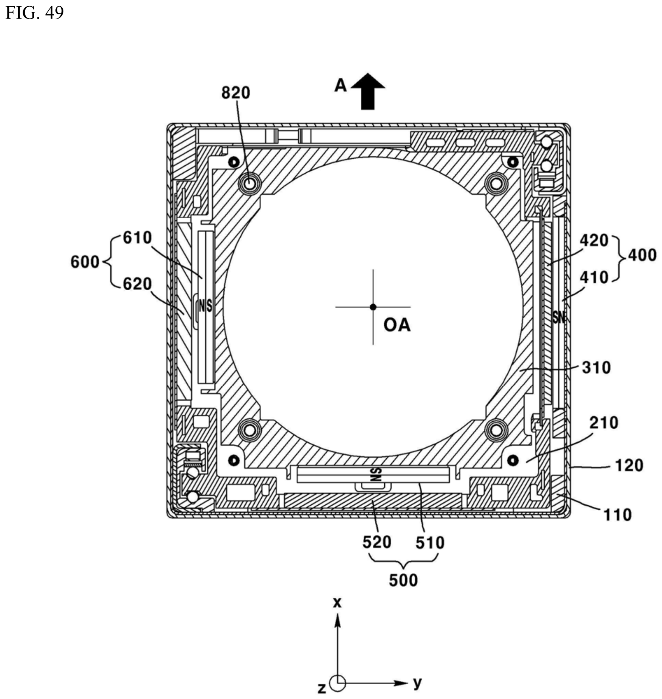

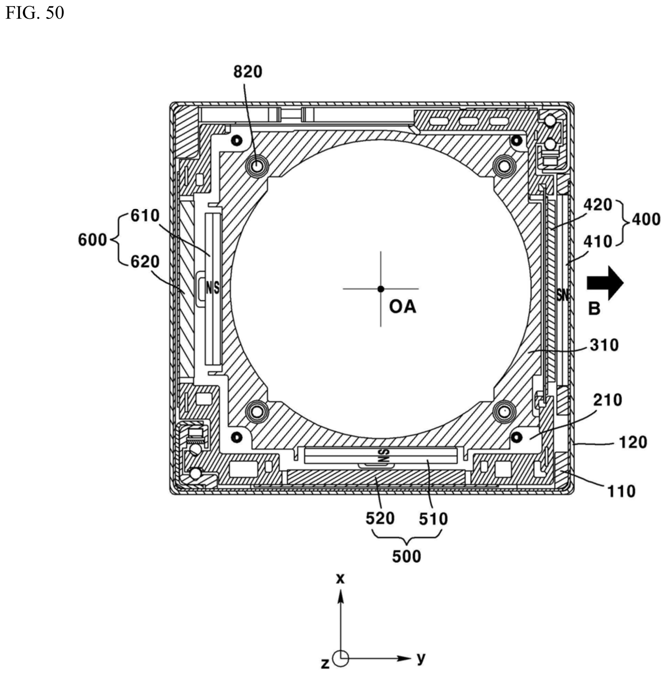

FIGS. 48 to 50 are diagrams for explaining a handshake correction driving of the lens actuator according to a first embodiment of the present invention. FIG. 48 is a cross-sectional view illustrating the appearance of an OIS moving unit in an initial state in which no current is applied to an OIS-x coil and an OIS-y coil. FIG. 49 is a cross-sectional view illustrating the appearance in which an OIS moving unit moves in an x-axis direction perpendicular to an optical axis when a current is applied to an OIS-x coil. FIG. 50 is a cross-sectional view illustrating the appearance in which an OIS moving unit moves in a y-axis direction perpendicular to both an optical axis and an x-axis when a current is applied to an OIS-y coil.
FIG. 51 is an exploded perspective view of a camera device according to a first embodiment of the present invention.
FIG. 52 is a perspective view of an optical instrument according to a first embodiment of the present invention.
FIG. 53 is a perspective view of an optical instrument according to a modified embodiment.
FIG. 54 is a conceptual diagram of a lens actuator according to a second embodiment of the present invention.
FIG. 55 is a perspective view of a lens actuator according to a second embodiment of the present invention.
FIG. 56 is a cross-sectional view taken along line A-A of FIG. 55.
FIG. 57 is a cross-sectional view taken along line B-B of FIG. 55.
FIG. 58 is an enlarged view of area F of FIG. 57.
FIG. 59 is a cross-sectional view taken along line C-C of FIG. 55.
FIG. 60 is an enlarged view of area G of FIG. 59.
FIG. 61 is a cross-sectional view taken along line D-D of FIG. 55.
FIG. 62 is an enlarged view of area H of FIG. 61.
FIG. 63 is a cross-sectional view taken along line E-E of FIG. 55.
FIG. 64 is a cross-sectional view taken along line orthogonal to an optical axis and viewed from above of a lens actuator according to a second embodiment of the present invention.
FIG. 65 is an exploded perspective view of a lens actuator according to a second embodiment of the present invention.
FIG. 66 is an exploded perspective view of a lens actuator according to a second embodiment of the present invention, viewed from a different direction than FIG. 65.
FIG. 67 is a perspective view of a lens actuator according to a second embodiment of the present invention with the cover omitted.
FIG. 68 is a perspective view illustrating a fixed unit and related components of a lens actuator according to a second embodiment of the present invention.
FIG. 69 is a perspective view illustrating a moving unit and related components of a lens actuator according to a second embodiment of the present invention.
FIG. 70 is a perspective view illustrating a coupling structure of an inner substrate and an outer substrate of a lens actuator according to a second embodiment of the present invention.
FIG. 71 is a bottom perspective view illustrating a moving unit and related components of a lens actuator according to a second embodiment of the present invention.
FIG. 72 is a bottom perspective view illustrating a coupling structure of inner and outer substrates of a lens actuator according to a second embodiment of the present invention.
FIG. 73 is a perspective view of FIG. 69 with a cover removed.
FIG. 74 is a perspective view of FIG. 73 with an OIS moving unit and related components removed.
FIG. 75 is an exploded perspective view of FIG. 74 with wires removed.
FIG. 76 is a perspective view illustrating an OIS moving unit and related components of a lens actuator according to a second embodiment of the present invention.
FIG. 77 is a bottom perspective view viewed from a different direction from FIG. 76.
FIG. 78 is a bottom perspective view of FIG. 69 viewed from a different direction.
FIG. 79 is a bottom view of FIG. 78 with a preload member and an inner substrate removed.
FIG. 80 is a perspective view illustrating a coupling structure of an elastic member, a wire, and a metal member of a lens actuator according to a second embodiment of the present invention.
FIG. 81 is an enlarged view of area I of FIG. 80.
FIG. 82 is a partial perspective view of a lens actuator according to a second embodiment of the present invention with a cover removed.
FIG. 83 is an enlarged view of area A of FIG. 82.
FIG. 84 is an enlarged view of area B of FIG. 82.
FIG. 85 is a bottom perspective view of a driving unit of a lens actuator according to a second embodiment of the present invention.
FIG. 86 is a bottom perspective view of a driving unit of a lens actuator according to a modified embodiment.
FIG. 87 is a cross-sectional perspective view illustrating a coupling structure of a wire and a preload member of a lens actuator according to a second embodiment of the present invention.
FIG. 88 is a cross-sectional view illustrating a coupling structure of a wire and a preload member of a lens actuator according to a second embodiment of the present invention.
FIG. 89 is a plan view of a lens actuator according to a second embodiment of the present invention with a cover removed.
FIG. 90 is a plan view of a portion of FIG. 89 enlarged with a cover omitted.
FIG. 91 is a perspective view illustrating a ball and related components of a lens actuator according to a second embodiment of the present invention.
FIG. 92 is a perspective view illustrating a ball-accommodating structure of a base of a lens actuator according to a second embodiment of the present invention.
FIG. 93 is a perspective view illustrating a state in which a ball, a plate member, an elastic member, and a reinforcing member in FIG. 92 are disposed.
FIG. 94 is a perspective view of FIG. 93 viewed from a different direction.
FIG. 95 is a perspective view illustrating a moving unit and a ball of a lens actuator according to a second embodiment of the present invention.
FIG. 96 is a perspective view of FIG. 95 viewed from a different direction.
FIG. 97 (a) is a drawing comparing the heights of a ball and a pressure point when a moving unit moves upward, and (b) is a drawing comparing the heights of a ball and a pressure point when a moving unit moves downward.

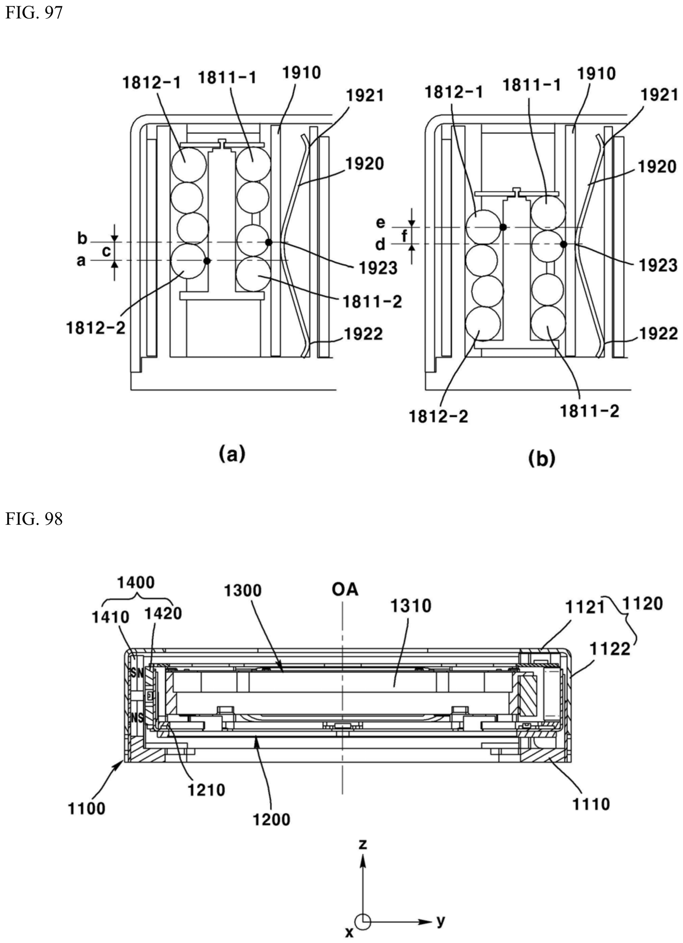

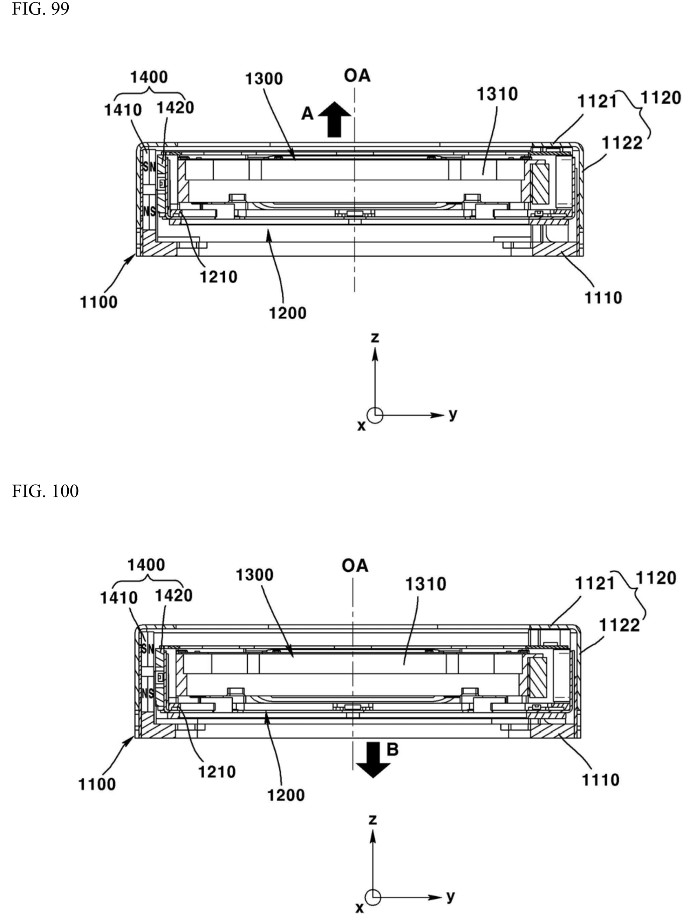

FIGS. 98 to 100 are drawings for explaining an auto focus driving of a lens actuator according to a second embodiment of the present invention. FIG. 98 is a cross-sectional view illustrating the appearance of a moving unit in an initial state where no current is applied to an AF coil. FIG. 99 is a cross-sectional view illustrating the appearance where a moving unit moves upward in an optical axis direction when a forward current is applied to an AF coil. FIG. 100 is a cross-sectional view illustrating the appearance where a moving unit moves downward in an optical axis direction when a reverse current is applied to an AF coil.

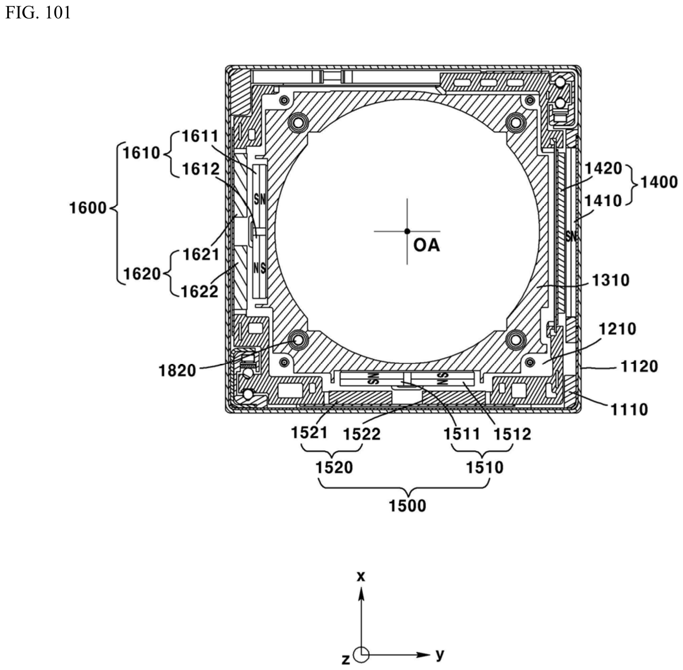

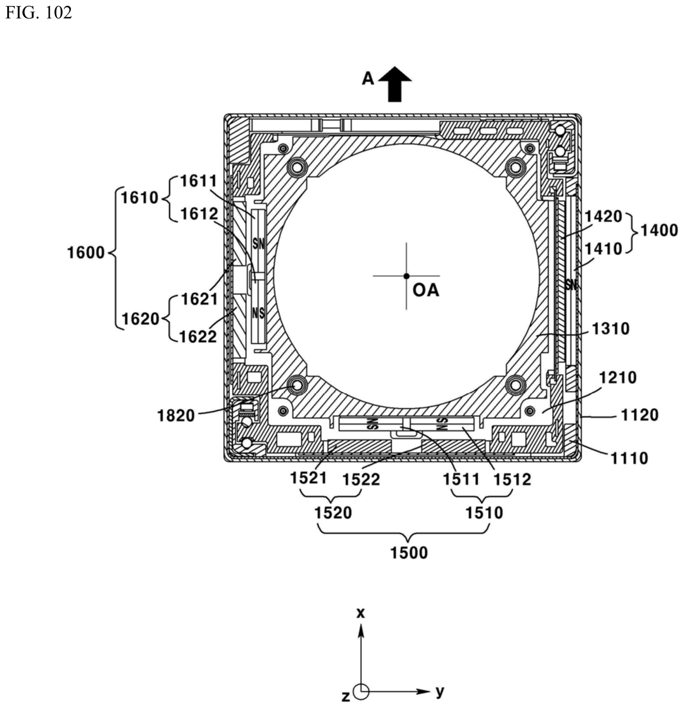

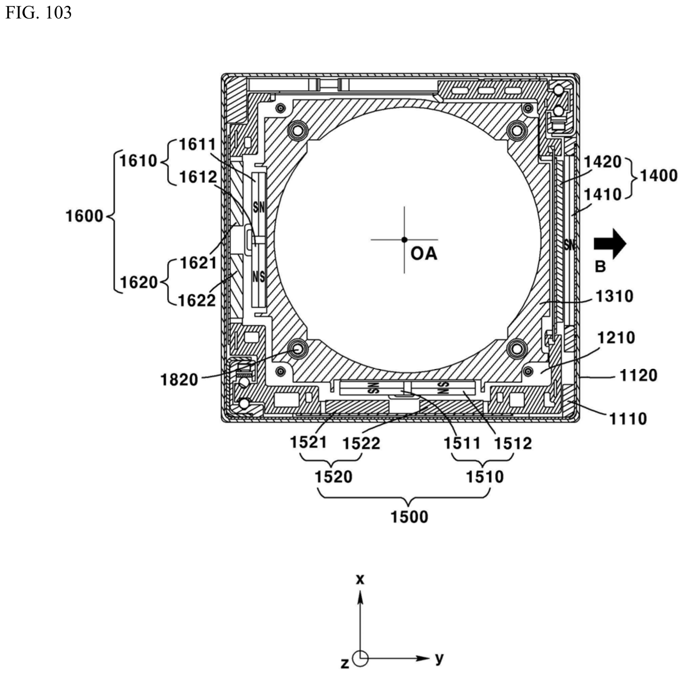

FIGS. 101 to 103 are diagrams for explaining the handshake correction driving of a lens actuator according to a second embodiment of the present invention. FIG. 101 is a cross-sectional view illustrating the appearance of an OIS moving unit in an initial state in which no current is applied to an OIS-x coil and an OIS-y coil. FIG. 102 is a cross-sectional view illustrating the appearance in which an OIS moving unit moves in an x-axis direction perpendicular to the optical axis when a current is applied to an OIS-x coil. FIG. 103 is a cross-sectional view illustrating the appearance in which an OIS moving unit moves in a y-axis direction perpendicular to both an optical axis and an x-axis when a current is applied to an OIS-y coil.
FIG. 104 is an exploded perspective view of a camera device according to a second embodiment of the present invention.
FIG. 105 is a perspective view of an optical instrument according to a second embodiment of the present invention.
FIG. 106 is a perspective view of an optical instrument according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction with respect to one component may be comprised.

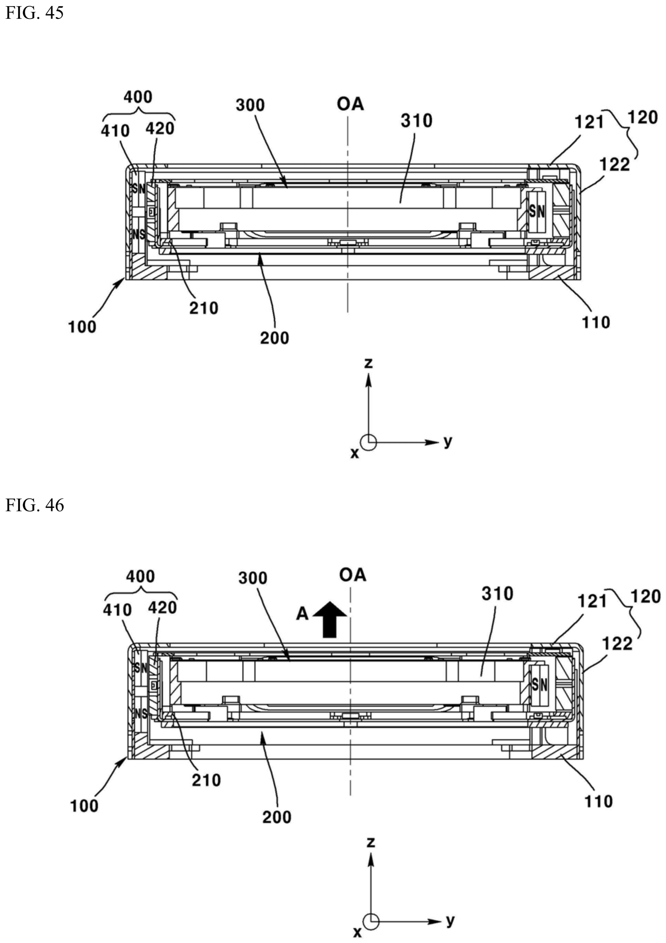

The 'optical axis (See OA in FIG. 45) direction' used below is defined as the optical axis direction of the lens and/or image sensor being coupled to the lens actuator.

The 'vertical direction' used below may be a direction parallel to or the same direction as the optical axis direction. The vertical direction may correspond to the 'z-axis direction'. The 'horizontal direction' used below may be a direction perpendicular to the vertical direction. That is, the horizontal direction may be a direction perpendicular to the optical axis. Therefore, the horizontal direction may comprise the 'x-axis direction' and the 'y-axis direction'.

Hereinafter, one of the 'x-axis direction' and the 'y-axis direction' may be referred to as the 'first direction' and the other may be referred to as the 'second direction'.

The 'auto focus (AF) function' used hereinafter is defined as a function that automatically focuses on a subject by adjusting the distance from the image sensor by moving the lens in the optical axis direction according to the distance of the subject so that a clear image of the subject can be obtained on the image sensor. In addition, 'closed-loop auto focus (CLAF) control' is defined as detecting the distance between the image sensor and the lens and controlling the position of the lens through feedback in real time in order to improve the accuracy of focus adjustment.

The 'optical image stabilization (OIS) function' used hereinafter is defined as a function that moves or tilts the lens in a direction perpendicular to the optical axis to offset hand shake in order to prevent an image or video from shaking due to the user's hand shake. In addition, 'closed-loop auto focus (CLAF) control' is defined as detecting the position of the lens with respect to the image sensor and controlling the feedback of the lens position in real time in order to improve the accuracy of hand shake correction.

Hereinafter, one of the "AF moving unit **200"** and the "OIS moving unit **300"** is referred to as a "first moving unit" and the other may be referred to as a "second moving unit".

Hereinafter, one of the "AF driving unit" and the "OIS driving unit" may be referred to as a "first driving unit" and the other may be referred to as a "second driving unit."

Hereinafter, one among the "AF driving unit", the "OIS-x driving unit", and the "OIS-y driving unit" is referred to as a "first driving unit", the other is referred to as a "second driving unit", and yet the other may be referred to as a "third driving unit".

Hereinafter, one among the "AF magnet **410",** the "OIS-x magnet **510",** and the "OIS-y magnet **610"** may be referred to as a "first magnet", the other is referred to as a "second magnet", and yet the other may be referred to as a "third magnet".

Hereinafter, one among the "AF coil **420",** the "OIS-x coil **520",** and the "OIS-y coil **620"** is referred to as a "first coil", the other is referred to as a "second coil", and yet the other may be referred to as a "third coil".

Hereinafter, one of the "outer substrate **710"** and the "inner substrate **720"** may be referred to as a "first substrate" and the other may be referred to as a "second substrate".

Hereinafter, one of the "AF guide ball **810"** and the "OIS guide ball **820"** may be referred to as a "first ball" and the other may be referred to as a "second ball".

Hereinafter, one of the "holder member **220"** and the "preload member **230"** may be referred to as a "first member" and the other as a "second member." Or, hereinafter, one of the "holder member **220"** and the "preload member **230"** may be referred to as a "first housing" and the other as a "second housing."

Hereinafter, one among the "AF sensor **430",** the "OIS-x sensor **530",** and the "OIS-y sensor **630"** is referred to as a "first sensor", the other is referred to as a "second sensor", and yet the other may be referred to as a "third sensor".

Hereinafter, one among the "AF yoke **440",** the "OIS-x yoke **540",** and the "OIS-y yoke **640"** may be referred to as a "first yoke", the other may be referred to as a "second yoke", and yet the other may be referred to as a "third yoke".

Hereinafter, one of the individual balls of the AF guide ball **810** and the individual balls of the OIS guide ball **820** may be referred to as a "first unit ball," the other as a "second unit ball," yet the other as a "third unit ball," and still the other as a "fourth unit ball." Furthermore, the "nth unit ball" may be used to refer to as an individual ball, such as a "fifth unit ball," a "sixth unit ball," and the like.

Hereinafter, one of the "pillar part **111"** and the "outer wall part **112"** is referred to as a "first portion" and the other may be referred to as a "second portion".

Hereinafter, one of the "inner groove **111-1"** and the "outer groove **112-1"** is referred to as a "first groove" and the other may be referred to as a "second groove".

Hereinafter, one of the "inner groove **224-1"** and the "outer groove **224-2"** is referred to as a "first groove" and the other may be referred to as a "second groove".

Hereinafter, one of the "inner ball **811"** and the "outer ball **812"** is referred to as a "first unit ball" and the other may be referred to as a "second unit ball".

Hereinafter, one of the "inner uppermost ball **811-1"** and the "outer uppermost ball **812-1"** may be referred to as a "first uppermost ball" and the other may be referred to as a "second uppermost ball".

Hereinafter, one of the "inner lowermost ball **811-2"** and the "outer lowermost ball **812-2"** may be referred to as a "first lowermost ball" and the other may be referred to as a "second lowermost ball".

Hereinafter, one among the "upper bent portion **921",** the "lower bent portion **922",** and the "connecting bent portion **923"** may be referred to as a "first bent portion", the other may be referred to as a "second bent portion", and yet the other may be referred to as a "third bent portion".

Hereinafter, the "AF carrier **210"** may be referred to as a "housing," Hereinafter, the "OIS carrier **310"** may be referred to as a "bobbin."

Hereinafter, one of the "AF moving unit **1200"** and the "OIS moving unit **1300"** may be referred to as a "first moving unit" and the other may be referred to as a "second moving unit".

Hereinafter, one of the "AF driving unit" and the "OIS driving unit" may be referred to as a "first driving unit" and the other may be referred to as a "second driving unit."

Hereinafter, one among the "AF driving unit", "OIS-x driving unit" and "OIS-y driving unit" may be referred to as a "first driving unit", the other may be referred to as a "second driving unit" and yet the other may be referred to as a "third driving unit".

Hereinafter, one among the "AF magnet **1410",** the "OIS-x magnet **1510",** and the "OIS-y magnet **1610"** may be referred to as a "first magnet", the other may be referred to as a "second magnet", and yet the other may be referred to as a "third magnet"

Hereinafter, one among the "AF coil **1420",** the "OIS-x coil **1520",** and the "OIS-y coil **1620"** may be referred to as a "first coil", the other may be referred to as a "second coil", and yet the other may be referred to as a "third coil".

Hereinafter, one of the "outer substrate **1710"** and the "inner substrate **1720"** may be referred to as a "first substrate" and the other may be referred to as a "second substrate".

Hereinafter, one of the "AF guide ball **1810"** and the "OIS guide ball **1820"** may be referred to as a "first ball" and the other may be referred to as a "second ball."

Hereinafter, one of the "holder member **1220"** and the "preload member **1230"** may be referred to as a "first member" and the other as a "second member." Or, hereinafter, one of the "holder member **1220"** and the "preload member **1230"** may be referred to as a "first housing" and the other as a "second housing."

Hereinafter, one among the "AF sensor **1430",** the "OIS-x sensor **1530",** and the "OIS-y sensor **1630"** may be referred to as a "first sensor", the other may be referred to as a "second sensor", and yet the other may be referred to as a "third sensor".

Hereinafter, one of the "AF yoke **1440",** "OIS-x yoke **1540",** and "OIS-y yoke **1640"** may be referred to as a "first yoke", the other may be referred to as a "second yoke", and yet the other may be referred to as a "third yoke".

Hereinafter, one of the individual balls of the AF guide ball **1810** and the individual balls of the OIS guide ball **1820** may be referred to as a "first unit ball," the other as a "second unit ball," yet the other as a "third unit ball," and still yet the other as a "fourth unit ball." Furthermore, the term "unit ball" may be used to refer to individual balls, such as "fifth unit ball," "sixth unit ball," and the like.

Hereinafter, one of the "pillar part **1111"** and the "outer wall part **1112"** may be referred to as a "first portion" and the other may be referred to as a "second portion".

Hereinafter, one of the "inner groove **1111-1"** and the "outer groove **1112-1"** may be referred to as a "first groove" and the other as a "second groove".

Hereinafter, one of the "inner groove **1224-1"** and the "outer groove **1224-2"** may be referred to as a "first groove" and the other may be referred to as a "second groove".

Hereinafter, one of the "inner ball **1811"** and the "outer ball **1812"** may be referred to as a "first unit ball" and the other as a "second unit ball."

Hereinafter, one of the "inner uppermost ball **1811-1"** and the "outer uppermost ball **1812-1"** may be called a "first uppermost ball" and the other may be called a "second uppermost ball".

Hereinafter, one of the "inner lowermost ball **1811-2"** and the "outer lowermost ball **1812-2"** may be called a "first lowermost ball" and the other may be called a "second lowermost ball".

Hereinafter, one among the "upper bent portion **1921",** the "lower bent portion **1922",** and the "connecting bent portion **1923"** may be referred to as a "first bent portion", the other may be referred to as a "second bent portion", and yet the other may be referred to as a "third bent portion".

Hereinafter, the "AF carrier **1210"** may be referred to as a "housing." Hereinafter, the "OIS carrier **1310"** may be referred to as a "bobbin."

Hereinafter, the configuration of a lens actuator according to a first embodiment of the present invention will be described with reference to the drawings.

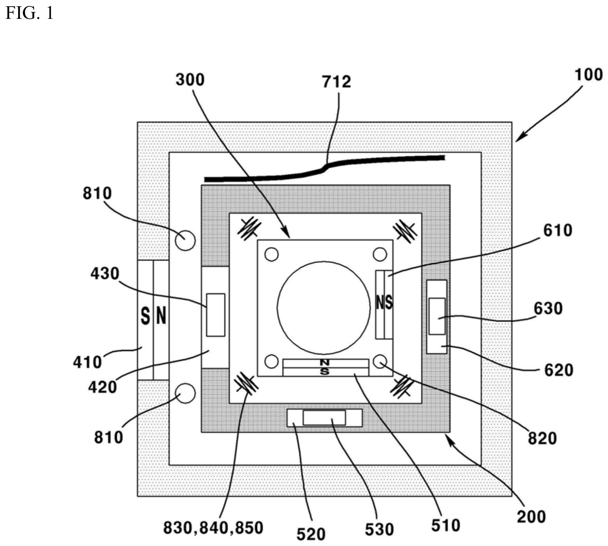

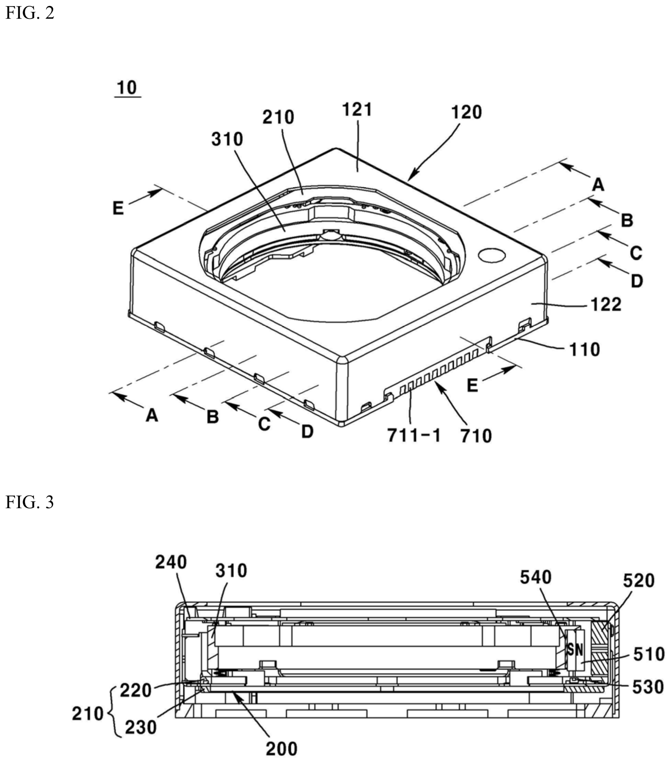

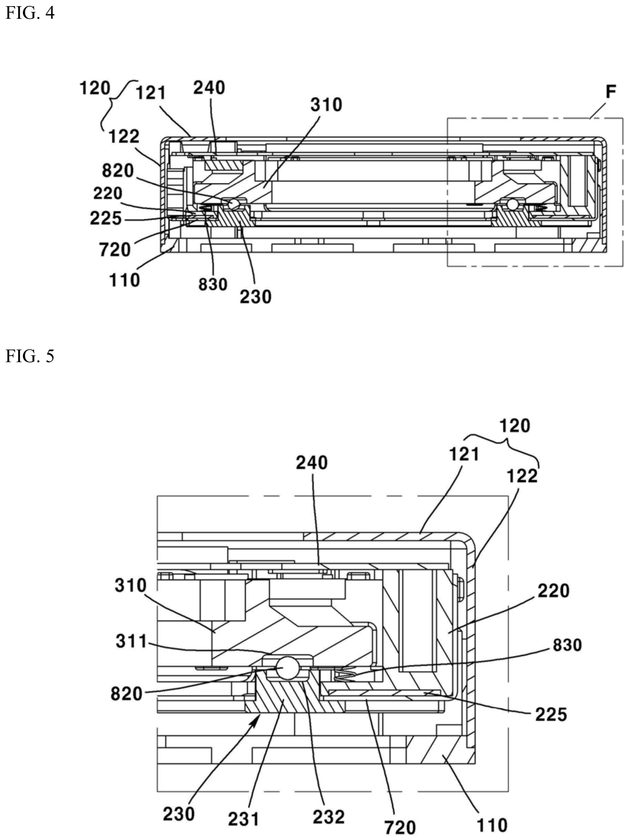

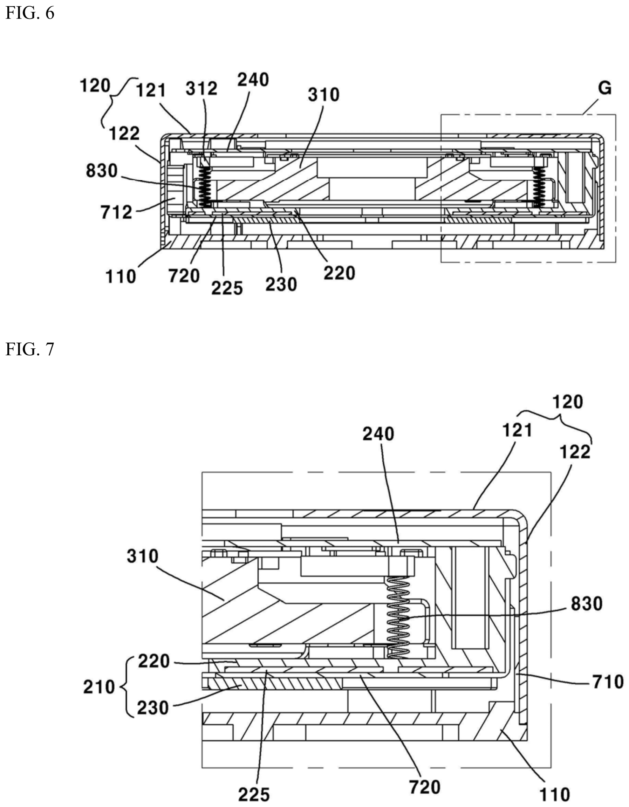

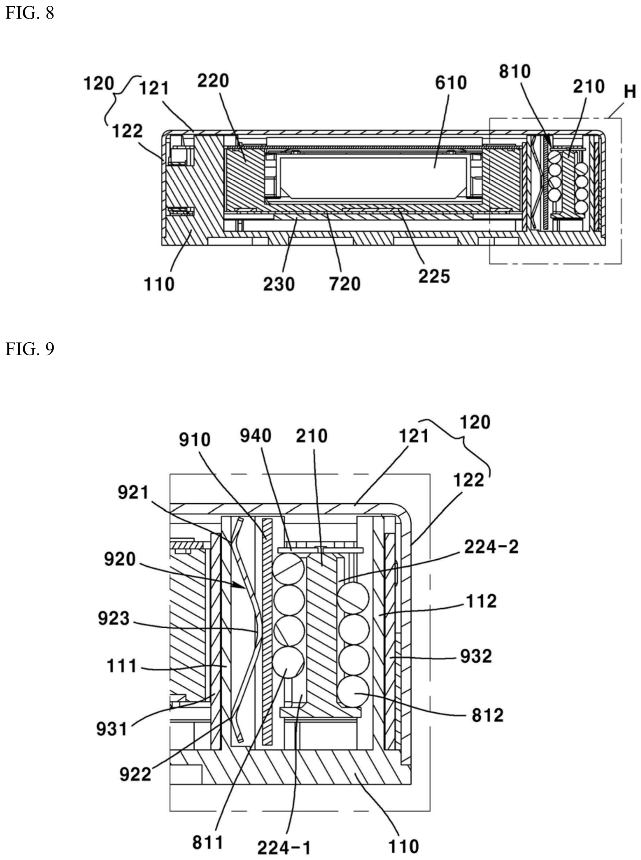

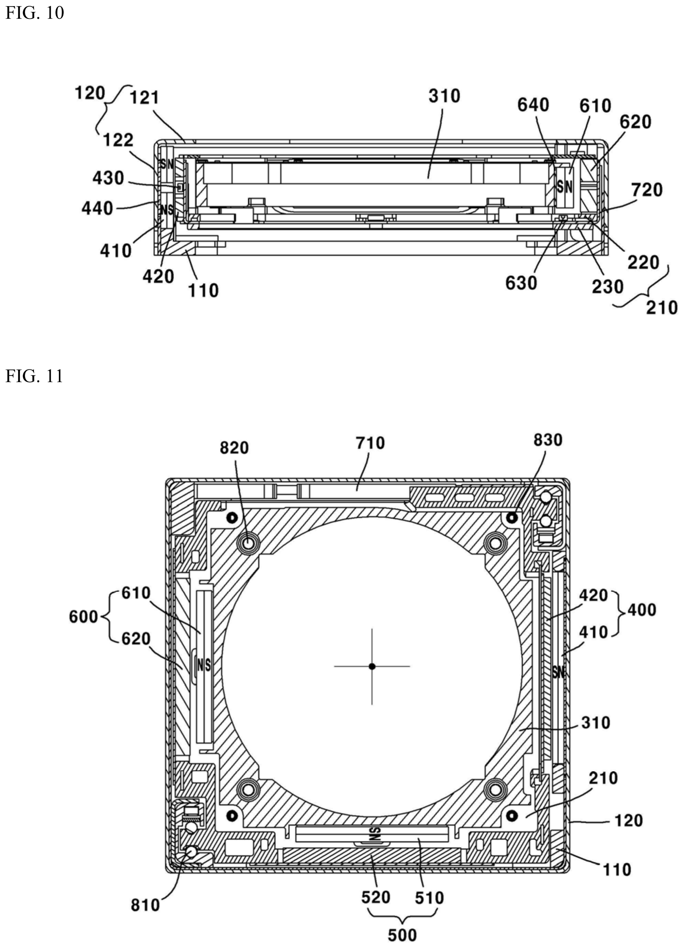

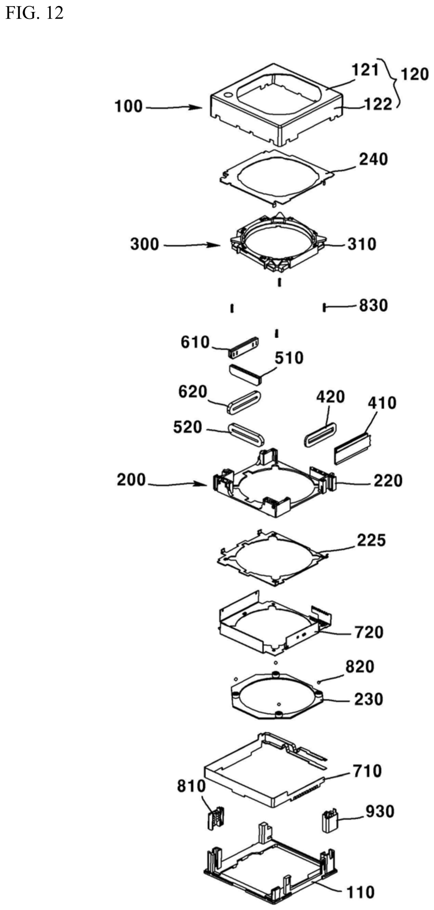

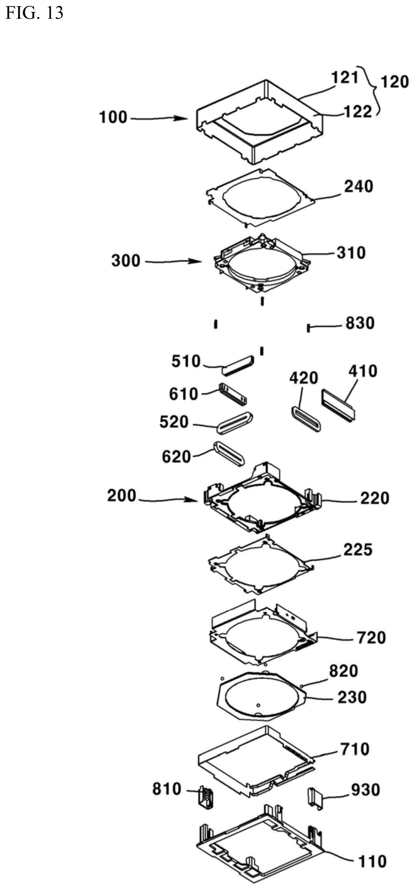

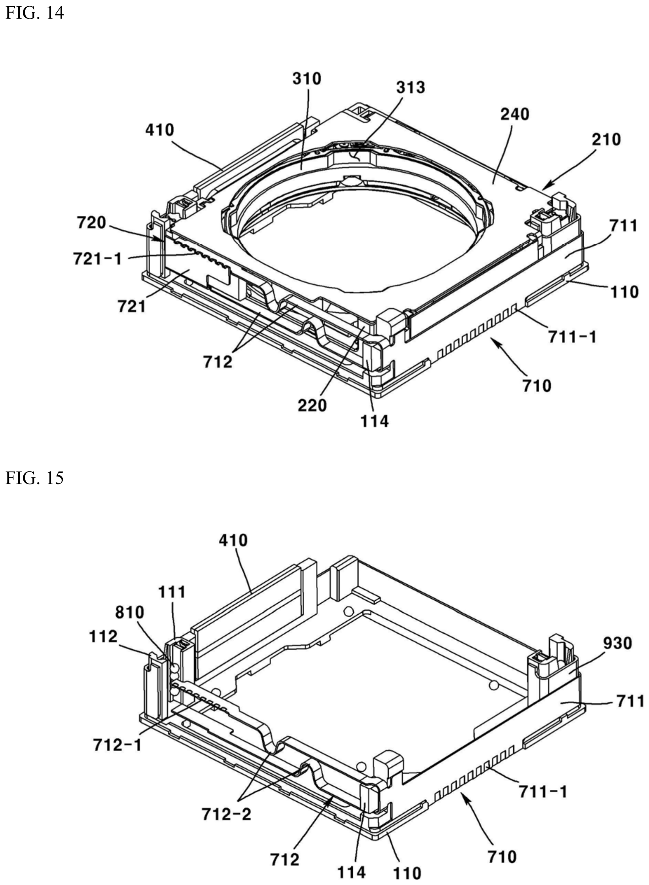

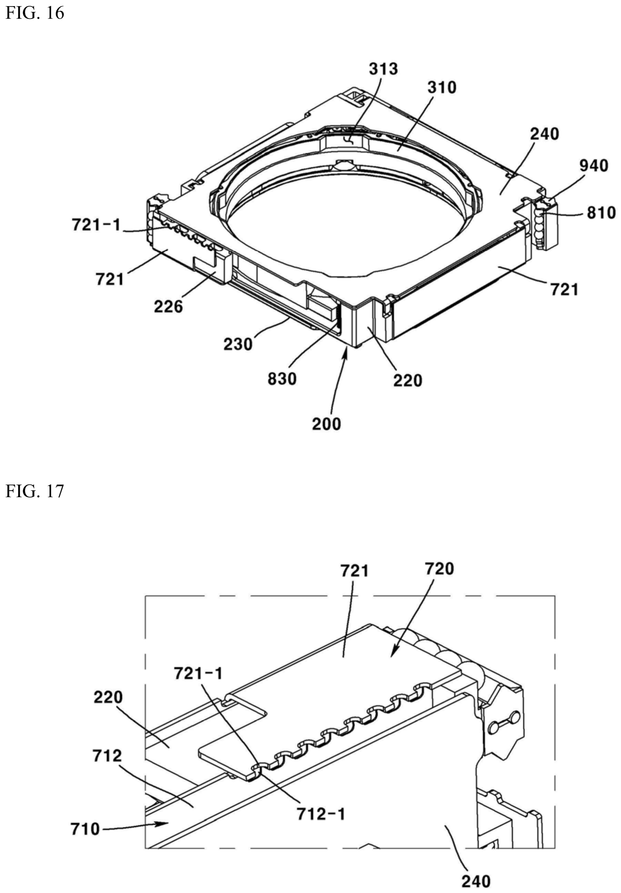

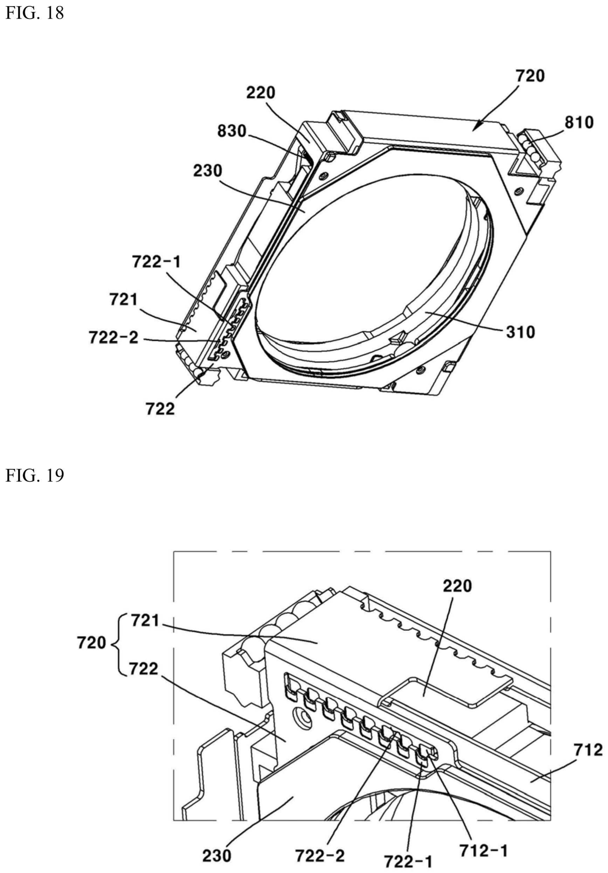

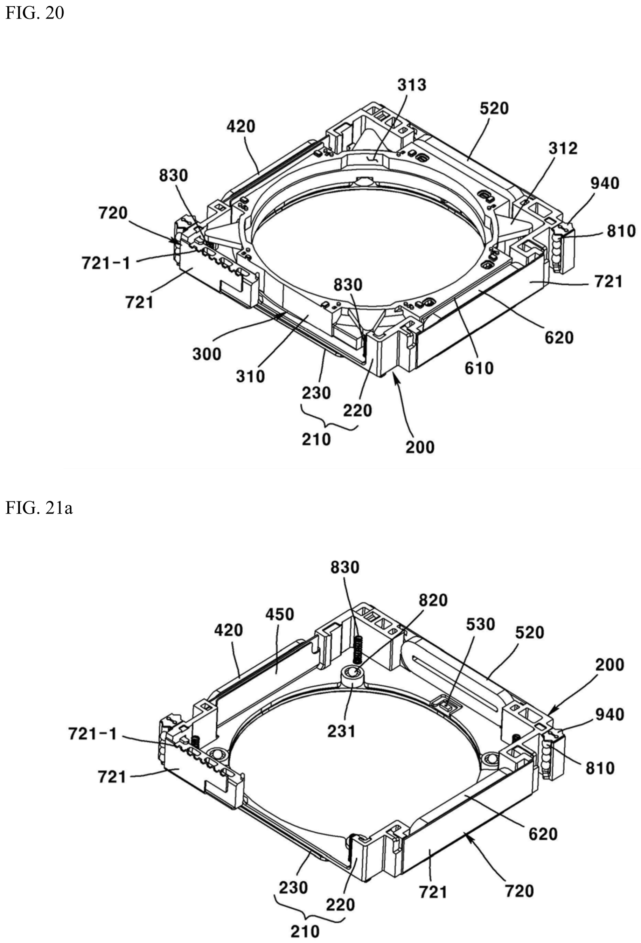

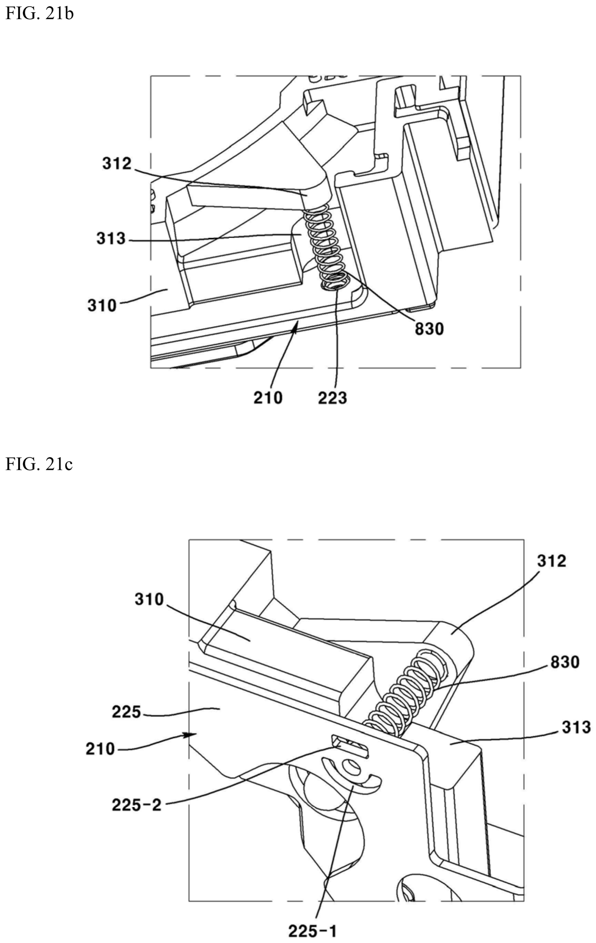

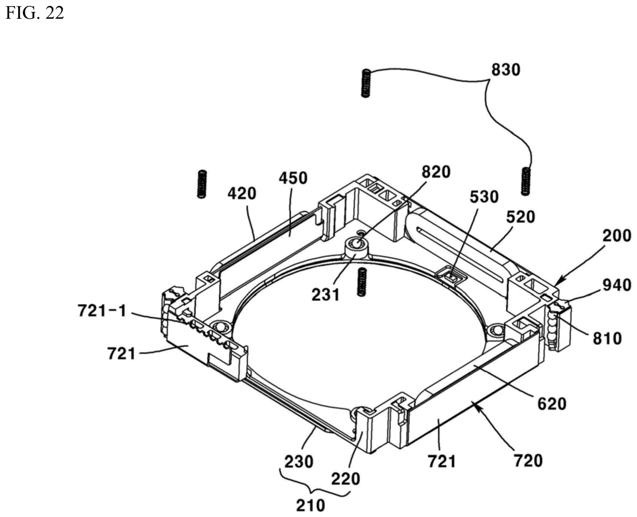

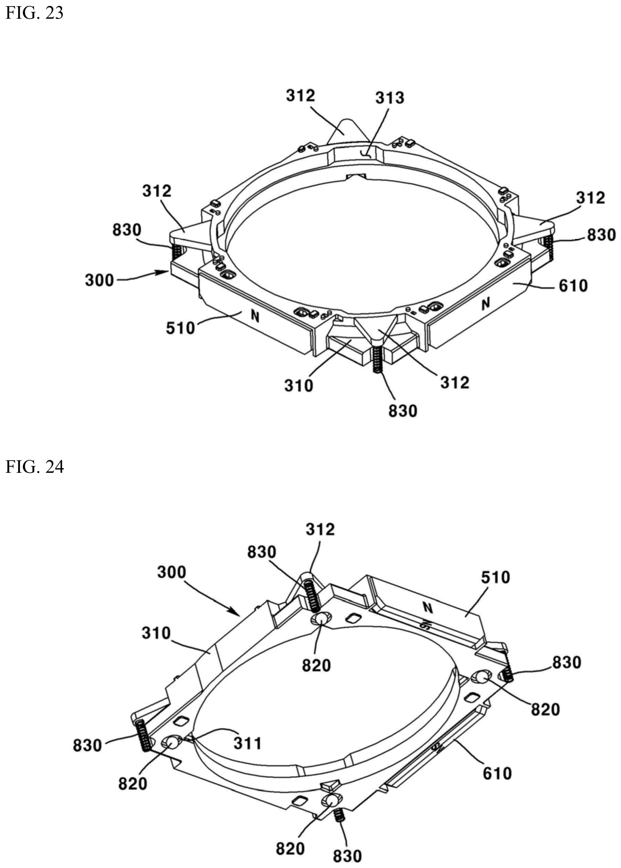

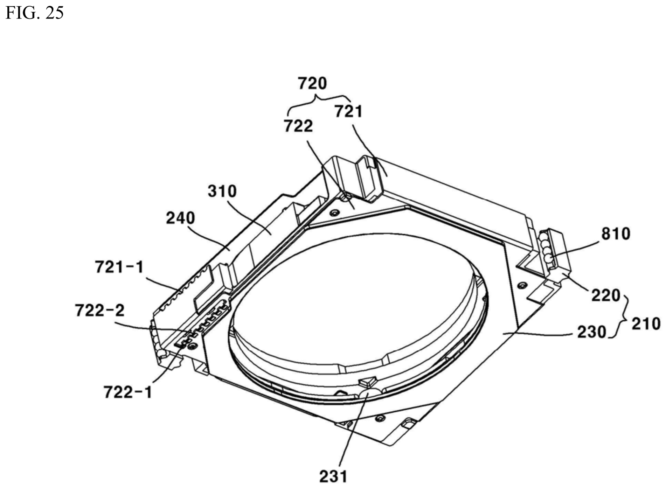

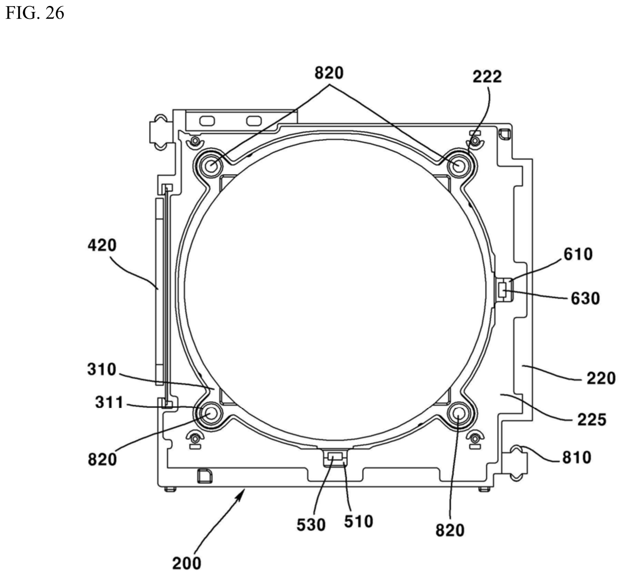

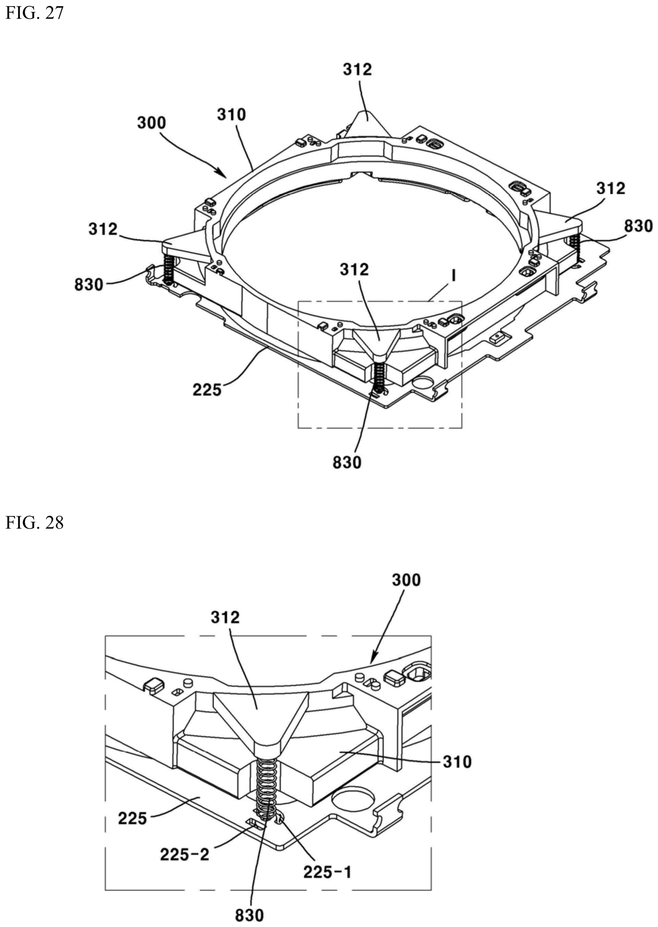

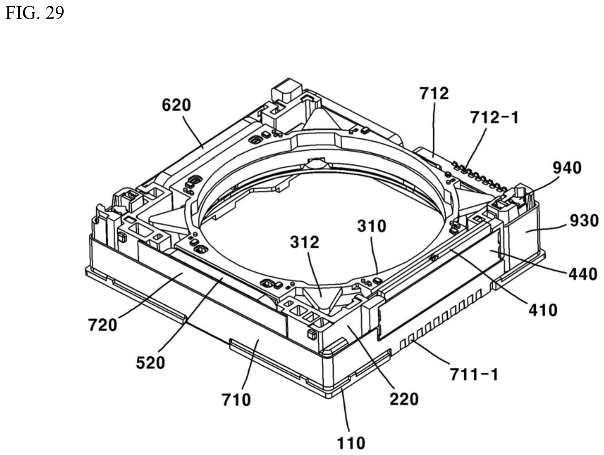

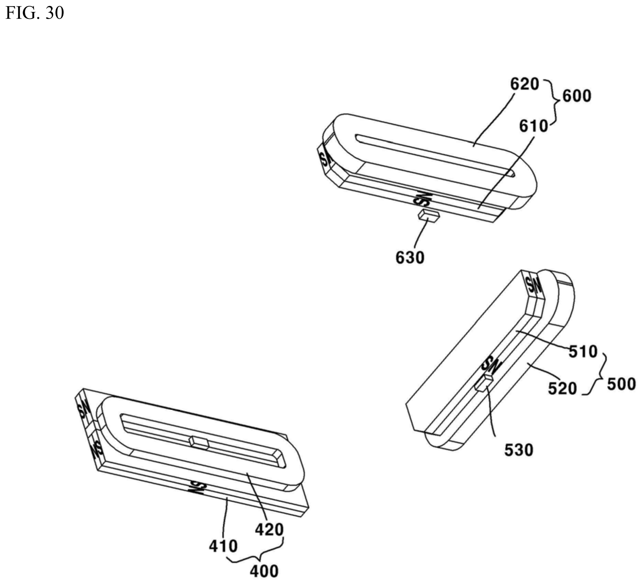

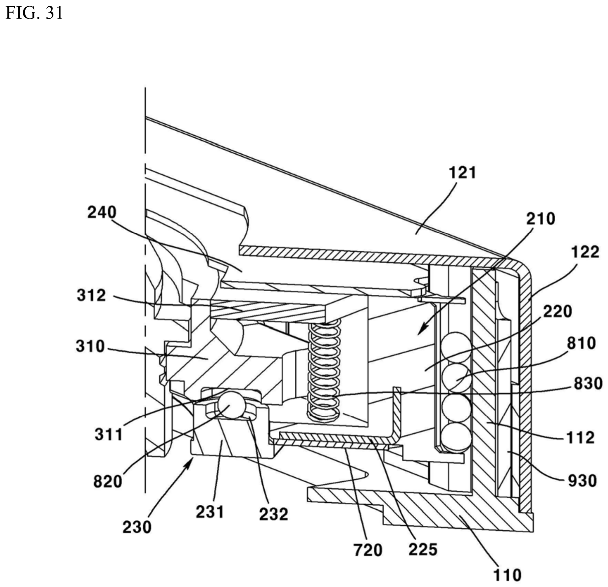

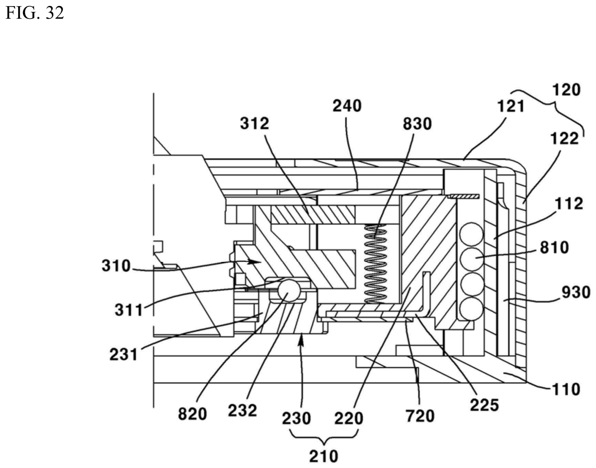

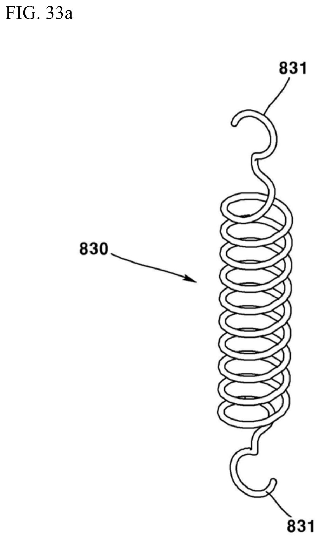

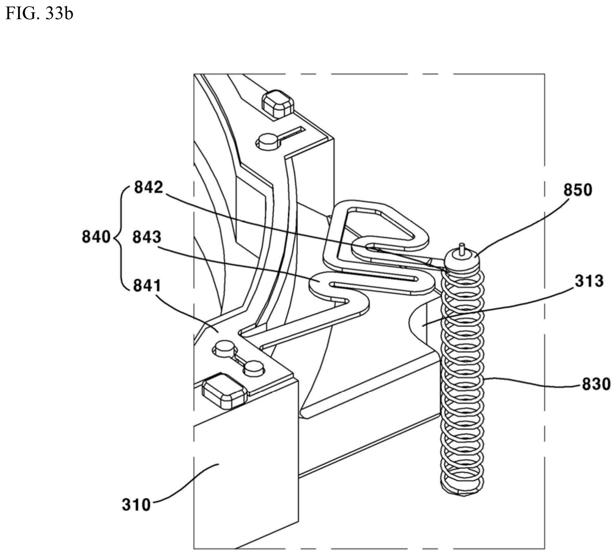

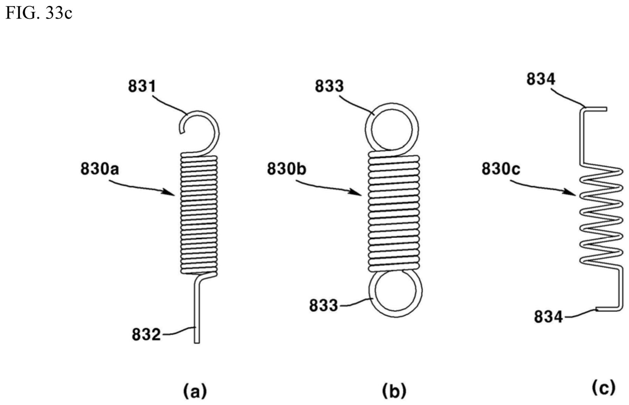

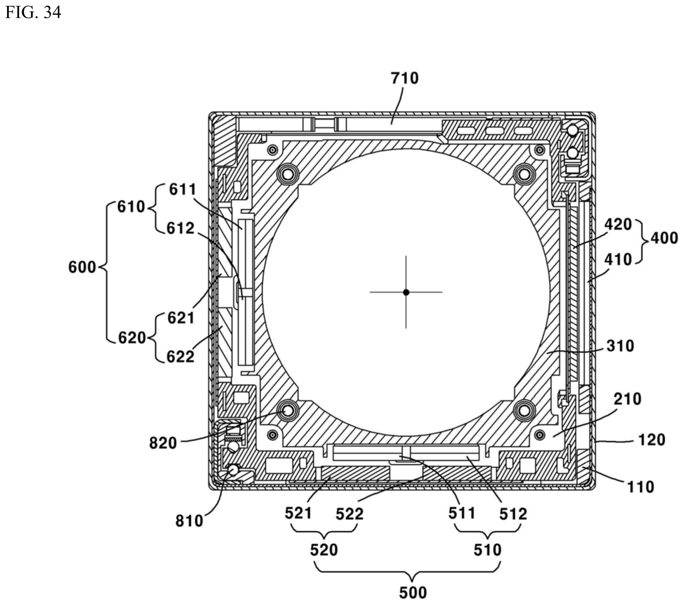

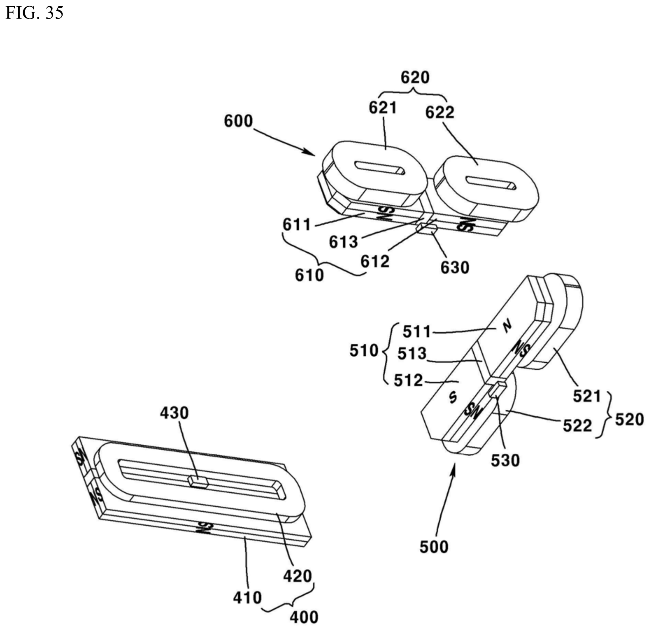

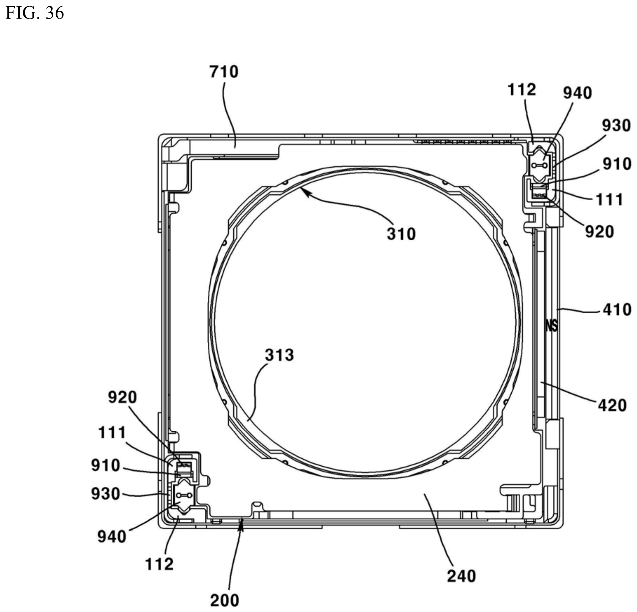

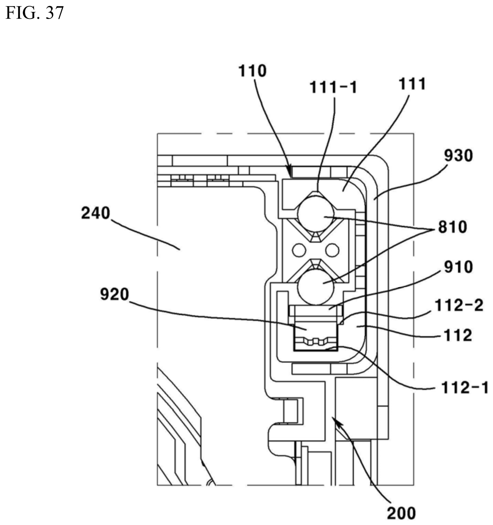

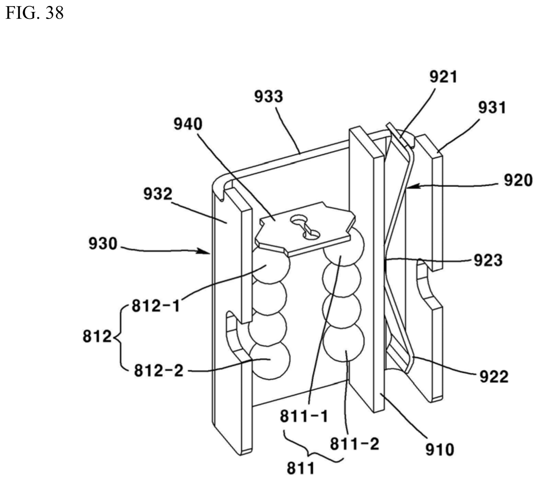

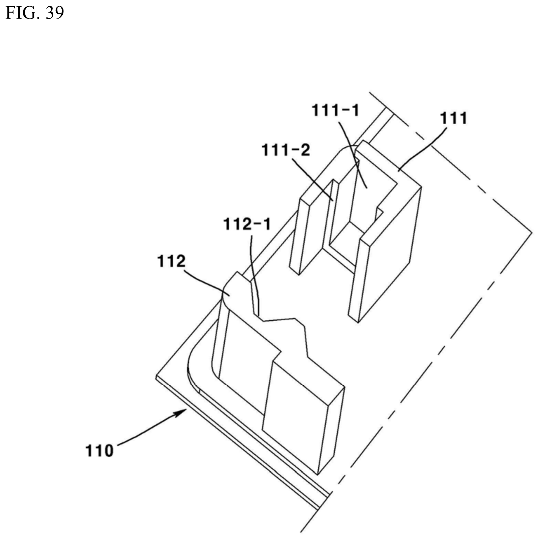

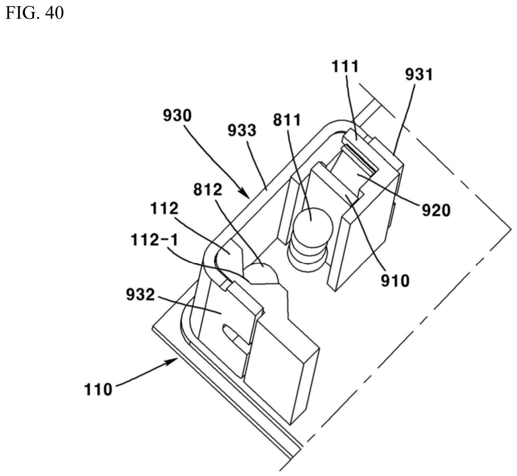

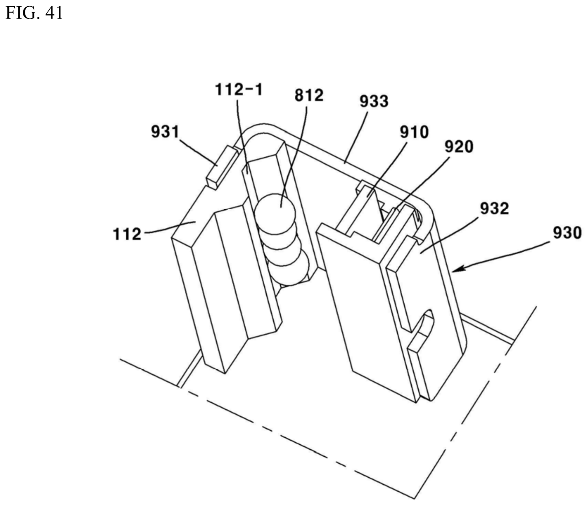

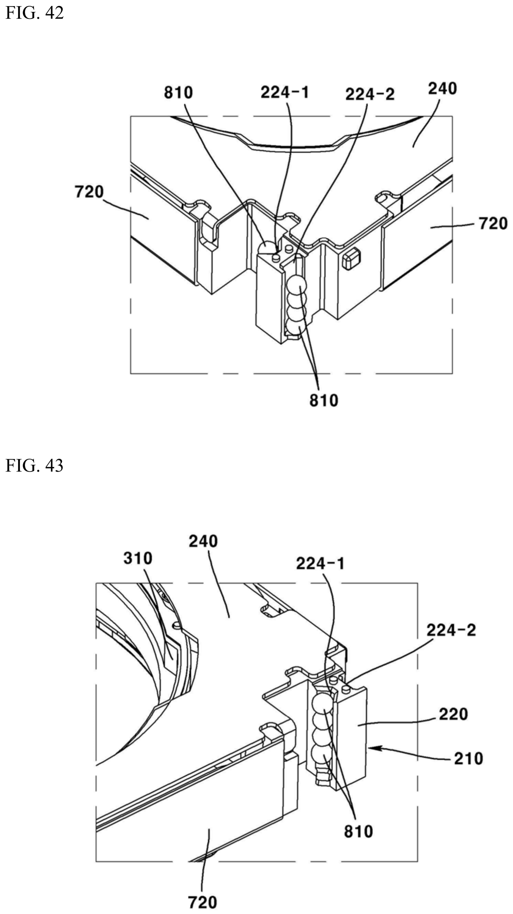

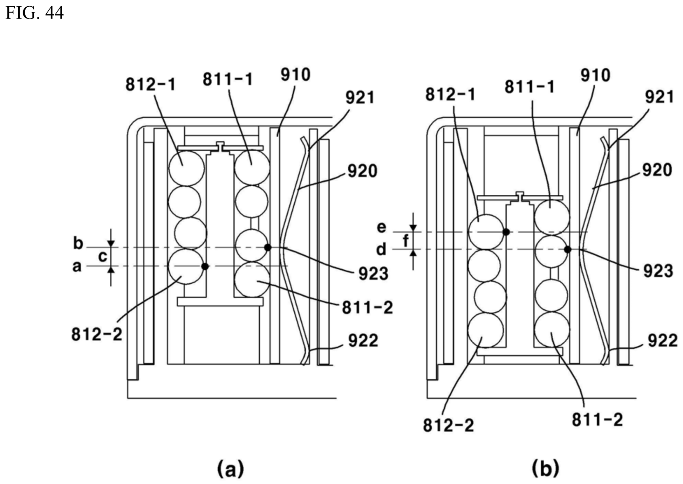

FIG. 1 is a conceptual diagram of a lens actuator according to a first embodiment of the present invention; FIG. 2 is a perspective view of a lens actuator according to a first embodiment of the present invention; FIG. 3 is a cross-sectional view taken along line A-A of FIG. 2; FIG. 4 is a cross-sectional view taken along line B-B of FIG. 2; FIG. 5 is an enlarged view of area F of FIG. 4; FIG. 6 is a cross-sectional view taken along line C-C of FIG. 2; FIG. 7 is an enlarged view of area G of FIG. 6; FIG. 8 is a cross-sectional view taken along line D-D of FIG. 2; FIG. 9 is an enlarged view of area H of FIG. 8; FIG. 10 is a cross-sectional view taken along line E-E of FIG. 2; FIG; 11 is a cross-sectional view of a lens actuator according to a first embodiment of the present invention, cut perpendicular to the optical axis and viewed from above.FIG. 12 is an exploded perspective view of a lens actuator according to a first embodiment of the present invention; FIG. 13 is an exploded perspective view of a lens actuator according to a first embodiment of the present invention, viewed from a different direction than FIG. 12; FIG. 14 is a perspective view of a lens actuator according to a first embodiment of the present invention, with the cover omitted; FIG. 15 is a perspective view illustrating a fixed unit and related components of a lens actuator according to a first embodiment of the present invention; FIG. 16 is a perspective view illustrating a moving unit and related components of a lens actuator according to a first embodiment of the present invention; FIG. 17 is a perspective view illustrating a coupling structure of an inner substrate and an outer substrate of a lens actuator according to a first embodiment of the present invention; FIG. 18 is a bottom perspective view illustrating a moving unit and related components of a lens actuator according to a first embodiment of the present invention; FIG. 19 is a bottom perspective view illustrating a coupling structure of inner and outer substrates of a lens actuator according to a first embodiment of the present invention; FIG. 20 is a perspective view of FIG. 16 with a cover removed; FIG. 21a is a perspective view of FIG. 20 with an OIS moving unit and related components removed; FIG; 21b is an enlarged perspective view of a coupling structure between a coil spring and an AF carrier; FIG. 21c is an enlarged perspective view of a coupling structure between a coil spring and an OIS carrier; FIG. 22 is an exploded perspective view of a coil spring of FIG. 21a with the coil spring removed; FIG. 23 is a perspective view illustrating an OIS moving unit and related components of a lens actuator according to a first embodiment of the present invention; FIG. 24 is a bottom perspective view viewed from a different direction than FIG. 23; FIG. 25 is a bottom perspective view of FIG. 16 viewed from a different direction; FIG. 26 is a bottom view of FIG. 25 with a preload member and an inner substrate removed; FIG. 27 is a perspective view illustrating a coupling structure of an OIS carrier, a coil spring, and a metal member of a lens actuator according to a first embodiment of the present invention; FIG. 28 is an enlarged view of area I of FIG. 27; FIG. 29 is a perspective view of a lens actuator according to a first embodiment of the present invention with a cover and a lid removed; FIG. 30 is a bottom perspective view of a driving unit of the lens actuator according to a first embodiment of the present invention; FIG. 31 is a cross-sectional perspective view illustrating a coupling structure of a coil spring of a lens actuator according to a first embodiment of the present invention; FIG. 32 is a cross-sectional view illustrating a coupling structure of a coil spring of a lens actuator according to a first embodiment of the present invention; FIG. 33a is a front view illustrating a coil spring of a lens actuator according to a modified embodiment; FIG. 33b is a perspective view illustrating a coil spring and its coupling structure of a lens actuator according to another modified embodiment; FIG. 33c is a drawing illustrating a coil spring according to additional various modified embodiments; FIG. 34 is a cross-sectional view of a lens actuator according to a modified embodiment, cut perpendicular to an optical axis and viewed from above; FIG. 35 is a bottom perspective view of a driving unit of a lens actuator according to a modified embodiment; FIG. 36 is a plan view of a lens actuator according to a first embodiment of the present invention with its cover removed; FIG. 37 is a plan view of a portion of FIG. 36 enlarged with a cover omitted; FIG. 38 is a perspective view illustrating a ball and related components of a lens actuator according to a first embodiment of the present invention; FIG. 39 is a perspective view illustrating a ball accommodating structure of a base of a lens actuator according to a first embodiment of the present invention; FIG. 40 is a perspective view illustrating a state in which a ball, a plate member, an elastic member, and a reinforcing member in FIG. 39 are disposed; FIG. 41 is a perspective view of FIG. 40 viewed from a different direction; FIG. 42 is a perspective view of a moving unit and a ball of a lens actuator according to a first embodiment of the present invention; FIG. 43 is a perspective view of FIG. 42 viewed from a different direction; and FIG. 44 (a) is a drawing comparing the heights of a ball and a pressure point when a moving unit moves upward, and (b) is a drawing comparing the heights of a ball and a pressure point when a moving unit moves downward.

The lens actuator **10** may be a voice coil motor (VCM). The lens actuator **10** may be a lens drive motor. The lens actuator **10** may be a lens drive actuator. The lens actuator **10** may comprise an AF module. The lens actuator **10** may comprise an OIS module.

The lens actuator **10** may comprise a fixed unit **100.** The fixed unit **100** may be a portion that is relatively fixed when the moving unit moves. The moving unit may move against the fixed unit **100.**

The lens actuator **10** may comprise a base **110.** The fixed unit **100** may comprise a base **110.** The base **110** may be disposed below the AF carrier **210.** The base **110** may be disposed below the OIS carrier **310.** The base **110** may be coupled to the cover **120.** The AF carrier **210** and the OIS carrier **310** may be disposed on the base **110.** The AF carrier **210** and the OIS carrier **310** may be disposed on the lower plate portion of the base **110.** The AF carrier **210** and the OIS carrier **310** may be disposed within the base **110.** The AF carrier **210** and the OIS carrier **310** may be disposed within a side wall portion of the base **110.**

The base **110** may comprise a lower plate portion. The lower plate portion of the base **110** may support the lower surface of the AF moving unit **200.** The lower plate portion of the base **110** may support the lower surface of the AF carrier **210.**

The base **110** may comprise a pillar part **111.** The pillar part **111** may be extended from an upper surface of the lower plate portion. The pillar part **111** may be disposed on an inner side of the outer wall part **112.**

The base **110** may comprise a first guide that guides the AF guide ball **810** to move. The first guide may comprise an inner groove **111-1** of the base **110.** The first guide may comprise an outer groove **112-1** of the base **110.**

The base **110** may comprise an inner groove **111-1.** The pillar part **111** may comprise an inner groove **111-1.** The inner groove **111-1** may be formed in the pillar part **111.** The inner groove **111-1** may be an 'AF guide ball accommodating groove'. An AF guide ball **810** may be disposed in the inner groove **111-1.** The inner ball **811** may be disposed in the inner groove **111-1.** The inner groove **111-1** may be in direct contact with the AF guide ball **810.** The inner groove **111-1** may be disposed in an optical axis direction. The inner groove **111-1** may comprise a plurality of grooves. The inner groove **111-1** may comprise two grooves. The two grooves may be disposed parallel to each other. The two grooves can be disposed diagonally with respect to the optical axis.

The base **110** may comprise a step **111-2.** The step **111-2** may be formed in the pillar part **111.** A plate member **910** may be disposed on the step 111-2.

The base **110** may comprise an outer wall part **112.** The outer wall part **112** may be a 'side'. The outer wall part **112** may be a 'side plate'. The outer wall part **112** may be a 'side wall'. The outer wall part **112** of the base **110** may be extended from an upper surface of the lower plate portion.

The base **110** may comprise an outer groove **112-1.** The outer wall part **112** may comprise an outer groove **112-1.** The outer groove **112-1** may be formed to face the inner groove **111-1.** The outer groove **112-1** may be disposed to face the inner groove **111-1.** The outer groove **112-1** may be an 'AF guide ball accommodating groove'. An AF guide ball **810** may be disposed in the outer groove **112-1.** An outer ball **812** may be disposed in the outer groove **112-1.** The outer groove **112-1** may be in direct contact with the AF guide ball **810.** The outer groove **112-1** may be disposed in an optical axis direction. The outer groove **112-1** may comprise a plurality of grooves. The outer groove **112-1** may comprise two grooves. The two grooves may be disposed parallel to each other. The two grooves may be disposed diagonally with respect to the optical axis. The outer groove **112-1** may be disposed at an opposite side of the inner groove **111-1.** The outer groove **112-1** may be formed to have a shape corresponding to the inner groove **111-1.** The outer groove **112-1** and the inner groove **111-1** may be formed to have the same length in an optical axis direction.

The base **110** may comprise a protruded portion **114.** The protruded portion **114** may be protruded outward. A connecting portion **712** of an outer substrate **710** may be disposed above and below the protruded portion **114.** A groove may be formed in the protruded portion **114** so as not to interfere with the connecting portion **712** of the outer substrate **710** even when it moves.

The base **110** may comprise a step. The step may be formed at the lower end of the outer side surface of the base **110.** The step may be protruded from an outer side surface of the base **110.** A side plate **122** of the cover **120** may be disposed in the step of the base **110.**

The lens actuator **10** may comprise a cover **120.** The fixed unit **100** may comprise a cover **120.** The cover **120** may be disposed in the base **110.** The cover **120** may be disposed on the base **110.** The cover **120** may be coupled to the base **110.** The cover **120** may be fixed to the base **110.** The cover **120** may accommodate an AF carrier **210** therein. The cover **120** may accommodate an OIS carrier **310** therein. The cover **120** may be a shield member. The cover **120** may be a shield can.

The cover **120** may comprise an upper plate **121.** The upper plate **121** may be on a moving unit. The upward movement of the moving unit may be limited by the moving unit being in contact with the upper plate **121.** The upper plate **121** may comprise a hole through which light passes.

The cover **120** may comprise a side plate **122.** The side plate **122** may be extended from the upper plate **121.** The side plate **122** may be disposed in the base **110.** The side plate **122** may be disposed on a step portion being protrudedly formed from the lower end portion of the outer side surface of the base **110.** The side plate **122** may comprise a plurality of side plates. The side plate **122** may comprise four side plates. The side plate **122** may comprise a first side plate and a second side plate disposed opposite to each other and a third side plate and a fourth side plate disposed opposite to each other.

The lens actuator **10** may comprise a moving unit. The moving unit may be disposed in the fixed unit **100.** The moving unit may be disposed within the fixed unit **100.** The moving unit may be disposed on the fixed unit **100.** The moving unit may be movably disposed in the fixed unit **100.** The moving unit may be moved with respect to the fixed unit **100** by the driving unit. The moving unit may be moved during AF driving. The moving unit may be moved during OIS driving. A lens may be coupled to the moving unit.

The lens actuator **10** may comprise an AF moving unit **200.** The AF moving unit **200** may be disposed in the fixed unit **100.** The AF moving unit **200** may be disposed within the fixed unit **100.** The AF moving unit **200** may be disposed on the fixed unit **100.** The AF moving unit **200** may be disposed between the fixed unit **100** and the OIS moving unit **300.** The AF moving unit **200** may be movably disposed in the fixed unit **100.** The AF moving unit **200** may move in an optical axis direction against the fixed unit **100** by the AF driving unit **400.** The AF moving unit **200** may move during AF driving.

In a modified embodiment, the AF moving unit **200** and the AF driving unit **400** may be omitted. That is, the OIS moving unit **300** may be disposed in the fixed unit **100.** Or, the OIS moving unit **300** may be disposed on the fixed unit **100** and the AF moving unit **200** may be disposed within the OIS moving unit **300.**

The lens actuator **10** may comprise an AF carrier **210.** The AF moving unit **200** may comprise the AF carrier **210.** The AF carrier **210** may be an 'AF holder'. The AF carrier **210** may be a 'housing'. The AF carrier **210** may be disposed within the base **110.** The AF carrier **210** may be disposed on the base **110.** The AF carrier **210** may be disposed within the cover **120.** The AF carrier **210** may be disposed between the base **110** and the OIS carrier **310.** The AF carrier **210** may be movably disposed in an optical axis direction.

The AF carrier **210** may comprise a frame, a first upper plate, and a second upper plate. At this time, the frame may be a body part. The frame may be a holder member **220.** The first upper plate may be a metal member **225.** The second upper plate may be a preload member **230.** The AF carrier **210** may be a housing. The housing may comprise a first housing and a second housing. At this time, the first housing may comprise a holder member **220** and the second housing may comprise a preload member **230.** The OIS carrier **310** may be a bobbin. The OIS guide ball **820** may be disposed between the housing and the bobbin. The AF guide ball **810** may be disposed between a side surface of the housing and a cover **120.** The AF guide ball **810** can be disposed between the side surface of the housing and the base or the pillar of the base.

The lens actuator **10** may comprise a holder member **220.** The AF carrier **210** may comprise a holder member **220.** The holder member **220** may be formed separately from the preload member **230.** A wire **850** may be coupled to the holder member **220.**

The AF carrier **210** may comprise a lower plate. The lower plate may be disposed below the OIS carrier **310.** The lower plate may be disposed between the OIS carrier **310** and the base **110.**

The AF carrier **210** may comprise a groove **222.** The groove **222** may be a 'preload member passage hole'. The holder member **220** may comprise a groove **222.** The lower plate of the holder member **220** may comprise a groove **222.** The groove **222** may be formed in the lower plate of the holder member **220.** The groove **222** may be open inward. The preload member **230** may be inserted into the groove **222.** The protruded portion **231** of the preload member **230** may be inserted into the groove **222.** The groove **222** may be formed as a hole. The groove **222** may be redisposed with a hole. That is, in a modified embodiment, the AF carrier **210** may comprise a groove **222** into which the protruded portion **231** of the preload member **230** is inserted.

The AF carrier **210** may comprise a hole **223.** The AF carrier **210** may comprise a hole **223** through which a coil spring **830** passes. The AF carrier **210** may comprise a hole **223** in which the coil spring **830** is disposed. The AF carrier **210** may comprise a hole **223** in which the lower end portion of the coil spring **830** is disposed.

The AF carrier **210** may comprise a side wall. The side wall may be extended downward from the upper plate. An inner substrate **720** may be disposed on the side wall. An AF coil **420** may be disposed on the side wall. An OIS-x coil **520** may be disposed on the side wall. An OIS-y coil **620** may be disposed on the side wall. The side wall may comprise a groove for avoiding the coil. The side wall may comprise a plurality of side walls. The side wall may comprise four side walls. The side wall may comprise a first side wall and a second side wall being disposed opposite to each other and a third side wall and a fourth side wall being disposed opposite to each other.

The AF carrier **210** may comprise a second guide that guides the AF guide ball **810** to move. The second guide may comprise an inner groove **224-1** of the AF carrier **210.** The second guide may comprise an outer groove **224-2** of the AF carrier **210.**

The AF carrier **210** may comprise an inner groove **224-1.** The holder member **220** may comprise an inner groove **224-1.** The inner groove **224-1** may be an 'AF guide ball accommodating groove'. An AF guide ball **810** may be disposed in the inner groove **224-1.** An inner ball **811** may be disposed in the inner groove **224-1.** The inner groove **224-1** may be in direct contact with the AF guide ball **810.** The inner groove **224-1** may be disposed in an optical axis direction. The inner groove **224-1** may guide the AF guide ball **810** to move in an optical axis direction. The inner groove **224-1** may comprise a plurality of grooves. The inner groove **224-1** may comprise two grooves. The two grooves may be disposed parallel to each other. The two grooves can be disposed diagonally with respect to the optical axis.

The AF carrier **210** may comprise an outer groove **224-2.** The holder member **220** may comprise an outer groove **224-2.** The outer groove **224-2** may be an 'AF guide ball accommodating groove'. An AF guide ball **810** may be disposed in the outer groove **224-2.** An outer ball **812** may be disposed in the outer groove **224-2.** The outer groove **224-2** may be in direct contact with the AF guide ball **810.** The outer groove **224-2** may be disposed in an optical axis direction. The outer groove **224-2** may guide the AF guide ball **810** to move in an optical axis direction. The outer groove **224-2** may comprise a plurality of grooves. The outer groove **224-2** may comprise two grooves. The two grooves may be disposed parallel to each other. The two grooves can be disposed diagonally with respect to the optical axis. The outer groove **224-2** can be disposed opposite to the inner groove **224-1.** The outer groove **224-2** can have a shape corresponding to that of the inner groove **224-1.** The outer groove **224-2** and the inner groove **224-1** can be formed to have the same length in an optical axis direction.

The AF carrier **210** may comprise a metal member **225.** The holder member **220** may comprise the metal member **225.** The metal member **225** may be coupled to the lower plate **221** of the AF moving unit **200.** The holder member **220** may comprise a lower plate having the metal member **225.** The metal member **225** may be disposed in the holder member **220.** The metal member **225** may be insert-molded into the holder member **220.** At least a portion of the metal member **225** may be disposed on an upper surface of the holder member **220.** At least a portion of the metal member **225** may be disposed on a lower surface of the holder member **220.** At least a portion of the metal member **225** may be exposed to the surface of the holder member **220.** A metal member **225** may be disposed to reinforce the strength of the holder member **220.**

The metal member **225** may comprise a hole. A wire **850** may be disposed in the hole. The wire **850** may pass through the hole of the metal member **225.**

The metal member **225** may comprise a first hole **225-1.** The first hole **225-1** may be disposed adjacent to the wire **850.** The first hole **225-1** may be disposed adjacent to a hole through which the wire **850** passes. The first hole **225-1** may be disposed adjacent to a conductive member that connects the wire **850** and the metal member **225.** The conductive member that connects the wire **850** and the metal member **225** may be introduced into the first hole **225-1.** Solder that connects the wire **850** and the metal member **225** may be introduced into the first hole **225-1.** The first hole **225-1** may be formed to have a curvature. The first hole **225-1** may be formed in a U-shape when viewed from below. The first hole **225-1** may comprise a curved shape when viewed from below.

The metal member **225** may comprise a second hole **225-2.** The second hole **225-2** may be disposed adjacent to the wire **850.** The second hole **225-2** may be disposed adjacent to a hole through which the wire **850** passes. The second hole **225-2** may be disposed adjacent to a conductive member that connects the wire **850** and the metal member **225.** The conductive member that connects the wire **850** and the metal member **225** may be introduced into the second hole **225-2.** The second hole **225-2** may be disposed at an opposite side of the first hole **225-1** with respect to the wire **850.** The second hole **225-2** may be disposed at an opposite side of the first hole **225-1** with respect to the hole of the metal member **225** in which the wire **850** is disposed. Solder that connects the wire **850** and the metal member **225** may be introduced into the second hole **225-2.** The second hole **225-2** may be extended straight.

The AF carrier **210** may comprise a protruded portion **226.** The holder member **220** may comprise a protruded portion **226.** The protruded portion **226** may be formed on an outer side surface of the AF carrier **210.** The protruded portion **226** may be protruded outward from the AF carrier **210.** A connecting portion **712** may be disposed on an upper surface and a lower surface of the protruded portion **226.**

The lens actuator **10** may comprise a preload member **230.** The AF carrier **210** may comprise a preload member **230.** The preload member **230** may be coupled to an upper surface of a holder member **220.** The preload member **230** may be coupled to the holder member **220.** The preload member **230** may be inserted into and coupled to the holder member **220** from the upper side. The preload member **230** may pressurize the OIS guide ball **820.** The preload member **230** may be in contact with the OIS guide ball **820.** The preload member **230** may be in directly contact with the OIS guide ball **820.** The preload member **230** may be coupled to the holder member **220** to pressurize the OIS guide ball **820.** The preload member **230** can pressurize a portion of the coil spring **830** by being in contact with the OIS guide ball **820.**

The preload member **230** may be disposed between the AF moving unit **200** and the base **110** in an optical axis direction. The preload member **230** may be disposed between the AF moving unit **200** and the base **110.** The preload member **230** may be disposed between the AF carrier **210** and the base **110.**

The AF carrier **210** may comprise a protruded portion **231.** The preload member **230** may comprise a protruded portion **231.** The protruded portion **231** may be 'protrusion'. The preload member **230** may have a protruded portion **231** that guides the OIS guide ball **820.** The protruded portion **231** may be coupled to a groove **222** of a holder member **220.** The protruded portion **231** of the preload member **230** may be inserted into the groove **222** of the holder member **220** from below. The protruded portion **231** of the preload member **230** may be disposed in the groove **222** of the holder member **220.** At least a portion of the protruded portion **231** of the preload member **230** may be disposed in the groove **222** of the holder member **220.** The protruded portion **231** may comprise a plurality of protrusions. The protruded portion **231** may comprise four protrusions.

The AF carrier **210** may comprise a groove **232.** The preload member **230** may comprise a groove **232.** The groove **232** may be an 'OIS guide ball accommodating groove'. The groove **232** may be formed in the protruded portion **231.** The groove **232** may be formed on an upper surface of the protruded portion **231.** The groove **232** may be formed on an end portion of the protruded portion **231.** The groove **232** may be concavely formed on an upper surface of the protruded portion **231.** An OIS guide ball **820** may be disposed in the groove **232.** The OIS guide ball **820** may come into contact with the groove **232.**

The preload member **230** may comprise a body part **233.** The body part **233** may be coupled to a holder member **220.** The body part **233** may be disposed on a lower surface of the holder member **220.** The protruded portion **231** may protrude upward from the body part **233.**

The lens actuator **10** may comprise a cover **240.** The AF moving unit **200** may comprise a cover **240.** The cover **240** may be coupled to the AF carrier **210.** The cover **240** may be coupled to an upper surface of the AF carrier **210.** The cover **240** may be coupled to an upper surface of the AF carrier **210.** The cover **240** may be coupled to an upper side of the holder member **220.** The cover **240** may comprise a hook. The hook of the cover **240** may be coupled to the AF carrier **210.** The hook of the cover **240** may be protruded downward and be coupled to a side surface of the AF carrier **210.**

The lens actuator **10** may comprise an OIS moving unit **300.** The OIS moving unit **300** may be disposed in the fixed unit **100.** The OIS moving unit **300** may be disposed within the fixed unit **100.** The OIS moving unit **300** may be disposed on the fixed unit **100.** The OIS moving unit **300** may be disposed within the AF moving unit **200.** The OIS moving unit **300** may be disposed on the AF moving unit **200.** The OIS moving unit **300** may be disposed on a lower plate of the AF moving unit **200.** The OIS moving unit **300** may be movably disposed. The OIS moving unit **300** may move in a direction perpendicular to the optical axis with respect to the fixed unit **100** and the AF moving unit **200** by the OIS driving unit. The OIS moving unit **300** can move in an x-axis direction by the OIS-x driving unit **500.** The OIS moving unit **300** can move in a y-axis direction by the OIS-y driving unit **600.** The OIS moving unit **300** can move during OIS driving.

The OIS moving unit **300** may comprise a first side surface and a second side surface which are disposed opposite to each other, and a third side surface and a fourth side surface which are disposed opposite to each other. The OIS-x magnet **510** may be disposed on a first side surface of the OIS moving unit **300.** The AF magnet **410** may be disposed on a third side surface of the OIS moving unit **300** or may be disposed opposite to the third side surface. That is, the AF magnet **410** may be disposed at a position corresponding to a third side surface of the OIS moving unit **300.** The AF magnet **410** may be disposed closest to a third side surface among the first to fourth side surfaces of the OIS moving unit **300.** The OIS-y magnet **610** may be disposed on a fourth side surface of the OIS moving unit **300.**

The lens actuator **10** may comprise an OIS carrier **310.** The OIS moving unit **300** may comprise an OIS carrier **310.** The OIS carrier **310** may be an 'OIS holder'. The OIS carrier **310** may be a 'bobbin'. The OIS carrier **310** may be disposed within the AF carrier **210.** The OIS carrier **310** may be disposed within the base **110.** The OIS carrier **310** may be disposed on the base **110.** The OIS carrier **310** may be disposed within the cover **120.** The OIS carrier **310** may be movably disposed in a direction perpendicular to the optical axis.

The OIS carrier **310** may comprise an outer side surface. The OIS carrier **310** may comprise a plurality of side surfaces. The OIS carrier **310** may comprise a first side surface and a second side surface being disposed opposite to each other, and a third side surface and a fourth side surface being disposed opposite to each other. The AF coil **420** may be disposed between the first side surface of the OIS carrier **310** and the AF magnet **410.** The OIS-x magnet **510** may be disposed on a third side surface of the OIS carrier **310.** The OIS-y magnet **610** may be disposed on a second side surface of the OIS carrier **310.**

The OIS carrier **310** may comprise a groove. The groove may be an 'elastic member interference prevention groove'. The groove may be formed on an upper surface of the OIS carrier **310.** The groove may be formed concavely on an upper surface of the OIS carrier **310.** The groove may be disposed corresponding to the coil spring **830** to prevent interference between the OIS carrier **310** and the coil spring **830.**

The OIS carrier **310** may comprise a groove **311.** The groove **311** may be an 'OIS guide ball accommodating groove'. An OIS guide ball **820** may be disposed in the groove **311.** The groove **311** may be in direct contact with the OIS guide ball **820.** The groove **311** may be concavely formed on a lower surface of the OIS moving unit **300.** The groove **311** may be concavely formed on a lower surface of the OIS carrier **310.** The groove **311** may be disposed in a direction perpendicular to the optical axis. The groove **311** may be recessed in an optical axis direction. The groove **311** may comprise a plurality of grooves. The groove **311** may comprise four grooves. The groove **311** may be formed on a lower surface of the OIS carrier **310.**

The OIS carrier **310** may comprise a lateral stopper. The lateral stopper may limit the lateral stroke of the OIS carrier **310.** That is, when the OIS carrier **310** moves to the maximum, the lateral stopper of the OIS carrier **310** may be in contact with at least one of the AF carrier **210** and the base **110.** The lateral stopper may be formed on an outer side surface of the OIS carrier **310.** The lateral stopper may be protruded outward from a side surface of the OIS carrier **310.**

The OIS carrier **310** may comprise a protruded portion **312.** The protruded portion **312** may be protruded from an outer circumferential surface of the OIS moving unit **300.** The protruded portion **312** may be protruded from an outer side surface of the OIS moving unit **300.** The protruded portion **312** may be protruded from an outer side surface of the OIS carrier **310.** The protruded portion **312** may be protruded from an outer side surface of the OIS carrier **310.** The protruded portion **312** may be protruded outward from the OIS carrier **310.** A coil spring **830** may be coupled to the protruded portion **312.** A coil spring **830** may be coupled to a lower surface of the protruded portion **312.**

The protruded portion **312** may comprise a hole or groove being coupled with the coil spring **830.** A hole or groove in which a portion of the coil spring **830** is disposed may be formed on a lower surface of the protruded portion **312.** The hole or groove of the protruded portion **312** may have a shape corresponding to a portion of the coil spring **830.**

The protruded portion **312** may comprise a plurality of protruded portions. The protruded portion **312** may comprise four protruded portions. The protruded portion **312** may comprise four protruded portions being spaced apart from one another. The protruded portion **312** may comprise first to fourth protruded portions. The protruded portion **312** may comprise four protruded portions corresponding to four corners of the OIS moving unit **300.**

The OIS carrier **310** may comprise an avoidance portion **313.** The avoidance portion **313** may be formed concavely on the outer surface of the OIS carrier **310.** The avoidance portion **313** may be formed so that the OIS carrier **310** does not interfere with the coil spring **830.**

The OIS carrier **310** may comprise a groove **313.** The groove **313** may be a 'lens adhesive accommodating groove'. The groove **313** may be formed on an inner circumferential surface of the OIS carrier **310.** The groove **313** may be formed concavely on an inner circumferential surface of the OIS carrier **310.** An adhesive may be injected between the lens and the OIS carrier **310** through the groove **313.** An adhesive for bonding the lens and the OIS carrier **310** may be disposed in the groove **313.**

The OIS carrier **310** may comprise a mounting portion. The mounting portion may be a 'magnet mounting portion.' Magnets **510** and **620** may be disposed in the mounting portion. The mounting portion may be formed, for example, as a groove.

The lens actuator **10** may comprise a driving unit. The driving unit may move the moving unit against the fixed unit **100.** The driving unit may comprise an AF driving unit **400.** The driving unit may comprise an OIS driving unit. The driving unit may comprise an OIS-x driving unit **500.** The driving unit may comprise an OIS-y driving unit **600.** The driving unit may comprise a coil and a magnet.

The lens actuator **10** may comprise an AF driving unit **400.** The AF driving unit **400** may move the AF moving unit **200** in an optical axis direction. The AF driving unit **400** may move the AF carrier **210** in an optical axis direction. The AF driving unit **400** may move the AF carrier **210** in an optical axis direction through electromagnetic force. The AF driving unit **400** may comprise a coil and a magnet.

The lens actuator **10** may comprise an AF magnet **410** and an AF coil **420** that move the AF moving unit **200** in an optical axis direction.

In a first embodiment of the present invention, the AF carrier **210** and the OIS carrier **310** can move in an optical axis direction by the interaction between the AF coil **420** and the AF magnet **410.** The AF coil **420,** the AF carrier **210,** and the OIS carrier **310** can move integrally in an optical axis direction.

The lens actuator **10** may comprise an AF magnet **410.** The AF driving unit **400** may comprise an AF magnet **410.** The AF magnet **410** may be an 'AF magnet'. The AF magnet **410** may be a permanent magnet. The AF magnet **410** may be disposed in the fixed unit **100.** The AF magnet **410** may be disposed in the base **110.** The AF magnet **410** may be disposed in the cover **120.** The AF magnet **410** may be disposed in the side plate **122** of the cover **120.** The AF magnet **410** may be disposed on an outer side surface of the base **110.** The AF magnet **410** may be disposed on an inner side surface of the base **110.** The AF magnet **410** can be fixed to the base **110.** The AF magnet **410** can be coupled to the base **110.** The AF magnet **410** can be bonded to the base **110** with an adhesive. The AF magnet **410** can be disposed within the cover **120.** The AF magnet **410** can interact with the AF coil **420.** The AF magnet **410** can electromagnetically interact with the AF coil **420.** The AF magnet **410** can be disposed at a position corresponding to the AF coil **420.** The AF magnet **410** can face the AF coil **420.** The AF magnet **410** can face the AF coil **420.** The AF magnet **410** can be overlapped with the AF coil **420** in a direction perpendicular to the optical axis.

The AF magnet **410** may be a four-pole magnet. The AF magnet **410** may comprise a four-pole magnetizing magnet. The AF magnet **410** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be disposed spaced apart from each other in a vertical direction, and a neutral portion may be disposed between the first magnet portion and the second magnet portion.

The lens actuator **10** may comprise an AF coil **420.** The AF driving unit **400** may comprise the AF coil **420.** The AF coil **420** may interact with the AF magnet **410.** The AF coil **420** may face the AF magnet **410.** The AF coil **420** may be disposed at a position corresponding to the AF magnet **410.** The AF coil **420** may be overlapped with the AF magnet **410** in a direction perpendicular to the optical axis. The AF coil **420** may be disposed in the inner substrate **720.** The AF coil **420** may be disposed in the AF carrier **210.** The AF coil **420** may be disposed in the AF moving unit **200.**

In a first embodiment of the present invention, the AF coil **420** can move in an optical axis direction. The AF coil **420** can move in an optical axis direction through interaction with the AF magnet **410.** The AF coil **420** can move together with the AF moving unit **200.** The AF coil **420** can move in an optical axis direction together with the AF moving unit **200.** During the AF driving process, the AF coil **420** can move in an optical axis direction together with the AF moving unit **200.** The AF coil **420** can be disposed in the AF moving unit **200.** The AF coil **420** can be fixed to the AF moving unit **200.** The AF coil **420** can be coupled to the AF moving unit **200.**

The lens actuator **10** may comprise an AF sensor **430.** The AF driving unit **400** may comprise an AF sensor **430.** The AF sensor **430** may be a Hall sensor. The AF sensor **430** may be disposed in the inner substrate **720.** The AF sensor **430** may detect the AF magnet **410.** The AF sensor **430** may detect the movement of the AF magnet **410.** The movement amount or position of the AF magnet **410** detected by the AF sensor **430** may be used for feedback of auto focus driving.

The AF sensor **430** may be a driver IC. The driver IC may comprise a sensing unit. The sensing unit may comprise a Hall element (Hall IC). The driver IC may be electrically connected to the AF coil **420.** The driver IC may supply current to the AF coil **420.**

The AF sensor **430** may be disposed within the AF coil **420.** The AF sensor **430** may be overlapped with the neutral portion of the AF magnet **410** in a direction perpendicular to the optical axis. In a modified embodiment, the AF sensor **430** may be disposed outside the AF coil **420.** The AF sensor **430** may be overlapped with the AF coil **420** in an optical axis direction. The AF sensor **430** may be overlapped with the AF coil **420** in a direction perpendicular to the optical axis.

The lens actuator **10** may comprise an AF yoke **440.** The AF yoke **440** may be disposed corresponding to the AF magnet **410.** An attractive force may be applied between the AF yoke **440** and the AF magnet **410.** The AF guide ball **810** may be maintained in contact with the base **110** and the AF carrier **210** by the attractive force between the AF yoke **440** and the AF magnet **410.** The AF yoke **440** may be disposed in the inner substrate **720.** The AF yoke **440** may be disposed inside the AF coil **420.**

The lens actuator **10** may comprise an OIS driving unit. The OIS driving unit may move the OIS moving unit **300** in a direction perpendicular to the optical axis direction. The OIS driving unit may move the OIS carrier **310** in a direction perpendicular to the optical axis. The OIS driving unit may move the OIS carrier **310** in a direction perpendicular to the optical axis through electromagnetic force.

The lens actuator **10** may comprise an OIS-x driving unit **500.** The OIS driving unit may comprise an OIS-x driving unit **500.** The OIS-x driving unit **500** may move the OIS carrier **310** in an x-axis direction perpendicular to the optical axis. The OIS-x driving unit **500** may move the OIS carrier **310** in an x-axis direction perpendicular to the optical axis through electromagnetic force. The OIS-x driving unit **500** may comprise a coil and a magnet.

The lens actuator **10** may comprise an OIS-x magnet **510** and an OIS-x coil **520** that move the OIS moving unit **300** in an x-axis direction perpendicular to the optical axis direction.

In a first embodiment of the present invention, the OIS-x magnet **510** and the OIS-x coil **520** can move the OIS moving unit **300** in a first direction perpendicular to the optical axis direction. At this time, the first direction may be an x-axis direction. The OIS carrier **310** can move in an x-axis direction perpendicular to the optical axis direction by the interaction between the OIS-x coil **520** and the OIS-x magnet **510.** The OIS-x magnet **510** and the OIS carrier **310** can move integrally in an x-axis direction.

The lens actuator **10** may comprise an OIS-x magnet **510.** The OIS driving unit may comprise an OIS-x magnet **510.** The OIS-x magnet **510** may be an 'OIS-x magnet'. The OIS-x magnet **510** may be a permanent magnet. The OIS-x magnet **510** may be disposed in the OIS moving unit **300.** The OIS-x magnet **510** may be spaced apart from the AF magnet **410.** The OIS-x magnet **510** may be disposed in the OIS carrier **310.** The OIS-x magnet **510** may be disposed on an outer surface of the OIS carrier **310.** The OIS-x magnet **510** may be fixed to the OIS carrier **310.** The OIS-x magnet **510** can be coupled to the OIS carrier **310.** The OIS-x magnet **510** can be bonded to the OIS carrier **310** with an adhesive. The OIS-x magnet **510** can be disposed inside the cover **120.** The OIS-x magnet **510** can interact with the OIS-x coil **520.** The OIS-x magnet **510** can electromagnetically interact with the OIS-x coil **520.** The OIS-x magnet **510** can be disposed at a position corresponding to the OIS-x coil **520.** The OIS-x magnet **510** can face the OIS-x coil **520.** The OIS-x magnet **510** can face the OIS-x coil **520.** The OIS-x magnet **510** can be overlapped with the OIS-x coil **520** in a direction perpendicular to the optical axis. The OIS-x magnet **510** can be overlapped with the OIS-x coil **520** in an x-axis direction. The OIS-x magnet **510** can move in an x-axis direction perpendicular to the optical axis.

The OIS-x magnet **510** may be a two-pole magnet. The OIS-x magnet **510** may comprise a two-pole magnetizing magnet. The OIS-x magnet **510** may comprise an N pole and an S pole.

The lens actuator **10** may comprise an OIS-x coil **520.** The OIS driving unit may comprise an OIS-x coil **520.** The OIS-x coil **520** may interact with the OIS-x magnet **510.** The OIS-x coil **520** may move the OIS-x magnet **510** in an x-axis direction perpendicular to the optical axis. The OIS-x coil **520** may move the OIS-x magnet **510** in an x-axis direction through interaction with the OIS-x magnet **510.** The OIS-x coil **520** may face the OIS-x magnet **510.** The OIS-x coil **520** may face the OIS-x magnet **510.** The OIS-x coil **520** may be disposed corresponding to the OIS-x magnet **510.** The OIS-x coil **520** may be overlapped with the OIS-x magnet **510** in a direction perpendicular to the optical axis. The OIS-x coil **520** may be disposed in the inner substrate **720.** The OIS-x coil **520** may be disposed in the AF carrier **210.**

In a first embodiment of the present invention, the OIS-x coil **520** can move together with the AF moving unit **200.** The OIS-x coil **520** can move in an optical axis direction together with the AF moving unit **200.** During the AF driving process, the OIS-x coil **520** can move in an optical axis direction together with the AF moving unit **200.** The OIS-x coil **520** can be disposed in the AF moving unit **200.** The OIS-x coil **520** can be fixed to the AF moving unit **200.** The OIS-x coil **520** can be coupled to the AF moving unit **200.**

When a current is applied to the OIS-x coil **520,** the OIS-x magnet **510** can move away from or closer to the OIS-x coil **520** in an x-axis direction.

The lens actuator **10** may comprise an OIS-x sensor **530.** The OIS driving unit may comprise an OIS-x sensor **530.** The OIS-x sensor **530** may be disposed in an inner substrate **720.** The OIS-x sensor **530** may comprise a Hall sensor. The OIS-x sensor **530** may detect an OIS-x magnet **510.** The OIS-x sensor **530** may detect a magnetic force of the OIS-x magnet **510.** The OIS-x sensor **530** may be disposed at a lower side of the OIS-x magnet **510.** The OIS-x sensor **530** may be overlapped with the OIS-x magnet **510** in an optical axis direction. In a modified embodiment, the OIS-x sensor **530** may be disposed within the OIS-x coil **520.** The OIS-x sensor **530** may be overlapped with the OIS-x coil **520** in an optical axis direction. The OIS-x sensor **530** may be overlapped with the OIS-x coil **520** in a direction perpendicular to the optical axis. The OIS-x sensor **530** may face the OIS-x magnet **510.** The OIS-x sensor **530** may be disposed at a position corresponding to the OIS-x magnet **510.** The OIS-x sensor **530** may detect movement of the OIS-x magnet **510.** The amount of movement or position of the OIS-x magnet **510** detected by the OIS-x sensor **530** may be used for feedback of handshake correction driving in an x-axis direction.

The lens actuator **10** may comprise an OIS-x yoke **540.** The OIS-x yoke **540** may be disposed in an OIS-x magnet **510.** The OIS-x yoke **540** may be disposed between the OIS-x magnet **510** and the OIS carrier **310.** The OIS-x yoke **540** may prevent magnetic flux leakage of the OIS-x magnet **510** and thereby improve interaction with the OIS-x coil **520.**

The lens actuator **10** may comprise an OIS-y driving unit **600.** The OIS driving unit may comprise an OIS-y driving unit **600.** The OIS-y driving unit **600** may move the OIS carrier **310** in a y-axis direction perpendicular to both the optical axis and the x-axis direction. The OIS-y driving unit **600** may move the OIS carrier **310** in a y-axis direction perpendicular to both the optical axis and the x-axis direction through electromagnetic force. The OIS-y driving unit **600** may comprise a coil and a magnet.

The lens actuator **10** may comprise an OIS-y magnet **610** and an OIS-y coil **620** that move the OIS moving unit **300** in a y-axis direction perpendicular to the optical axis direction and the x-axis direction.

In a first embodiment of the present invention, the OIS-y magnet **610** and the OIS-y coil **620** can move the OIS moving unit **300** in a second direction perpendicular to the optical axis direction and the first direction. At this time, the second direction may be a y-axis direction. By the interaction of the OIS-y coil **620** and the OIS-y magnet **610,** the OIS carrier **310** can move in a y-axis direction perpendicular to both the optical axis direction and the x-axis direction. The OIS-y magnet **610** and the OIS carrier **310** can move integrally in a y-axis direction. The OIS-y magnet **610** can be overlapped with the AF magnet **410** in a second direction. The OIS-y magnet **610** can be overlapped with the AF magnet **410** in a y-axis direction.

The lens actuator **10** may comprise an OIS-y magnet **610.** The OIS-y driving unit **600** may comprise an OIS-y magnet **610.** The OIS-y magnet **610** may be an 'OIS-y magnet'. The OIS-y magnet **610** may be a permanent magnet. The OIS-y magnet **610** may be disposed in the OIS moving unit **300.** The OIS-y magnet **610** may be spaced apart from the OIS-x magnet **510.** The OIS-y magnet **610** may be spaced apart from the AF magnet **410.** The OIS-y magnet **610** may be disposed in the OIS carrier **310.** The OIS-y magnet **610** may be disposed on an outer side surface of the OIS carrier **310.** The OIS-y magnet **610** may be fixed to the OIS carrier **310.** The OIS-y magnet **610** may be coupled to the OIS carrier **310.** The OIS-y magnet **610** may be adhesively bonded to the OIS carrier **310** with an adhesive. The OIS-y magnet **610** may be disposed within the cover **120.** The OIS-y magnet **610** may interact with the OIS-y coil **620.** The OIS-y magnet **610** may electromagnetically interact with the OIS-y coil **620.** The OIS-y magnet **610** may be disposed at a position corresponding to the OIS-y coil **620.** The OIS-y magnet **610** can face the OIS-y coil **620.** The OIS-y magnet **610** can face the OIS-y coil **620.** The OIS-y magnet **610** can be overlapped with the OIS-y coil **620** in a direction perpendicular to the optical axis. The OIS-y magnet **610** can be overlapped with the OIS-y coil **620** in a y-axis direction. The OIS-y magnet **610** can move in a y-axis direction.

The OIS-y magnet **610** may be a two-pole magnet. The OIS-y magnet **610** may comprise a two-pole magnetizing magnet. The OIS-y magnet **610** may comprise an N pole and an S pole.

The lens actuator **10** may comprise an OIS-y coil **620.** The OIS-y driving unit **600** may comprise the OIS-y coil **620.** The OIS-y coil **620** may interact with the OIS-y magnet **610.** The OIS-y coil **620** may be disposed on the opposite side of the AF coil **420** with respect to the optical axis. The OIS-y coil **620** may move the OIS-y magnet **610** in a y-axis direction, which is perpendicular to both the optical axis and the x-axis. The OIS-y coil **620** may move the OIS-y magnet **610** in a y-axis direction through interaction with the OIS-y magnet **610.** The OIS-y coil **620** may face the OIS-y magnet **610.** The OIS-y coil **620** may face the OIS-y magnet **610.** The OIS-y coil **620** may be disposed corresponding to the OIS-y magnet **610.** The OIS-y coil **620** may be overlapped with the OIS-y magnet **610** in a direction perpendicular to the optical axis. The OIS-y coil **620** may be disposed on the inner substrate **720.** The OIS-y coil **620** may be disposed on the AF carrier **210.**

In a first embodiment of the present invention, the OIS-y coil **620** can move together with the AF moving unit **200.** The OIS-y coil **620** can move in an optical axis direction together with the AF moving unit **200.** During the AF driving process, the OIS-y coil **620** can move in an optical axis direction together with the AF moving unit **200.** The OIS-y coil **620** can be disposed in the AF moving unit **200.** The OIS-y coil **620** can be fixed to the AF moving unit **200.** The OIS-y coil **620** can be coupled to the AF moving unit **200.**

When a current is applied to the OIS-y coil **620,** the OIS-y magnet **610** can move away from or closer to the OIS-y coil **620** in a y-axis direction.

The lens actuator **10** may comprise an OIS-y sensor **630.** The OIS-y driving unit **600** may comprise the OIS-y sensor **630.** The OIS-y sensor **630** may be disposed in the inner substrate **720.** The OIS-y sensor **630** may comprise a Hall sensor. The OIS-y sensor **630** may detect the OIS-y magnet **610.** The OIS-y sensor **630** may detect the magnetic force of the OIS-y magnet **610.** The OIS-y sensor **630** may be disposed below the OIS-y magnet **610.** The OIS-y sensor **630** may be overlapped with the OIS-y magnet **610** in an optical axis direction. The OIS-y sensor **630** may be overlapped with the OIS-y magnet **610** in a direction perpendicular to the optical axis. In a modified embodiment, the OIS-y sensor **630** may be disposed within the OIS-y coil **620.** The OIS-y sensor **630** may be overlapped with the OIS-y coil **620** in an optical axis direction. The OIS-y sensor **630** may face the OIS-y magnet **610.** The OIS-y sensor **630** may be disposed at a position corresponding to the OIS-y magnet **610.** The OIS-y sensor **630** may detect the movement of the OIS-y magnet **610.** The movement amount or position of the OIS-y magnet **610** detected by the OIS-y sensor **630** may be used for feedback of the handshake correction driving in a y-axis direction.

The lens actuator **10** may comprise an OIS-y yoke **640.** The OIS-y yoke **640** may be disposed on an OIS-y magnet **610.** The OIS-y yoke **640** may be disposed between the OIS-y magnet **610** and the OIS carrier **310.** The OIS-y yoke **640** may prevent magnetic flux leakage of the OIS-y magnet **610** and thereby enhance interaction with the OIS-y coil **620.**

When viewed from above, the AF magnet **410,** the AF coil **420,** the OIS-y magnet **610,** and the OIS-y coil **620** can be disposed in order on an imaginary straight line. When viewed from above, the AF magnet **410,** the AF coil **420,** the OIS-y magnet **610,** and the OIS-y coil **620** can be disposed in order on an imaginary straight line. When viewed from above, the AF magnet **410,** the AF coil **420,** the OIS-y magnet **610,** and the OIS-y coil **620** can be disposed in order. When viewed from above, the AF magnet **410,** the AF coil **420,** the OIS-y magnet **610,** and the OIS-y coil **620** can be disposed in order in a y-axis direction. When viewed from above, the AF magnet **410,** the AF coil **420,** the OIS-y magnet **610,** and the OIS-y coil **620** can be overlapped in a y-axis direction.

The lens actuator **10** may comprise substrates **710** and **720.** The substrates **710** and **720** may comprise a flexible printed circuit board (FPCB). The substrates **710** and **720** may be electrically connected to coils **420, 520** and **620.** The substrates **710** and **720** may be electrically connected to sensors **430, 530** and **630.**

The lens actuator **10** may comprise an outer substrate **710.** The outer substrate **710** may be disposed in the base **110.** The outer substrate **710** may be electrically connected to coils **420, 520** and **620.** The outer substrate **710** may be electrically connected to sensors **430, 530** and **630.** The outer substrate **710** may connect the AF carrier **210** and the base **110.** The outer substrate **710** may elastically connect the AF carrier **210** and the base **110.** The outer substrate **710** may connect the fixed unit **100** and the inner substrate **720.** The outer substrate **710** may support the AF carrier **210** to be movable against the base **110.** The outer substrate **710** can guide the AF carrier **210** to move in an optical axis direction with respect to the base **110.** The outer substrate **710** can comprise a flexible substrate. The outer substrate **710** can comprise a flexible printed circuit board (FPCB). The outer substrate **710** can comprise an elastic portion. The outer substrate **710** can comprise an elastic member. The outer substrate **710** can comprise an outer portion **711** disposed in the fixed unit **100,** and a connecting portion **712** being extended from the outer portion **711** and coupled to the inner substrate **720.**

The outer substrate **710** may comprise an outer side portion **711.** The outer side portion **711** may be disposed on the base **110.** The outer side portion **711** may be formed to surround a side surface of the base **110.** The outer side portion **711** may be disposed on three side surfaces of the base **110.** The outer side portion **711** may comprise two terminal portions. The two terminal portions may be disposed on opposite sides with respect to the optical axis. The terminal portion may comprise a terminal **711-1.**

The outer substrate **710** may comprise a terminal **711-1.** The outer side portion **711** of the outer substrate **710** may comprise a terminal **711-1.** The terminal **711-1** may be electrically connected to a terminal **712-1.** The terminal **711-1** may be disposed at a lower end portion of the base **110.** The terminal **711-1** may be coupled to a printed circuit board **50.** The terminal **711-1** may be coupled to a terminal of the printed circuit board **50** via solder. The terminal **711-1** may be coupled to a terminal of the printed circuit board **50** via a conductive member. The terminal **711-1** may be connected to a terminal of the printed circuit board **50.** The terminal **711-1** can be electrically connected to a terminal of a printed circuit board **50.**

The outer substrate **710** may comprise a connecting portion **712.** The connecting portion **712** may be an 'extension portion'. The connecting portion **712** may be a 'leg portion'. The connecting portion **712** may be extended from the outer side portion **711.** At least a portion of the connecting portion **712** may move together with the AF carrier **210.** The extending portion may extend from the outer side portion **711.** At least a portion of the extending portion may move together with the AF carrier **210.** At least a portion of the connecting portion **712** may be disposed perpendicular to the optical axis direction. The connecting portion **712** of the outer substrate **710** may be coupled to the inner substrate **720** such that the inner substrate **720** may move in an optical axis direction. At least a portion of the connecting portion **712** may be disposed parallel to the optical axis direction.

The connecting portion **712** may comprise a plurality of connecting portions. The connecting portion **712** may comprise a first connecting portion and a second connecting portion. The second connecting portion may be disposed below the first connecting portion.

The outer substrate **710** may comprise a terminal **712-1.** The connecting portion **712** of the outer substrate **710** may comprise a terminal **712-1.** The terminal **712-1** may be coupled to a terminal **721-1** of the inner substrate **720.** The terminal **712-1** of the outer substrate **710** may be coupled to the terminal **721-1** of the inner substrate **720** through solder. The terminal **712-1** of the outer substrate **710** may be coupled to the terminal **721-1** of the inner substrate **720** through a conductive member. The terminal **712-1** of the outer substrate **710** may be connected to the terminal **721-1** of the inner substrate **720.** The terminal **712-1** of the outer substrate **710** can be electrically connected to the terminal **721-1** of the inner substrate **720.**

The outer substrate **710** may comprise a bent portion **712-2.** The bent portion **712-2** may be formed in the connecting portion **712.** The bent portion **712-2** may be formed in each of the first connecting portion and the second connecting portion. The bent portion **712-2** may comprise a shape that is bent at least twice. The bent portion **712-2** may comprise a shape bent in a U shape. The bent portion **712-2** may comprise a rounded shape. The bent portion **712-2** may comprise a portion that is disposed parallel to the optical axis.

Hereinafter, one of the 'terminal **711-1'** and the 'terminal **712-1'** of the outer substrate **710** may be referred to as a 'first terminal' and the other may be referred to as a 'second terminal'.

The lens actuator **10** may comprise an inner substrate **720.** The inner substrate **720** may be electrically connected to coils **420, 520** and **620.** The inner substrate **720** may be electrically connected to sensors **430, 530** and **630.** The inner substrate **720** may be disposed in the AF moving unit **200.** The inner substrate **720** may be disposed in the AF carrier **210.** The inner substrate **720** may be fixed to the AF carrier **210.** The inner substrate **720** may be coupled to the AF carrier **210.** The inner substrate **720** may be bonded to the AF carrier **210** with an adhesive. The inner substrate **720** may comprise a flexible substrate. The inner substrate **720** may comprise a flexible printed circuit board (FPCB). The inner substrate **720** may comprise an elastic portion. The inner substrate **720** may comprise an elastic member.

The inner substrate **720** can be coupled to a lower surface of the holder member **220.** The preload member **230** can be coupled to the inner substrate **720.**

The inner substrate **720** may comprise a side plate portion **721.** The side plate portion **721** may be disposed on the side surface of the AF carrier **210.** The side plate portion **721** may be disposed on an outer side surface of the AF carrier **210.** In another embodiment, the side plate portion **721** may be disposed on an inner side surface of the AF carrier **210.** The side plate portion **721** of the inner substrate **720** may comprise a plurality of portions. The side plate portion **721** may comprise first to fourth portions.

The inner substrate **720** may comprise a first portion. The first portion may be disposed on the AF carrier **210.** The AF coil **420** may be disposed in a first portion of the inner substrate **720.** The AF sensor **430** may be disposed in a first portion of the inner substrate **720.** The AF yoke **440** may be disposed in a first portion of the inner substrate **720.**

The inner substrate **720** may comprise a second portion. The second portion may be disposed opposite to the first portion. The second portion may be disposed in the AF carrier **210.** The second portion may be disposed at a second side surface of the AF carrier **210.** The OIS-y coil **620** may be disposed at a second portion of the inner substrate **720.** The OIS-y sensor **630** may be disposed at a second portion of the inner substrate **720.** More specifically, the OIS-y sensor **630** may be disposed at a lower plate portion **722** being bent and disposed at an upper side of a second portion of the inner substrate **720.** The OIS-y sensor **630** may be disposed at a lower surface of the lower plate portion **722.**

The inner substrate **720** may comprise a third portion. The third portion may be disposed in the AF carrier **210.** The third portion may be disposed at a third side surface of the AF carrier **210.** The OIS-x coil **520** may be disposed at a third portion of the inner substrate **720.** The OIS-x sensor **530** may be disposed at a third portion of the inner substrate **720.** More specifically, the OIS-x sensor **530** may be disposed at a lower plate portion **722** being bent and disposed at an upper side of a third portion of the inner substrate **720.** The OIS-x sensor **530** may be disposed at a lower surface of the lower plate portion **722.**

The inner substrate **720** may comprise a fourth portion. The fourth portion may be disposed opposite to the third portion. The fourth portion may be disposed in the AF carrier **210.** The fourth portion may be disposed at a fourth side surface of the AF carrier **210.**

The inner substrate **720** may comprise a terminal **721-1.** The terminal **721-1** may be disposed in the fourth portion of the inner substrate **720.** The terminal **721-1** may be electrically connected to the coils **420, 520** and **620.** The terminal **721-1** may be electrically connected to the sensors **430, 530** and **630.** The terminal **721-1** may be coupled to the terminal **712-1** of the outer substrate **710.**

The inner substrate **720** may comprise a terminal **722-1.** The terminal **722-1** may be disposed in the lower plate portion **722** of the inner substrate **720.** The terminal **722-1** may be electrically connected to the coils **420, 520** and **620.** The terminal **722-1** may be electrically connected to the sensors **430, 530** and **630.** The terminal **722-1** may be coupled to the terminal **712-1** of the outer substrate **710.**

The inner substrate **720** may comprise a hole **722-2.** Through the hole **722-2,** a terminal **722-1** of the inner substrate **720** may be soldered to a terminal **712-1** of the outer substrate **710.**

The lens actuator **10** may comprise a guide member. The guide member may comprise a ball. The guide member may comprise a pin. The guide member may comprise a cylindrical member. The guide member may guide the movement of the moving unit against the fixed unit **100** in a specific direction.

The lens actuator **10** may comprise an AF guide ball **810.** The AF guide ball **810** may guide movement of the AF moving unit **200** against the fixed unit **100** in an optical axis direction. The AF guide ball **810** may guide movement of the AF carrier **210** against the base **110** in an optical axis direction. The AF guide ball **810** may be disposed between the fixed unit **100** and the AF moving unit **200.** The AF guide ball **810** may be disposed between the base **110** and the AF carrier **210.** The AF guide ball **810** may be disposed between the housing and the base **110.** The AF guide ball **810** may be disposed between the base **110** and the AF carrier **210** in an x direction. Or, the AF guide ball **810** may be disposed between the base **110** and the AF carrier **210** in a y direction. The AF guide ball **810** may be disposed in a groove of the base **110.** The AF guide ball **810** may be disposed in a groove of the AF carrier **210.** The AF guide ball **810** may be spherical. The AF guide ball **810** may be formed of metal. Grease may be applied to the surface of the AF guide ball **810.**

The AF guide ball **810** may be disposed at a first corner of the base **110.** The AF guide ball **810** may be disposed at a second corner in diagonal direction of the first corner of the base **110.** The AF guide ball **810** may be disposed at each of the first and second corners of the base **110.** The first and second corner regions of the fixed unit **100** may be disposed diagonally against an optical axis. The AF guide ball **810** may be disposed at the first and second corner regions of the fixed unit **100.** Two sets of AF guide balls **810** may be disposed at each of the first and second corners of the base **110.** At this time, one set may comprise four balls. The two sets may be disposed at opposite sides of the pillar part of the AF carrier **210.**

In a modified embodiment, the AF guide ball **810** may be disposed at a first corner and a third corner. Or, the AF guide ball **810** may be disposed at a first corner and a fourth corner. That is, the AF guide ball **810** may not be disposed diagonally.

The AF guide ball **810** may comprise a first unit ball disposed at a first corner region of the fixed unit **100** when viewed from above, and a second unit ball being disposed at a second corner region diagonally from a first corner region of the fixed unit **100.** At this time, the OIS guide ball **820** may comprise a first guide member and a second guide member being spaced apart from each other and disposed diagonally between the first unit ball and the second unit ball of the AF guide ball **810,** when viewed from above.

The AF guide ball **810** may comprise a first unit ball and a second unit ball being disposed at a first corner region of the fixed unit **100** when viewed from above, and a third unit ball and a fourth unit ball being disposed at a second corner region diagonally opposite to the first corner region of the fixed unit **100.** The AF guide balls **810** may be disposed in sets of two per corner.

The AF guide ball **810** may comprise a ball being overlapped with the OIS guide ball **820** in a direction perpendicular to the optical axis direction. At least a portion of the AF guide ball **810** may be overlapped with the OIS guide ball **820.**

The AF guide ball **810** may comprise an inner ball **811.** The inner ball **811** may be disposed in the pillar part **111** of the base **110.** The inner ball **811** may be disposed in the inner groove **111-1** of the base **110.** The inner ball **811** may be disposed in the inner groove **224-1** of the AF carrier **210.** The inner ball **811** may be disposed in the inner groove **224-1** of the AF moving unit **200.** The inner ball **811** may be disposed in the inner groove **111-1** of the base **110** and the inner groove **224-1** of the AF carrier **210.** The inner ball **811** may be disposed between the inner groove **111-1** of the base **110** and the inner groove **224-1** of the AF carrier **210.** The inner ball **811** can be disposed between the AF moving unit **200** and the pillar part **111** of the fixed unit **100.**

The AF guide ball **810** may comprise an outer ball **812.** The outer ball **812** may be disposed in the outer wall part **112** of the base **110.** The outer ball **812** may be disposed in the outer groove **112-1** of the base **110.** The outer ball **812** may be disposed in the outer groove **224-2** of the AF carrier **210.** The outer ball **812** may be disposed in the outer groove **112-1** of the base **110** and the outer groove **224-2** of the AF carrier **210.** The outer ball **812** may be disposed between the outer groove **112-1** of the base **110** and the outer groove **224-2** of the AF carrier **210.** The outer ball **812** may be disposed between the outer groove **112-1** of the fixed unit **100** and the outer groove **224-2** of the AF moving unit **200.** The outer ball **812** may be disposed between the AF moving unit **200** and the outer wall part **112** of the fixed unit **100.**

The inner ball **811** may comprise a plurality of inner balls **811.** The plurality of inner balls **811** may be disposed in the optical axis direction. The inner ball **811** may comprise four inner balls **811.** The inner ball **811** may comprise first to fourth inner balls. Two of the four inner balls **811** may have large diameters and the remaining two may have small diameters. The two balls with large diameters may be disposed at the uppermost end and the lowermost end. In other words, two balls with small diameters may be disposed between the two balls with large diameters.

The inner ball **811** may comprise an inner uppermost ball **811-1.** The inner uppermost ball **811-1** may be disposed highest among the inner balls **811.** The inner uppermost ball **811-1** may be disposed closest to the upper plate **121** of the cover **120** among the inner balls **811.** The inner ball **811** may comprise an inner lowermost ball **811-2.** The inner lowermost ball **811-2** may be disposed lowest among the inner balls **811.** The inner lowermost ball **811-2** may be disposed closest to the lower plate portion of the base **110** among the inner balls **811.** The plurality of inner balls **811** may comprise balls having a smaller diameter than each of the inner uppermost ball **811-1** and the inner lowermost ball **811-2.** The plurality of inner balls **811** may comprise balls being disposed between the inner uppermost ball **811-1** and the inner lowermost ball **811-2.**

The outer ball **812** may comprise a plurality of outer balls **812.** The plurality of outer balls **812** may be disposed in an optical axis direction. The outer ball **812** may comprise four outer balls **812.** The outer ball **812** may comprise first to fourth outer balls. Two of the four outer balls **812** may have large diameters and the remaining two may have small diameters. The two balls with large diameters may be disposed at the uppermost end and the lowermost end. That is, two balls with small diameters may be disposed between the two balls with large diameters.

The outer ball **812** may comprise an outer uppermost ball **812-1.** The outer uppermost ball **812-1** may be disposed highest among the outer balls **812.** The outer uppermost ball **812-1** may be disposed closest to the upper plate **121** of the cover **120** among the outer balls **812.** The outer ball **812** may comprise an outer lowermost ball **812-2.** The outer lowermost ball **812-2** may be disposed lowest among the outer balls **812.** The outer lowermost ball **812-2** may be disposed closest to the lower plate portion of the base **110** among the outer balls **812.** The plurality of outer balls **812** may comprise balls having a diameter smaller than each of the outer uppermost ball **812-1** and the outer lowermost ball **812-2.** The plurality of outer balls **812** may comprise balls being disposed between the outer uppermost ball **812-1** and the outer lowermost ball **812-2.**

The AF guide ball **810** may comprise a plurality of balls disposed in an optical axis direction. At this time, the plurality of balls may comprise uppermost balls **811-1** and **812-1** being disposed at the highest position and lowermost balls **811-2** and **812-2** being disposed at the lowest position. The height of the point where the elastic member **920** pressurizes the plate member **910** may be disposed between the height of the uppermost balls **811-1** and **812-1** and the height of the lowermost balls **811-2** and **812-2.**

The lens actuator **10** may comprise an OIS guide ball **820.** The OIS guide ball **820** may guide the movement of the OIS carrier **310** against the AF carrier **210** in a direction perpendicular to the optical axis. The OIS guide ball **820** may be disposed between the AF moving unit **200** and the OIS moving unit **300.** The OIS guide ball **820** may be disposed between the lower plate of the AF moving unit **200** and the OIS moving unit **300.** The OIS guide ball **820** may be disposed between the AF carrier **210** and the OIS carrier **310.** The OIS guide ball **820** may be disposed between the lower side of the AF carrier **210** and the OIS carrier **310.** The OIS guide ball **820** may be disposed between the housing and the bobbin. The OIS guide ball **820** may be disposed between the housing and the lower side of the bobbin. The OIS guide ball **820** may be disposed between the AF carrier **210** and the OIS carrier **310** in an optical axis direction.

The OIS guide ball **820** may be disposed in the protruded portion **231** of the preload member **230.** The OIS guide ball **820** may be disposed in the groove **232** of the protruded portion **231.** The OIS guide ball **820** may be disposed in the groove **311** of the OIS moving unit **300.** The OIS guide ball **820** may be disposed between the groove **232** of the protruded portion **231** of the AF moving unit **200** and the groove 311 of the OIS moving unit **300.**

The OIS guide ball **820** may be disposed between the preload member **230** of the AF carrier **210** and the OIS carrier **310.** The OIS guide ball **820** may be pressurized between the AF carrier **210** and the OIS carrier **310** by the pressurizing force of the coil spring **830.** The preload member **230** may pressurize the OIS guide ball **820** upward during the process of being coupled to the holder member **220.** The preload member **230** may pressurize the OIS guide ball **820** toward the OIS carrier **310** during the process of being coupled to the holder member **220.** At this time, the OIS carrier **310** may pressurize the OIS guide ball **820** toward the preload member **230** by the restoring force of the coil spring **830.** Accordingly, the OIS guide ball **820** can be pressurized between the preload member **230** and the OIS carrier **310.**

The OIS guide ball **820** can guide the OIS moving unit **300** to move in an x-axis direction and a y-axis direction. The OIS guide ball **820** can guide the movement of the OIS moving unit **300** in an x-axis direction and a y-axis direction. The OIS guide ball **820** can guide the OIS carrier **310** to move in an x-axis direction and a y-axis direction perpendicular to the optical axis direction against the AF carrier **210.** That is, the OIS guide ball **820** can guide the OIS carrier **310** to move in an x-axis direction and a y-axis direction. That is, the OIS guide ball **820** can guide the movement in both an x-axis direction and a y-axis direction. For reference, in a first embodiment of the present invention in which the ball guiding an x-axis direction and the ball guiding a y-axis direction are provided as a single unit, the size of the lens actuator **10** can be minimized compared to the comparative example in which the ball guiding an x-axis direction and the ball guiding a y-axis direction are provided separately. In particular, the height of the lens actuator **10 in** an optical axis direction can be reduced. Through this, the height being protruded from the smartphone, that is, the shoulder height can be minimized. The OIS guide ball **820** may comprise a plurality of balls. The OIS guide ball **820** may comprise four balls.

In a modified embodiment, the OIS guide ball **820** may be provided with a separate ball that guides an x-axis driving and a ball that guides a y-axis driving.

The lens actuator **10** may comprise an elastic member. The elastic member may be formed to support OIS driving. The elastic member may support movement of the OIS moving unit **300.** The elastic member may be a 'supporting member'. The elastic member may be formed to pressurize the OIS guide ball **820.** The elastic member may be a 'pressurizing member'. The elastic member may be formed to guide both an OIS-x-axis driving and an OIS-y-axis driving with only the OIS guide ball **820.** The elastic member may have elasticity. The elastic member may be formed of metal.

The elastic member can pressurize the OIS guide ball 820 between the AF moving unit 200 and the OIS moving unit 300. The elastic member can pressurize the OIS moving unit 300 toward the AF moving unit 200. The elastic member can pressurize the AF moving unit 200 toward the OIS moving unit 300.

The lens actuator 10 may comprise a coil spring 830. The coil spring 830 may have elasticity. The coil spring 830 may connect the AF moving unit 200 and the OIS moving unit 300. The coil spring 830 may connect the protruded portion 312 of the OIS moving unit 300 and the AF moving unit 200. The coil spring 830 may connect the OIS moving unit 300 and the lower plate 221 of the AF moving unit 200. The coil spring 830 may connect the protruded portion 312 of the OIS moving unit 300 and the lower plate 221 of the AF moving unit 200. The coil spring 830 may connect the OIS carrier 310 and the AF carrier 210. The coil spring 830 can connect the OIS carrier 310 and the holder member 220.

The coil spring 830 can connect a first portion of the AF moving unit 200 and a first portion of the OIS moving unit 300. At this time, the first portion of the AF moving unit 200 and the first portion of the OIS moving unit 300 can be overlapped with each other in an optical axis direction. The coil spring 830 can be disposed to be long in lengthwise in an optical axis direction.

The coil spring 830 can connect the metal member 225 of the OIS moving unit 300 and the AF moving unit 200. The coil spring 830 can be coupled to the metal member 225 of the OIS moving unit 300 and the AF moving unit 200.

The coil spring 830 can be fixed to the OIS moving unit 300 by an adhesive. The coil spring 830 can be coupled to the metal member 225 by solder. The coil spring 830 can be soldered to the metal member 225. The coil spring 830 can be coupled to the metal member 225 by a conductive member.

The metal member 225 may comprise a hole or groove being coupled with the coil spring 830. The metal member 225 may comprise a hole **225-1** through which the coil spring 830 passes. The metal member 225 may comprise an additional U-shaped hole **225-2** being formed adjacent to the hole **225-1** through which the coil spring 830 passes. One of the holes **225-1** and **225-2** may be referred to as a 'first hole' and the other may be referred to as a 'second hole'.

The upper end portion of the coil spring **830** can be coupled with the OIS moving unit **300.** The upper end portion of the coil spring **830** can be connected to the OIS moving unit **300.** The upper end portion of the coil spring **830** can be disposed in the OIS moving unit **300.** The upper end portion of the coil spring **830** can be in contact with the OIS moving unit **300.** The upper end portion of the coil spring **830** can be fixed to the OIS moving unit **300.**

The lower end portion of the coil spring **830** can be coupled with the AF moving unit **200.** The lower end portion of the coil spring **830** can be connected to the AF moving unit **200.** The lower end portion of the coil spring **830** can be disposed with the AF moving unit **200.** The lower end portion of the coil spring **830** can be in contact with the AF moving unit **200.** The lower end portion of the coil spring **830** can be fixed to the AF moving unit **200.**

The coil spring **830** may be formed so that the AF moving unit **200** and the OIS moving unit 300 pressurize the OIS guide ball **820.** The OIS guide ball **820** may be pressurized between the AF moving unit **200** and the OIS moving unit **300** by the coil spring **830.** The OIS guide ball **820** may be brought into close contact with the AF moving unit **200** and the OIS moving unit **300** by the coil spring **830.**

The coil spring **830** may have a circular ring shape when viewed from above. The coil spring **830** may be formed by bending one strand to be overlapped multiple times in an optical axis direction.

The length of the coil spring **830** in an optical axis direction may be 56% to 96% of the distance between the upper surface of the metal member **225** and the lower surface of the cover **240.** The length of the coil spring **830** in an optical axis direction may be 66% to 86% of the distance between the upper surface of the metal member **225** and the lower surface of the cover **240.**

The coil spring **830** may comprise a plurality of coil springs. The coil spring **830** may comprise four coil springs. The coil spring **830** may comprise first to fourth coil springs. The OIS moving unit 300 may comprise first to fourth corners. At this time, the coil spring **830** may comprise first to fourth coil springs being disposed at the first to fourth corners of the OIS moving unit **300.** The first to fourth coil springs may be spaced apart from each other in a direction perpendicular to the optical axis direction.

As illustrated in FIG. 33a, the coil spring **830** according to a modified embodiment may comprise a hook portion **831.** The hook portion **831** may comprise a hook shape. The hook portion **831** may be a latch shape. The hook portion **831** may comprise a hook shape. The hook portion **831** may be a hook shape. The hook portion **831** may be formed on at least one of both ends of the coil spring **830.** That is, the hook portion **831** may be formed only on an upper end portion of the coil spring **830.** Or, the hook portion **831** may be formed only on a lower end portion of the coil spring **830.** Or, the hook portion **831** may be formed on both the upper end portion and the lower end portion of the coil spring **830.**

The hook portion **831** can be coupled with the OIS moving unit **300.** The OIS moving unit **300** may comprise a groove or hole in which the hook portion **831** of the coil spring **830** is caught.

The hook portion **831** can be coupled with the metal member **225** of the AF moving unit **200.** The metal member **225** of the AF moving unit **200** can comprise a groove or hole in which the hook portion **831** of the coil spring **830** is caught.

As illustrated in FIG. 33b, a coil spring **830** according to another modified embodiment may connect an elastic member **840** and an AF carrier **210.** The elastic member **840** may be an upper elastic member. The elastic member **840** may be an upper side elastic member. The elastic member **840** may comprise a spring. The elastic member **840** may be formed as a leaf spring. The elastic member **840** may have elasticity in at least a portion.

The elastic member **840** may comprise an inner side portion **841.** The inner side portion **841** may be coupled with the OIS carrier **310.** The elastic member **840** may comprise a coupling portion **842.** The coupling portion **842** may be coupled with the coil spring **830.** The elastic member **840** may comprise a connecting portion **843.** The connecting portion **843** may connect the inner side portion **841** and the coupling portion **842.**

The coupling portion **842** of the elastic member **840** and the coil spring **830** can be coupled through solder **850.** The lower end of the coil spring **830** can also be coupled to the metal member **225** of the AF carrier **210** through solder.

As illustrated in FIG. 33c, the coil spring **830** may comprise modified embodiments of various shapes. As illustrated in (a) of FIG. 33c, the coil spring **830a** may comprise a hook portion **831** at one end. However, the other end of the coil spring **830a** may be formed as an extension portion **832** being extended straight in a straight line shape. As illustrated in (b) of FIG. 33c, the coil spring **830b** may comprise a circular hook portion **833.** The circular hook portion **833** may be formed at each of both ends of the coil spring **830b.** At this time, the circular hook portion **833** may be a circular shape with an open end rather than a complete circular shape so that it can be hooked to another member. The hook portion **833** may comprise a rounded shape. As illustrated in (c) of FIG. 33, the coil spring **830c** may comprise a hook portion **834** having a shape bent one time. The hook portion **834** may be formed at each of the two ends of the coil spring **830c.** The hook portion **834** may be bent multiple times in a modified embodiment. The hook portion **834** may comprise a bent shape. The hook portion **834** may comprise a shape bent at a right angle. The hook portion **834** may comprise a curved shape.

The lens actuator **10** may comprise a pressurizing member. The pressurizing member may be an 'AF guide ball pressurizing member'. The pressurizing member may pressurize the AF guide ball **810.** The pressurizing member may be formed to pressurize the ball. The AF guide ball **810** pressurized by the pressurizing member may be sandwiched between the fixed unit **100** and the AF moving unit **200.** The AF guide ball **810** pressurized by the pressurizing member may be sandwiched between the base **110** and the AF carrier **210.** The pressurizing member may allow the AF guide ball **810** to be maintained in contact with the fixed unit **100** and the AF moving unit **200.** The pressurizing member may allow the AF guide ball **810** to be maintained in contact with the base **110** and the AF carrier **210.**

The lens actuator **10** may comprise a plate member **910.** The pressurizing member may comprise the plate member **910.** The plate member **910** may be disposed at the AF guide ball **810.** The plate member **910** may contact the AF guide ball **810.** The plate member **910** may be disposed at the elastic member **920.** The plate member **910** may be disposed in the base **110.** The plate member **910** may be disposed between the elastic member **920** and the AF guide ball **810.** The plate member **910** may pressurize the AF guide ball **810** toward the AF carrier **210** by the elastic member **920.** The plate member **910** may be disposed between the AF guide ball **810** and the fixed unit **100.** The plate member **910** can be disposed between the inner ball **811** and the pillar part **111** of the fixed unit **100.**

The lens actuator **10** may comprise an elastic member **920.** The pressurizing member may comprise the elastic member **920.** The elastic member **920** may be a spring. The elastic member **920** may be a tapered spring. The elastic member **920** may be disposed in the fixed unit **100.** The elastic member **920** may pressurize the AF guide ball **810** toward the AF moving unit **200.** The elastic member **920** may pressurize the plate member **910** toward the AF guide ball **810.** The elastic member **920** may be disposed between the plate member **910** and the fixed unit **100.** The elastic member **920** may push the plate member **910** against the fixed unit **100.** The elastic member **920** can pressurize the plate member **910** in an opposite direction of the fixed unit **100.** The elastic member **920** can be disposed between the plate member **910** and the pillar part **111** of the fixed unit **100.** The elastic member **920** can be disposed in the inner groove **111-1** of the fixed unit **100.** The elastic member **920** can pressurize the AF guide ball **810** between the fixed unit **100** and the AF moving unit **200.**

In a modified embodiment, the elastic member **920** may be disposed in the AF moving unit **200.** At this time, the elastic member **920** may pressurize the AF guide ball **810** toward the fixed unit **100.** The elastic member **920** may be disposed in one of the fixed unit **100** and the AF moving unit **200** to pressurize the AF guide ball **810** toward the other of the fixed unit **100** and the AF moving unit **200.** The elastic member **920** may pressurize the plate member **910.** The elastic member **920** may be disposed between the plate member **910** and the base **110.** The elastic member **920** may be disposed between the AF guide ball **810** and the base **110.** The elastic member **920** may be disposed in the base **110.** The elastic member **920** can be disposed in the inner groove **111-1** of the base **110.** The elastic member **920** can pressurize the AF guide ball **810** toward the AF carrier **210.** Through this, the AF guide ball **810** can be maintained in contact with the plate member **910** and the AF carrier **210.**

The elastic member **920** may comprise a bent portion. The bent portion may comprise a bent shape. The bent portion may comprise a plurality of bent portions. The bent portion may comprise three bent portions. The elastic member **920** may be bent at least three times. The elastic member **920** may comprise an upper bent portion **921.** The elastic member **920** may comprise a lower bent portion **922.** The elastic member **920** may comprise a connecting bent portion **923.** The connecting bent portion **923** may be disposed between the upper bent portion **921** and the lower bent portion **922.** The upper bent portion **921** may form an obtuse angle. The lower bent portion **922** may form an obtuse angle. The connecting bent portion **923** may form an obtuse angle. The upper bent portion **921** may be disposed in the fixed unit **100.** The lower bent portion **922** may be disposed in the fixed unit **100.** The connecting bent portion **923** may be disposed in the plate member **910.** Through this structure, the elastic member **920** may push the plate member **910** against the fixed unit **100.** The connecting bent portion **923** may be in contact with the plate member 910 and pressurize the plate member **910** toward the AF guide ball **810.**

The height of the point where the elastic member **920** pressurizes the plate member **910** may be lower than the height of the ball that is disposed lower between the inner uppermost ball **811-1** and the outer uppermost ball **812-1** and higher than the height of the ball being disposed higher between the inner lowermost ball **811-2** and the outer lowermost ball **812-2.** More specifically, as shown in (a) of FIG. 44, when the AF moving unit **200** moves upward, the height **b** of the point where the elastic member **920** the plate member **910** may be higher than the height a of the ball that is disposed higher between the inner lowermost ball **422** and the outer lowermost ball **412.** A gap c may exist in the height between the two points. In addition, as shown in (b) of FIG. 44, when the AF moving unit **200** moves downward, the height e of the point where the elastic member **920** pressurizes the plate member **910** may be lower than the height **d** of the ball that is disposed lower between the inner uppermost ball **421** and the outer uppermost ball **411.** A gap f may exist between the two points. Through this, the generation of a moment being generated as the elastic member **920** pressurizes the plate member **910** can be prevented or minimized. In other words, the phenomenon in that the plate member **910** is tilted or detached can be prevented.

The lens actuator **10** may comprise a reinforcing member **930.** The reinforcing member **930** may be disposed in the base **110.** The reinforcing member **930** may be disposed to reinforce the strength of the base **110.** The reinforcing member **930** may prevent damage to the base **110.** The reinforcing member **930** may prevent damage to the pillar part **111** of the base **110.** The reinforcing member **930** may prevent damage to the outer wall part **112** of the base **110.** The reinforcing member **930** may have elasticity. The reinforcing member **930** may be formed of metal. The reinforcing member **930** may comprise a shape that is bent at least twice. The reinforcing member **930** may be formed in a 'c' shape when viewed from above. The reinforcing member **930** can be opened inward.

The reinforcing member **930** may comprise an inner side portion **931.** The inner side portion **931** may be disposed on an opposite surface of the inner groove **111-1** of the pillar part **111** of the fixed unit **100.** The reinforcing member **930** may comprise an outer side portion **932.** The outer side portion **932** may be disposed on an opposite surface of the outer groove **112-1** of the outer wall part 112 of the fixed unit **100.** The reinforcing member **930** may comprise a connecting portion **933.** The connecting portion **933** may connect the inner side portion 931 and the outer side portion **932.**

The lens actuator **10** may comprise a cover **940.** The cover **940** may be disposed on the AF guide ball **810.** The cover **940** may be overlapped with the AF guide ball **810** in an optical axis direction. The cover **940** may be overlapped with the inner ball **811** in an optical axis direction. The cover **940** may be overlapped with the outer ball **812** in an optical axis direction. The cover **940** may be disposed on the inner groove **224-1** and the outer groove **224-2** of the AF carrier **210** to prevent the AF guide ball **810** from being separated upward.

In a first embodiment of the present invention, one side of the wire **850** can be coupled to the AF moving unit **200** that is fixed during OIS driving, thereby reducing the characteristic of the wire **850** vibrating as a point mass.

In a first embodiment of the present invention, the base **110,** preload member **230,** inner substrate **720,** holder member **220,** and OIS carrier **310** may be disposed in this order from the bottom up. In a first embodiment of the present invention, the base **110,** preload member **230,** inner substrate **720,** holder member **220,** and OIS carrier **310** may be laminated in this order from the bottom up. In a first embodiment of the present invention, a stable coupling surface with the lens module **20** can be secured through the lamination direction. In a first embodiment of the present invention, the rib of the lens module **20** can be disposed in the groove **313** of the OIS carrier **310.**

In a first embodiment of the present invention, two coils may be provided for each of the OIS-x driving unit **500** and the OIS-y driving unit **600.** By forming the distribution of the driving force into two points on the outside, the driving linearity may be improved. The magnets of each of the OIS-x driving unit **500** and the OIS-y driving unit **600** may be formed with four poles. Or, a total of four magnets may be formed, with two each of the two poles.

According to a first embodiment of the present invention, the attraction and repulsive forces between the AF magnet **410** and the OIS-x magnet **510** or the AF magnet **410** and the OIS-y magnet **610** can be reduced. Accordingly, the driving noise can be reduced.

Hereinafter, the configuration of a lens actuator according to a modified embodiment is described with reference to drawings.

FIG. 34 is a cross-sectional view of a lens actuator according to a modified embodiment, cut perpendicular to an optical axis and viewed from above. FIG. 35 is a bottom perspective view of a driving unit of a lens actuator according to a modified embodiment.

In a modified embodiment, the OIS-x magnet **510,** OIS-x coil **520,** OIS-y magnet **610,** and OIS-y coil **620** may be changed compared to the first embodiment of the present invention. The description in the first embodiment of the present invention may be applied analogously to the configurations of the modified embodiment that are not described below.

The OIS-x magnet **510** may comprise a first magnet portion **511.** The first magnet portion **511** may comprise an N pole and an S pole. The first magnet portion **511** may be disposed on a first side surface of the OIS moving unit **300.** The first magnet portion **511** may comprise an inner surface being disposed on a first side surface of the OIS moving unit **300** and an outer surface opposite to the inner surface. The inner surface of the first magnet portion **511** may be formed as an N pole in its entirety. The outer surface of the first magnet portion **511** may be formed as an S pole in its entirety. Or, conversely, the inner surface of the first magnet portion **511** may be an S pole and the outer surface may be an N pole.

The OIS-x magnet **510** may comprise a second magnet portion **512.** The second magnet portion **512** may comprise a south pole and a north pole. The second magnet portion **512** may be disposed on a first side surface of the OIS moving unit **300.** The second magnet portion **512** may comprise an inner surface disposed on a first side surface of the OIS moving unit **300** and an outer surface opposite the inner surface. The inner surface of the second magnet portion **512** may be formed as a south pole in its entirety. The outer surface of the second magnet portion **512** may be formed as a north pole in its entirety. Or, conversely, the inner surface of the second magnet portion **512** may be a north pole and the outer surface may be a south pole.

The first magnet portion **511** and the second magnet portion **512** may be overlapped with each other in a y-axis direction perpendicular to the optical axis direction and the x-axis direction. The first magnet portion **511** and the second magnet portion **512** may be formed to have the same size. The first magnet portion **511** and the second magnet portion **512** may be formed to have the same shape.

In a first embodiment of the present invention, the first magnet portion **511** and the second magnet portion **512** of the OIS-x magnet **510** may have outer surfaces formed with different polarities. However, in a modified embodiment, the first magnet portion **511** and the second magnet portion **512** of the OIS-x magnet **510** may have outer surfaces formed with the same polarity.

The polarity of the first magnet portion **511** facing the first coil portion **521** and the polarity of the second magnet portion **512** facing the second coil portion **522** may be different from each other. The polarity of the entire area of the first magnet portion **511** facing the first coil portion **521** may be a south pole. The polarity of the entire area of the first magnet portion **511** facing the first coil portion **521** may be a single polarity. The polarity of the entire area of the second magnet portion **512** facing the second coil portion **522** may be a north pole. The polarity of the entire area of the second magnet portion **512** facing the second coil portion **522** may be a single polarity.

The OIS-x magnet **510** may comprise a neutral portion **513.** The neutral portion **513** may be disposed between the first magnet portion **511** and the second magnet portion **512.** The neutral portion **513** may have a lower polarity than the first magnet portion **511** and the second magnet portion **512.** The neutral portion **513** may not have a polarity.

In a first embodiment of the present invention, the first magnet portion **511,** the second magnet portion **512,** and the neutral portion **513** may be formed integrally. That is, the first magnet portion **511,** the second magnet portion **512,** and the neutral portion **513** may be a single four-pole magnetized magnet.

The OIS-x coil **520** may comprise a first coil portion **521.** The first coil portion **521** may interact with the first magnet portion **511.** The first coil portion **521** may be overlapped with the first magnet portion **511** in an x-axis direction. That is, the first coil portion **521** and the first magnet portion **511** may be overlapped with each other in a direction that matches the driving direction due to the interaction.

The OIS-x coil **520** may comprise a second coil portion **522.** The second coil portion **522** may interact with the second magnet portion **512.** The second coil portion **522** may be overlapped with the second magnet portion **512** in an x-axis direction. That is, the second coil portion **522** and the second magnet portion **512** may be overlapped with each other in a direction that matches the driving direction due to the interaction.

The OIS-x coil **520** may comprise two coils. The OIS-x coil **520** may comprise two bundles of coils. The OIS-x coil **520** may comprise two ring-shaped coils. The OIS-x coil **520** may comprise two coil units. The OIS-x coil **520** may comprise two split coils. The OIS-x coil **520** may be separated into two coils. The OIS-x coil **520** may be separated into two regions. Each of the first coil portion **521** and the second coil portion **522** may comprise a ring shape. The first coil portion **521** and the second coil portion **522** can be formed as separate coils.

The first coil portion **521** and the second coil portion **522** can be connected. The first coil portion **521** can be electrically connected to the second coil portion **522.** At this time, the winding direction of the first coil portion **521** can be opposite to the winding direction of the second coil portion **522.** In this case, when a current is applied, the direction of the electromagnetic force induced in s first coil portion **521** and s second coil portion **522** can be opposite.

The OIS-y magnet **610** may comprise a third magnet portion **611.** The third magnet portion **611** may comprise an N pole and an S pole. The third magnet portion **611** may be disposed on a fourth side surface of the OIS moving unit **300.** The third magnet portion **611** may comprise an inner surface being disposed on a fourth side surface of the OIS moving unit **300** and an outer surface opposite to the inner surface. The inner surface of the third magnet portion **611** may be formed as an N pole in its entirety. The outer surface of the third magnet portion **611** may be formed as an S pole in its entirety. Or, conversely, the inner surface of the third magnet portion **611** may be an S pole and the outer surface may be an N pole.

The OIS-y magnet **610** may comprise a fourth magnet portion **612.** The fourth magnet portion **612** may comprise a south pole and a north pole. The fourth magnet portion **612** may be disposed on a fourth side surface of the OIS moving unit **300.** The fourth magnet portion **612** may comprise an inner surface being disposed on a fourth side surface of the OIS moving unit **300** and an outer surface opposite to the inner surface. The inner surface of the fourth magnet portion **612** may be formed as a south pole in its entirety. The outer surface of the fourth magnet portion **612** may be formed as a north pole in its entirety. Or, conversely, the inner surface of the fourth magnet portion **612** may be a north pole and the outer surface may be a south pole.

The third magnet portion **611** and the fourth magnet portion **612** may be overlapped with each other in a y-axis direction perpendicular to the optical axis direction and the x-axis direction. The third magnet portion **611** and the fourth magnet portion **612** may be formed to have the same size. The third magnet portion **611** and the fourth magnet portion **612** may be formed to have the same shape.

In a first embodiment of the present invention, the third magnet portion **611** and the fourth magnet portion **612** of the OIS-y magnet **610** may have outer surfaces formed with different polarities. However, in a modified embodiment, the third magnet portion **611** and the fourth magnet portion **612** of the OIS-y magnet **610** may have outer surfaces formed with the same polarity.

The polarity of the third magnet portion **611** facing the third coil portion **621** and the polarity of the fourth magnet portion **612** facing the fourth coil portion **622** may be different from each other. The polarity of the entire area of the third magnet portion **611** facing the third coil portion **621** may be a south pole. The polarity of the entire area of the third magnet portion **611** facing the third coil portion **621** may be a single polarity. The polarity of the entire area of the fourth magnet portion **612** facing the fourth coil portion **622** may be a north pole. The polarity of the entire area of the fourth magnet portion **612** facing the fourth coil portion **622** may be a single polarity.

The OIS-y magnet **610** may comprise a neutral portion **613.** The neutral portion **613** may be disposed between the third magnet portion **611** and the fourth magnet portion **612.** The neutral portion **613** may have a lower polarity than the third magnet portion **611** and the fourth magnet portion **612.** The neutral portion **613** may not have a polarity.

In the first embodiment of the present invention, the third magnet portion **611,** the fourth magnet portion **612,** and the neutral portion **613** may be formed integrally. That is, the third magnet portion **611,** the fourth magnet portion **612,** and the neutral portion **613** may be a single four-pole magnetized magnet.

The OIS-y coil **620** may comprise a third coil portion **621.** The third coil portion **621** may interact with the third magnet portion **611.** The third coil portion **621** may be overlapped with the third magnet portion **611** in an x-axis direction. That is, the third coil portion **621** and the third magnet portion **611** may be overlapped with each other in a direction that matches the driving direction due to the interaction.

The OIS-y coil **620** may comprise a fourth coil portion **622.** The fourth coil portion **622** may interact with the fourth magnet portion **612.** The fourth coil portion **622** may be overlapped with the fourth magnet portion **612** in an x-axis direction. That is, the fourth coil portion **622** and the fourth magnet portion **612** may be overlapped with each other in a direction that matches the driving direction due to the interaction.

The OIS-y coil **620** may comprise two coils. The OIS-y coil **620** may comprise two bundles of coils. The OIS-y coil **620** may comprise two ring-shaped coils. The OIS-y coil **620** may comprise two coil units. The OIS-y coil **620** may comprise two split coils. The OIS-y coil **620** may be separated into two coils. The OIS-y coil **620** may be separated into two regions. Each of the third coil portion **621** and the fourth coil portion **622** may comprise a ring shape. The third coil portion **621** and the fourth coil portion **622** can be formed as separate coils.

The third coil portion **621** and the fourth coil portion **622** can be connected. The third coil portion **621** can be electrically connected to the fourth coil portion **622.** At this time, the winding direction of the third coil portion **621** can be opposite to the winding direction of the fourth coil portion **622.** In this case, when a current is applied, the direction of the electromagnetic force induced in the third coil portion **621** and the fourth coil portion **622** can be opposite.

Hereinafter, the auto focus (AF) operation of the lens actuator according to a first embodiment of the present invention will be described with reference to the drawings.

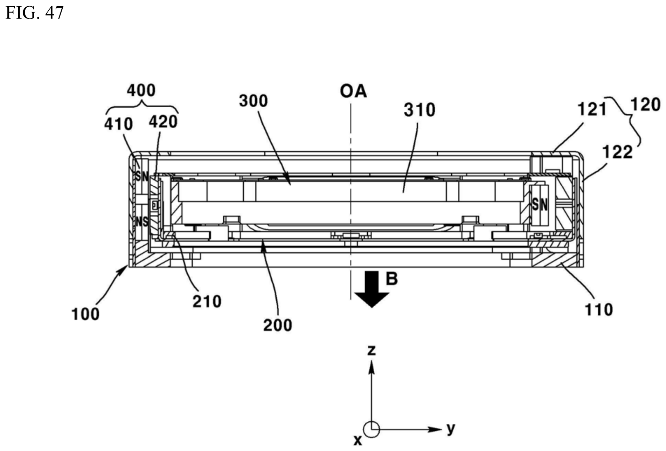

FIGS. 45 to 47 are drawings for explaining an autofocus driving of a lens actuator according to a first embodiment of the present invention. FIG. 45 is a cross-sectional view illustrating a moving unit in an initial state where no current is applied to an AF coil. FIG. 46 is a cross-sectional view illustrating a moving unit moving upward in an optical axis direction when a positive current is applied to an AF coil. FIG. 47 is a cross-sectional view illustrating a state in which a reverse current is applied to an AF coil and a moving unit moves downward in an optical axis direction.

As illustrated in FIG. 45, the moving unit may be disposed at a position spaced apart from both the upper plate **121** of the cover **120** and the base **110** in an initial position where no current is applied to the AF coil **420.** At this time, the moving unit may be an AF moving unit **200.** In addition, the moving unit may comprise an AF moving unit **200** and an OIS moving unit **300.**

When a positive current is applied to the AF coil **420,** the AF coil **420** can move upward in an optical axis direction due to the electromagnetic interaction between the AF coil **420** and the AF magnet **410** (See **A** of FIG. 46). At this time, the AF carrier **210** can move upward in an optical axis direction together with the AF coil **420.** Furthermore, the OIS carrier **310** and the lens can move upward in an optical axis direction together with the AF carrier **210.** Accordingly, the distance between the lens and the image sensor can be changed, so that the focus of the image formed on the image sensor through the lens can be adjusted.

When a reverse current is applied to the AF coil **420,** the AF coil **420** can move downward in an optical axis direction due to the electromagnetic interaction between the AF coil **420** and the AF magnet **410** (See **B** of FIG. 47). At this time, the AF carrier **210** can move downward in an optical axis direction together with the AF coil **420.** Furthermore, the OIS carrier **310** and the lens can move downward in an optical axis direction together with the AF carrier **210.** Accordingly, the distance between the lens and the image sensor can be changed, so that the focus of the image being formed on the image sensor through the lens can be adjusted.

Meanwhile, during the movement of the AF coil **420,** the AF sensor **430** moves together with the AF coil **420** and detects the strength of the magnetic field of the AF magnet **410** to detect the amount of movement or position of the lens in an optical axis direction. The amount of movement or position of the lens in an optical axis direction detected by the AF sensor **430** can be used for auto focus feedback control.

Hereinafter, the handshake correction (OIS, optical image stabilization) operation of the lens actuator according to a first embodiment of the present invention will be described with reference to the drawings.

FIGS. 48 to 50 are diagrams for explaining a handshake correction driving of the lens actuator according to a first embodiment of the present invention. FIG. 48 is a cross-sectional view illustrating the appearance of an OIS moving unit in an initial state in which no current is applied to an OIS-x coil and an OIS-y coil. FIG. 49 is a cross-sectional view illustrating the appearance in which an OIS moving unit moves in an x-axis direction perpendicular to an optical axis when a current is applied to an OIS-x coil. FIG. 50 is a cross-sectional view illustrating the appearance in which an OIS moving unit moves in a y-axis direction perpendicular to both an optical axis and an x-axis when a current is applied to an OIS-y coil.

As illustrated in FIG. 48, the moving unit may be disposed at an initial position in a state in which no current is applied to the OIS-x coil **520** and the OIS-y coil **620.** At this time, the moving unit may be the OIS moving unit **300.**

When current is applied to the OIS-x coil **520,** the OIS-x magnet **510** can move in an x-axis direction perpendicular to the optical axis due to the electromagnetic interaction between the OIS-x coil **520** and the OIS-x magnet **510** (See **A** of FIG. 49). At this time, the OIS carrier **310** can move in an x-axis direction together with the OIS-x magnet **510.** Furthermore, the lens can move in an x-axis direction together with the OIS carrier **310.** More specifically, when a positive current is applied to the OIS-x coil **520,** the OIS-x magnet **510,** the OIS carrier **310,** and the lens can move in one direction on the x-axis. In addition, when a reverse current is applied to the OIS-x coil **520,** the OIS-x magnet **510,** the OIS carrier **310,** and the lens can move in the other direction along the x-axis.

When a current is applied to an OIS-y coil **620,** the OIS-y magnet **610** can move in a y-axis direction perpendicular to the optical axis due to the electromagnetic interaction between the OIS-y coil **620** and the OIS-y magnet **610** (See **B** of FIG. 50). At this time, the OIS carrier **310** can move in a y-axis direction together with the OIS-y magnet **610.** Furthermore, the lens can move in a y-axis direction together with the OIS carrier **310.** More specifically, when a positive current is applied to the OIS-y coil **620,** the OIS-y magnet **610,** the OIS carrier **310,** and the lens can move in one direction on a y-axis. In addition, when a reverse current is applied to the OIS-y coil **620,** the OIS-y magnet **610,** the OIS carrier **310,** and the lens can move in the other direction on a y-axis.

Meanwhile, the OIS-x sensor **530** can detect the amount of movement or position of the OIS-x magnet **510** by detecting the strength of the magnetic field of the OIS-x magnet **510.** The amount of movement or position detected by the OIS-x sensor **530** can be used for x-axis direction handshake correction feedback control. The OIS-y sensor **630** can detect the amount of movement or position of the OIS-y magnet **610** by detecting the strength of the magnetic field of the OIS-y magnet **610.** The amount of movement or position detected by the OIS-y sensor **630** can be used for y-axis direction handshake correction feedback control.

Hereinafter, a camera device according to a first embodiment of the present invention will be described with reference to the drawings.

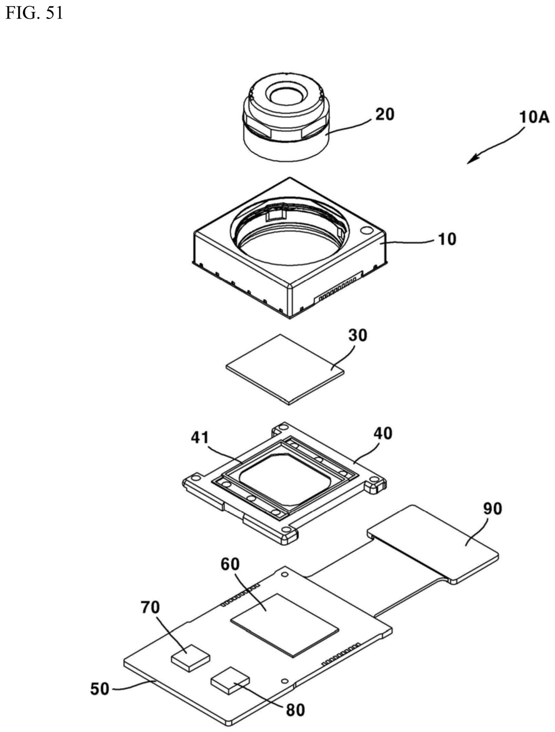

FIG. 51 is an exploded perspective view of a camera device according to a first embodiment of the present invention.

The camera device **10A** may comprise a camera module.

The camera device **10A** may comprise a lens module **20.** The lens module **20** may comprise at least one lens. The lens may be disposed corresponding to the image sensor **60.** The lens module **20** may comprise a lens and a barrel. The lens module **20** may be coupled to the OIS carrier **310** of the lens actuator **10.** The lens module **20** may be coupled to the OIS carrier **310** by screw coupling and/or an adhesive. The lens module **20** may move integrally with the OIS carrier **310.**

The camera device **10A** may comprise a filter **30.** The filter **30** may block light of a specific frequency band from passing through the lens module **20** from being incident on the image sensor **60.** The filter **30** may be disposed parallel to an x-y plane. The filter **30** may be disposed between the lens module **20** and the image sensor **60.** The filter **30** may be disposed in the sensor base **40.** In a modified embodiment, the filter **30** may be disposed in the base **110.** The filter **30** may comprise an infrared filter. The infrared filter may block light in the infrared region from being incident on the image sensor **60.**

The camera device **10A** may comprise a sensor base **40.** The sensor base **40** may be disposed between the lens actuator **10** and the printed circuit board **50.** The sensor base **40** may comprise a protruded portion **41** in which a filter **30** is disposed. An opening may be formed in a portion of the sensor base **40** in which the filter **30** is disposed so that light passing through the filter **30** may be incident on the image sensor **60.** An adhesive member may couple or attach the base **110** of the lens actuator **10** to the sensor base **40.** The adhesive member may additionally serve to prevent foreign substances from entering the interior of the lens actuator 10. The adhesive member may comprise at least one among an epoxy, a thermosetting adhesive, and an ultraviolet-curable adhesive.

The camera device **10A** may comprise a printed circuit board (PCB) **50.** The printed circuit board **50** may be a substrate or a circuit board. A lens actuator **10** may be disposed in the printed circuit board **50.** A sensor base **40** may be disposed between the printed circuit board **50** and the lens actuator **10.** The printed circuit board **50** may be electrically connected to the lens actuator **10.** An image sensor **60** may be disposed on the printed circuit board **50.** Various circuits, elements, control units, and the like may be provided on the printed circuit board **50** to convert an image being formed on the image sensor **60** into an electrical signal and transmit it to an external device.

The camera device **10A** may comprise an image sensor **60.** The image sensor **60** may be a configuration in which a light passing through a lens and a filter **30** is incident thereon to form an image. The image sensor **60** may be mounted on a printed circuit board **50.** The image sensor **60** may be electrically connected to the printed circuit board **50.** For example, the image sensor **60** may be coupled to the printed circuit board **50** by surface mounting technology (SMT). As another example, the image sensor **60** may be coupled to the printed circuit board **50** by flip chip technology. The image sensor **60** may be disposed such that its optical axis is aligned with that of the lens. That is, the optical axis of the image sensor **60** and the optical axis of the lens may be aligned. The image sensor **60** can convert light irradiated to the effective image area of the image sensor **60** into an electrical signal. The image sensor **60** can be any one among a charge coupled device (CCD), a metal oxide semi-conductor (MOS), a CPD, and a CID.

The camera device **10A** may comprise a motion sensor **70.** The motion sensor **70** may be mounted on a printed circuit board **50.** The motion sensor **70** may be electrically connected to the control unit **80** through a circuit pattern being provided on the printed circuit board **50.** The motion sensor **70** may output rotational velocity information due to the movement of the camera device **10A.** The motion sensor **70** may comprise a two-axis or three-axis gyro sensor or an angular velocity sensor.

The camera device **10A** may comprise a control unit **80.** The control unit **80** may be disposed on a printed circuit board **50.** The control unit **80** may be electrically connected to a coil **330** of a lens driving device **10.** The control unit **80** may individually control the direction, intensity, amplitude, and the like of the current supplied to the coil **330.** The control unit **80** may control the lens driving device **10** to perform an auto focus function and/or a shake correction function. Furthermore, the control unit **80** may perform auto focus feedback control and/or handshake correction feedback control for the lens driving device **10.**

The camera device **10A** may comprise a connector **90.** The connector **90** may be electrically connected to the printed circuit board **50.** The connector **90** may comprise a port for electrically connecting to an external device.

Hereinafter, an optical instrument according to a first embodiment of the present invention will be described with reference to the drawings.

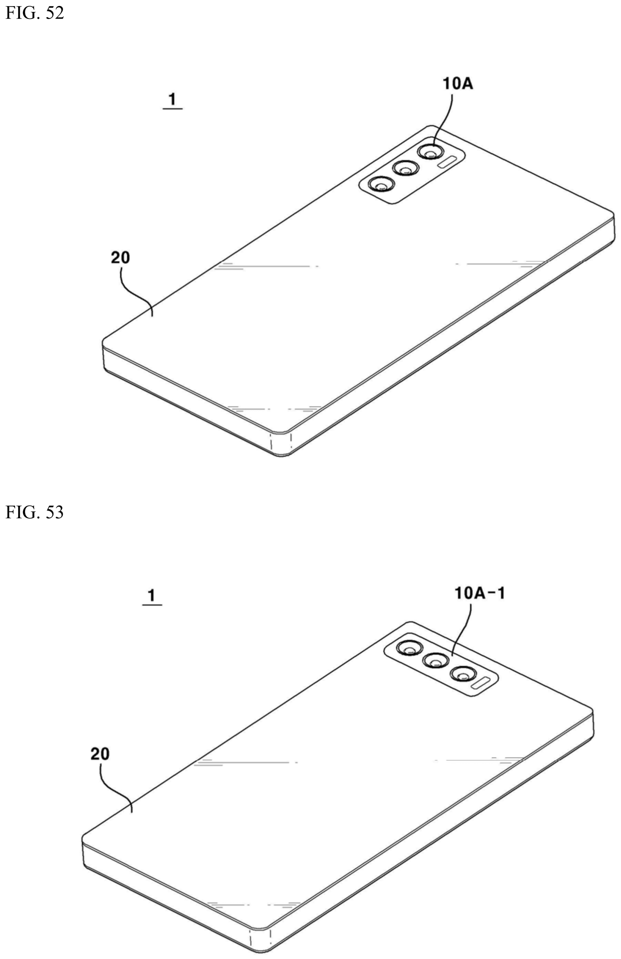

FIG. 52 is a perspective view of an optical instrument according to a first embodiment of the present invention. FIG. 53 is a perspective view of an optical instrument according to a modified embodiment.

The optical instrument 1 may comprise at least one among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optical instrument **1** may comprise any device for photographing videos or pictures.

The optical instrument **1** may comprise a main body **20.** The optical instrument **1** may comprise a camera device **10A.** The camera device **10A** may be disposed in the main body **20.** The camera device **10A** may capture a subject. The optical instrument **1** may comprise a display. The display may be disposed in the main body **20.** The display may output one or more of an image and a video captured by the camera device **10A.** The display may be disposed on a first surface of the main body **20.** The camera device **10A** may be disposed on one or more of the first surface of the main body **20** and the second surface opposite to the first surface. As illustrated in FIG. 52, in the camera device **10A,** a triple camera may be disposed in a vertical direction. As illustrated in FIG. 53, in the camera device **10A-1,** a triple camera may be disposed in a horizontal direction.

Hereinafter, the configuration of a lens actuator according to a second embodiment of the present invention is described with reference to the drawings.

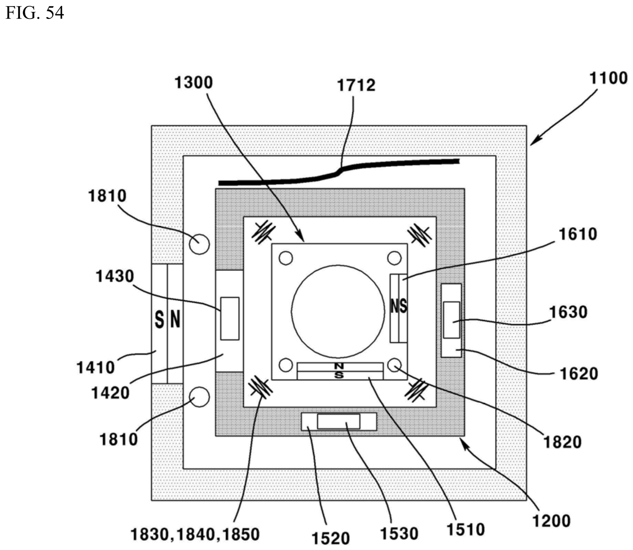

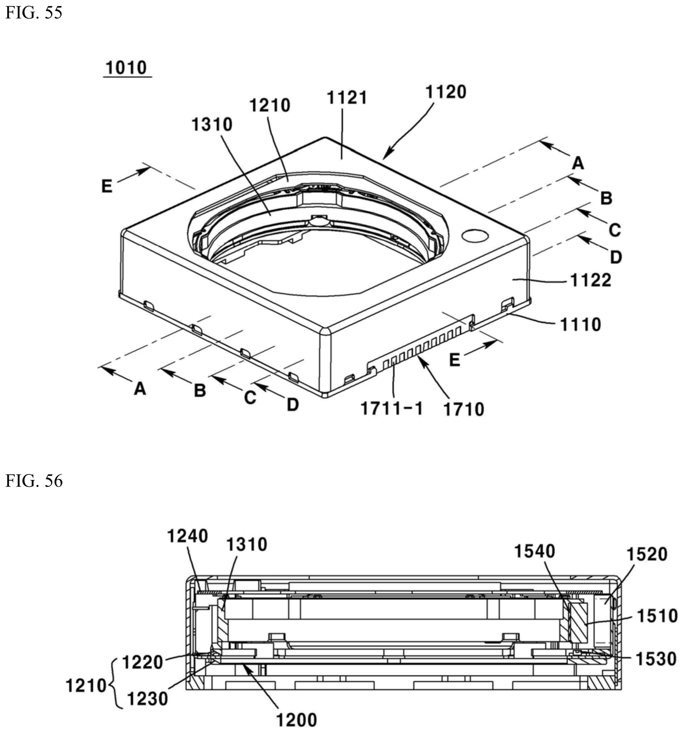

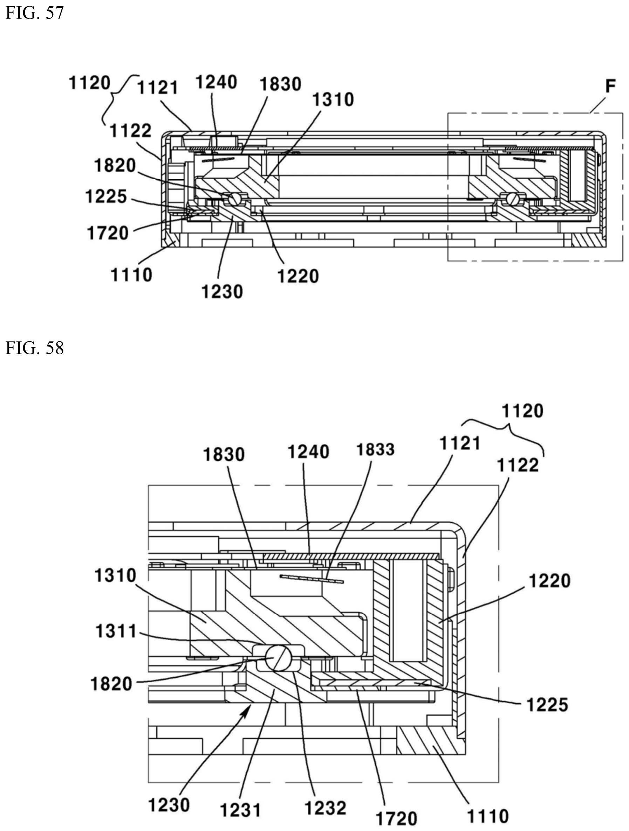

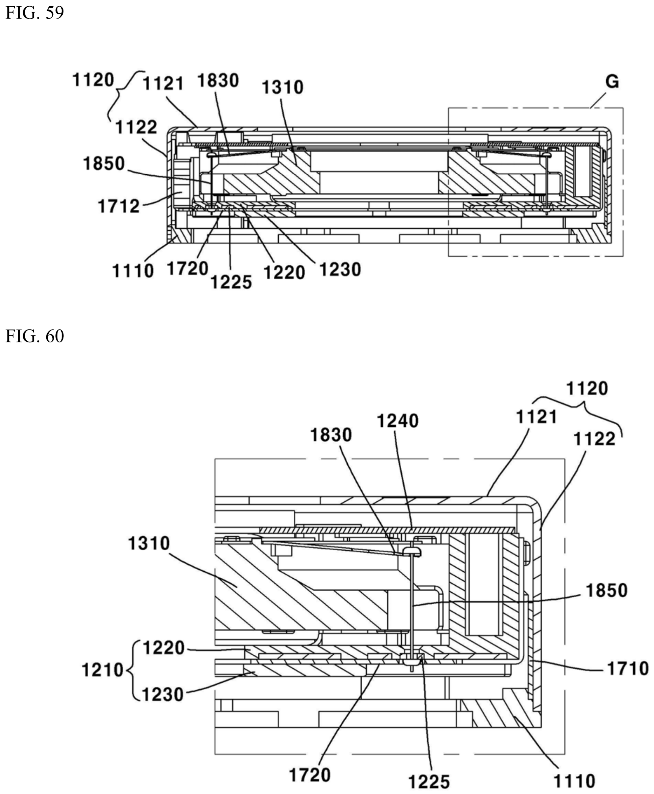

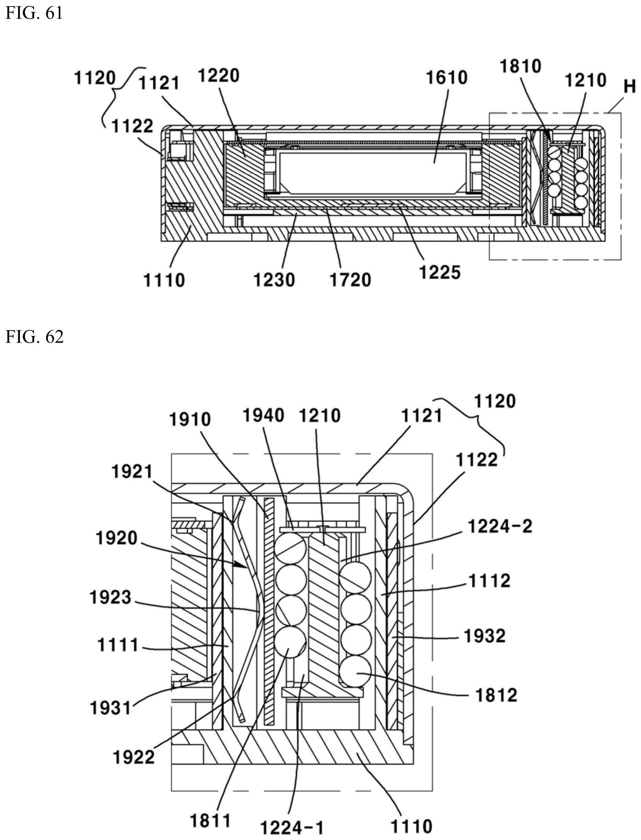

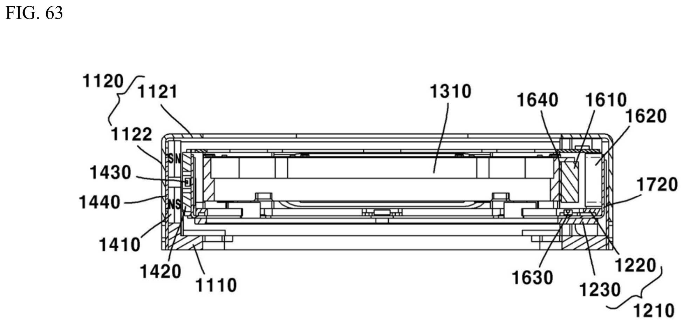

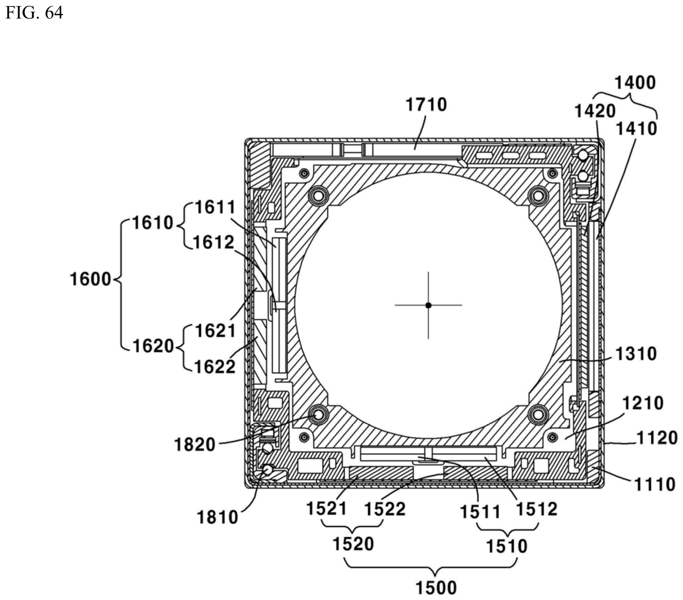

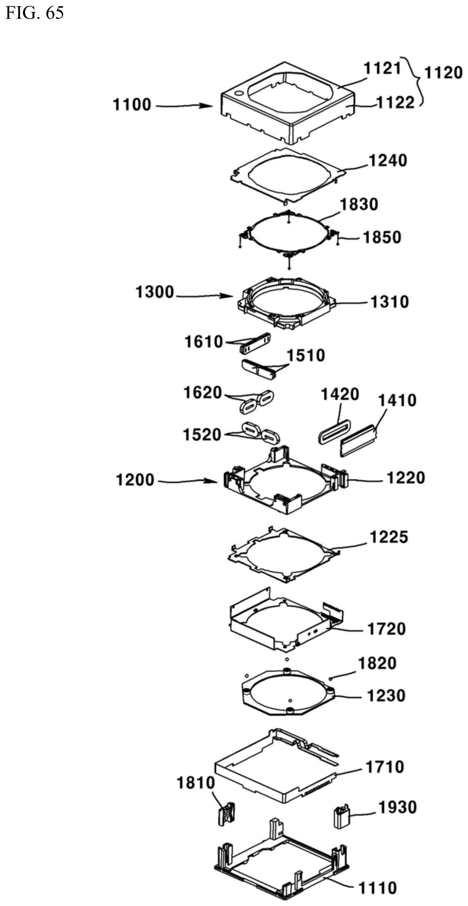

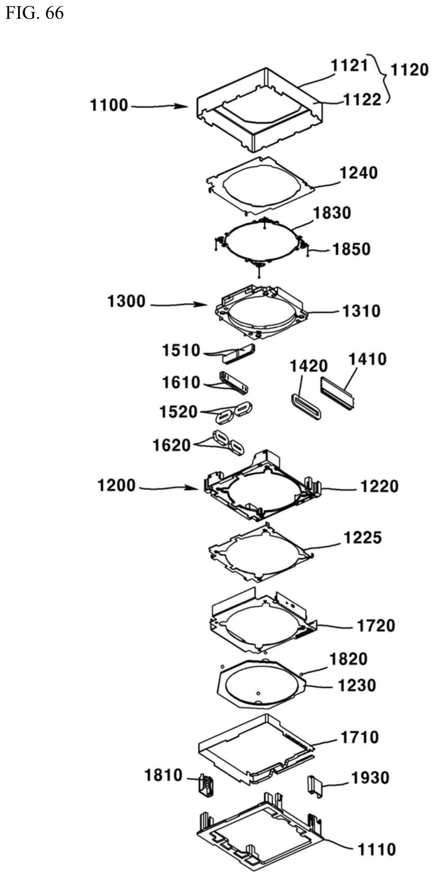

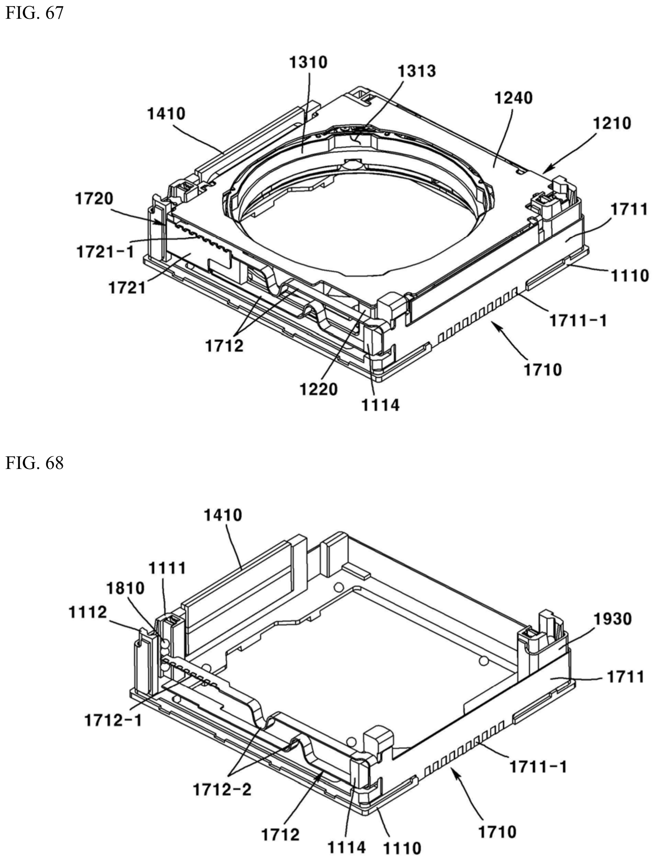

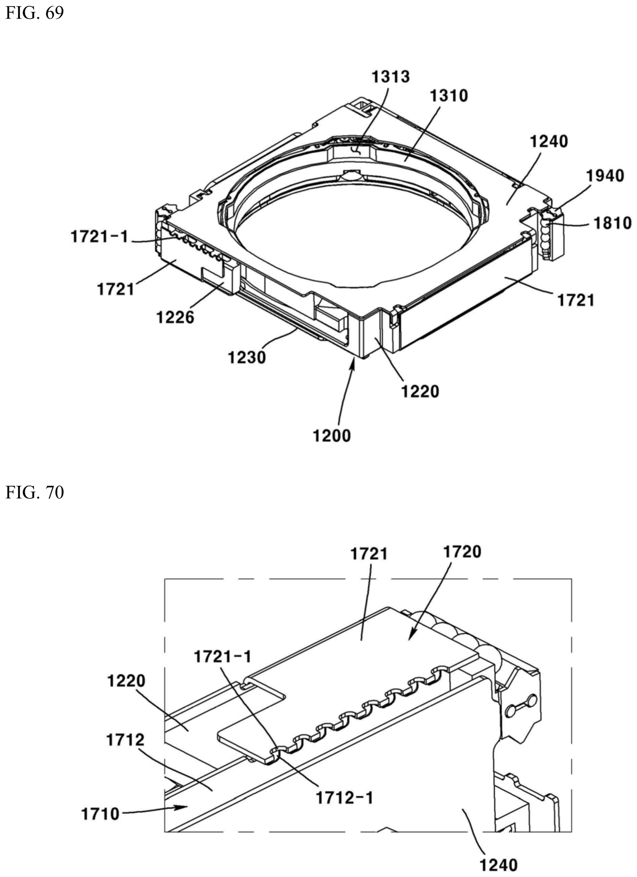

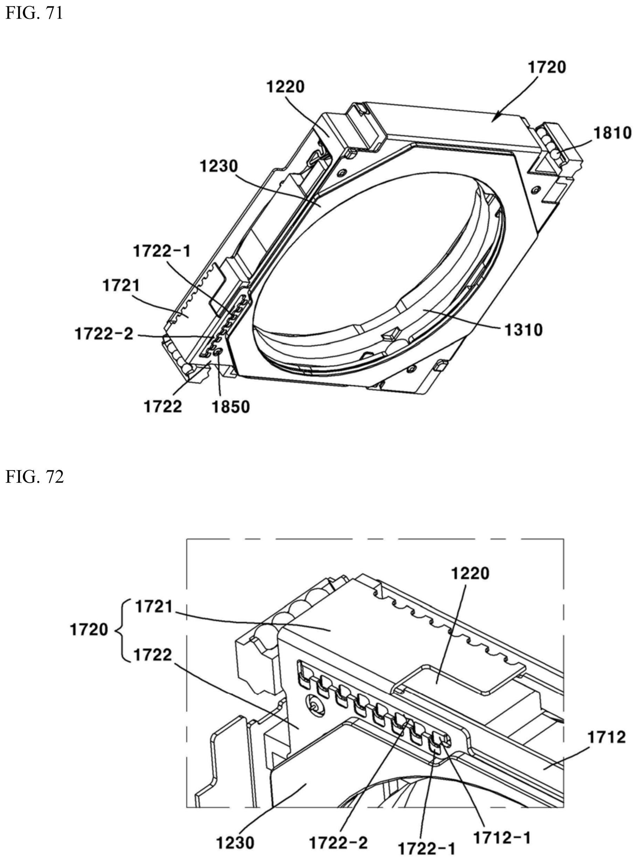

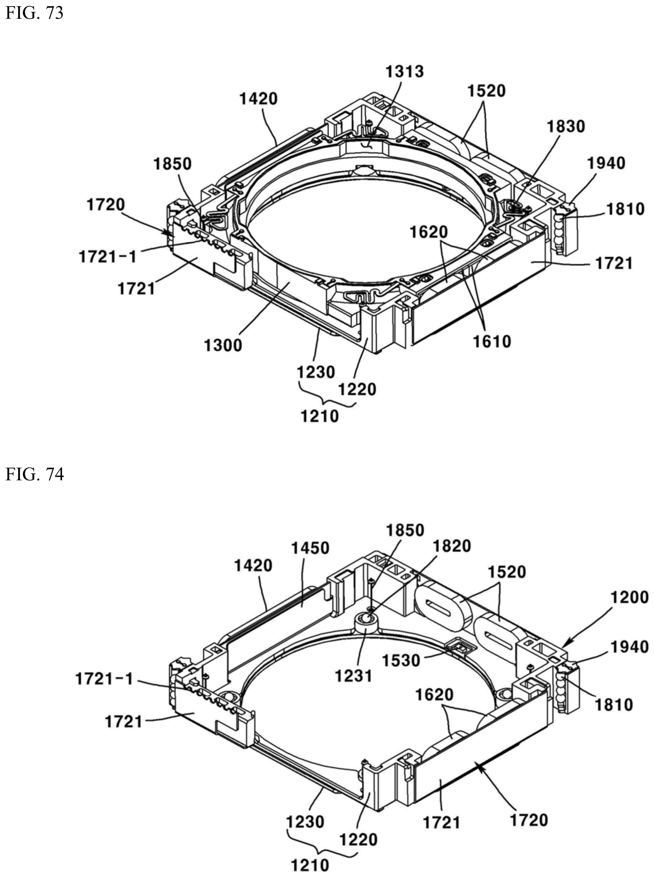

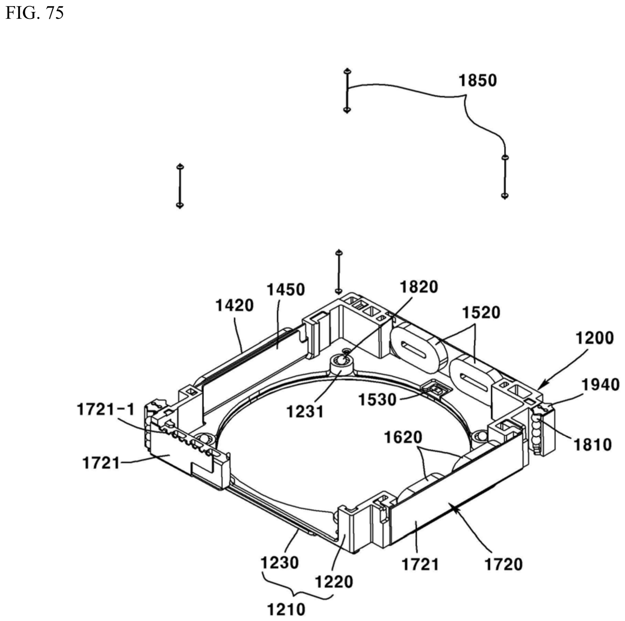

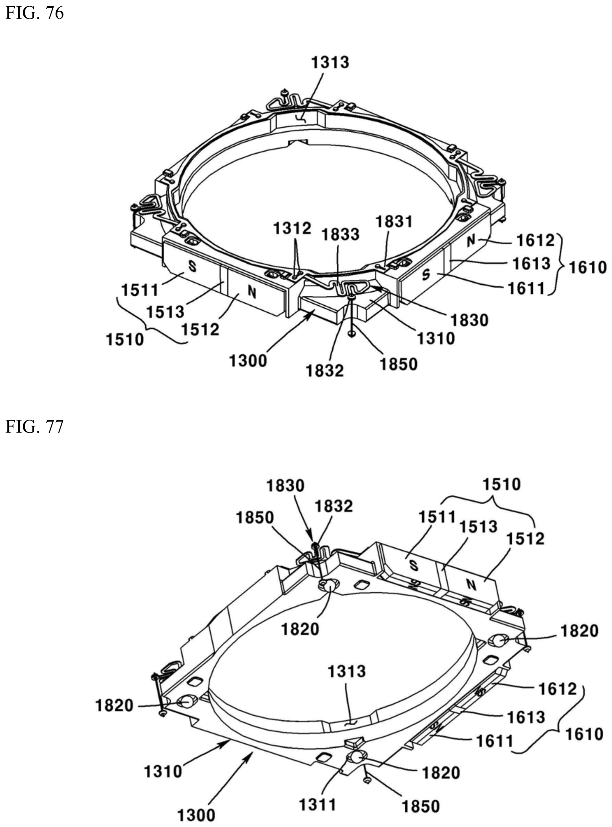

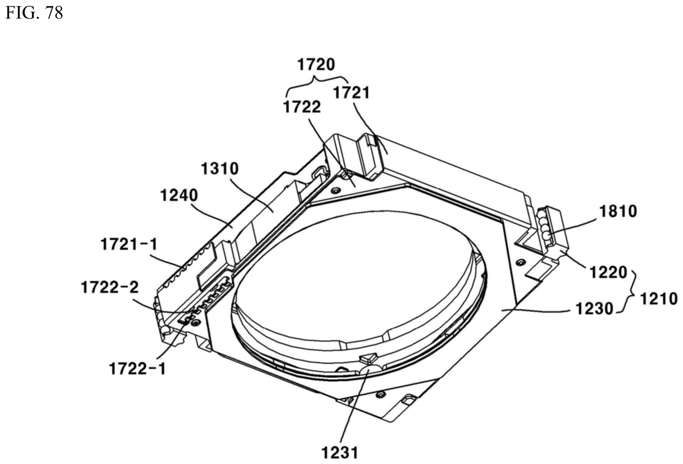

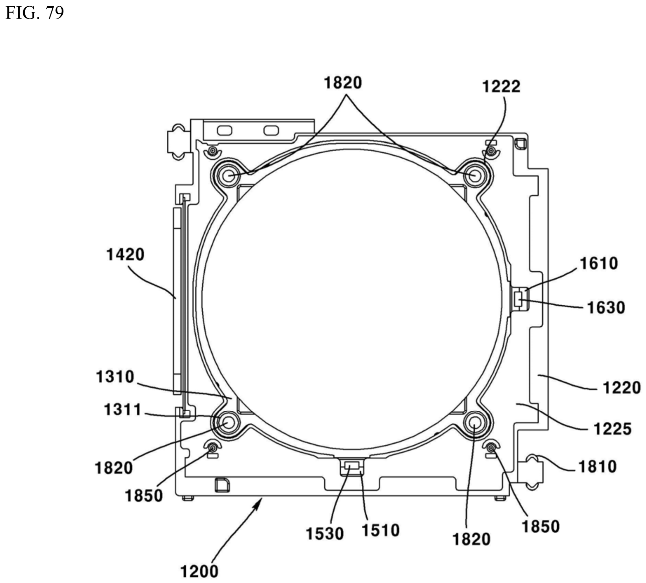

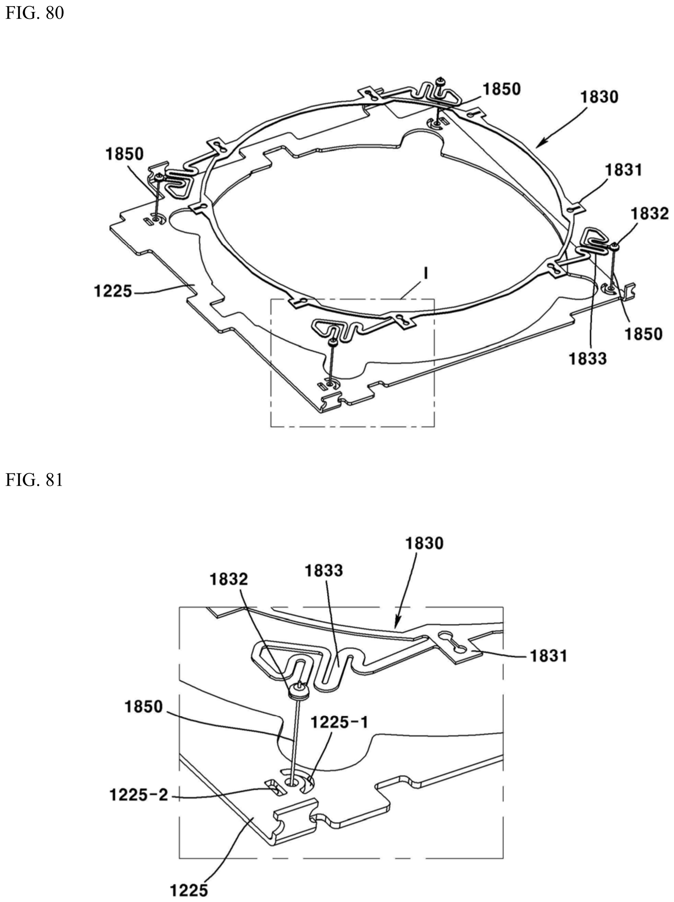

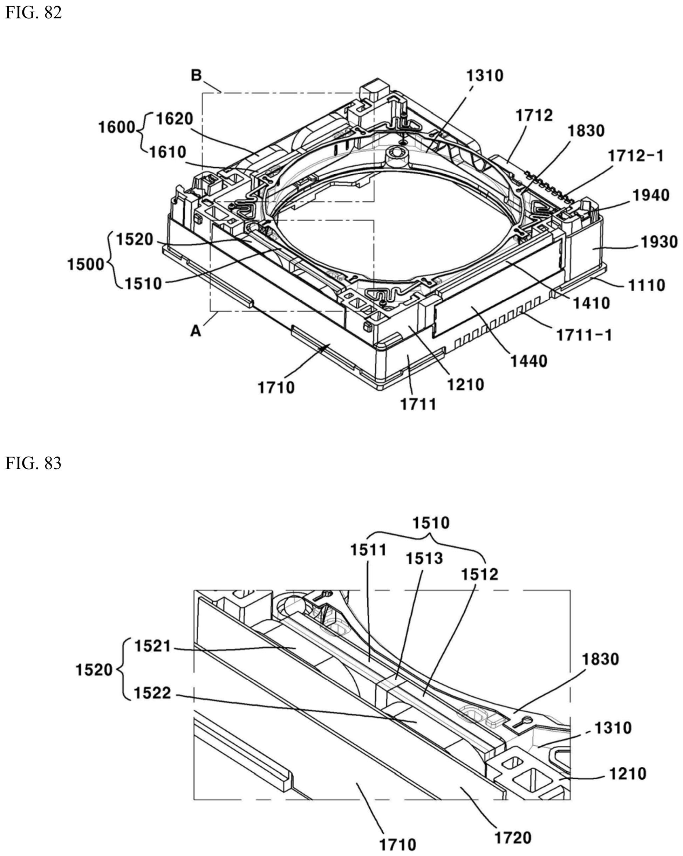

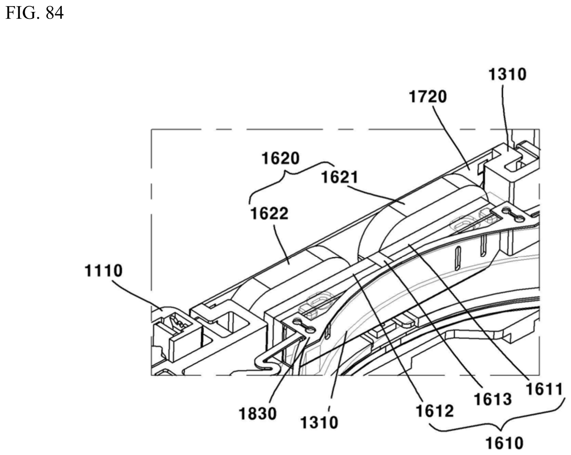

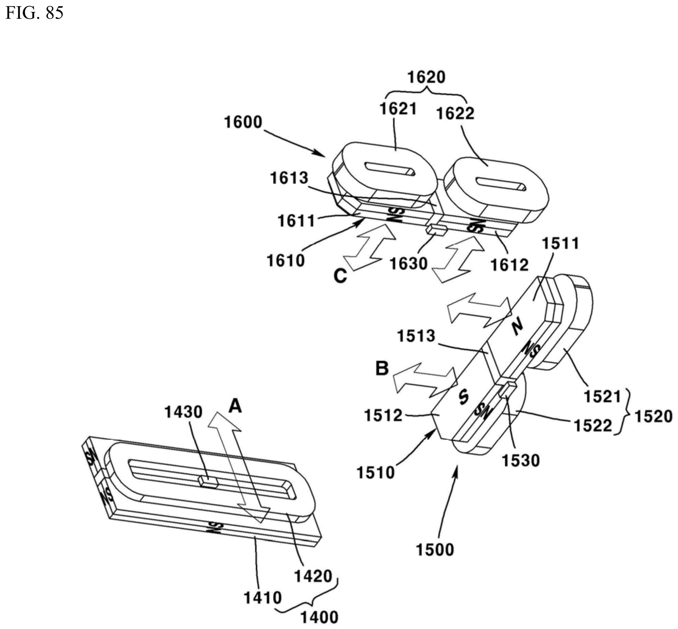

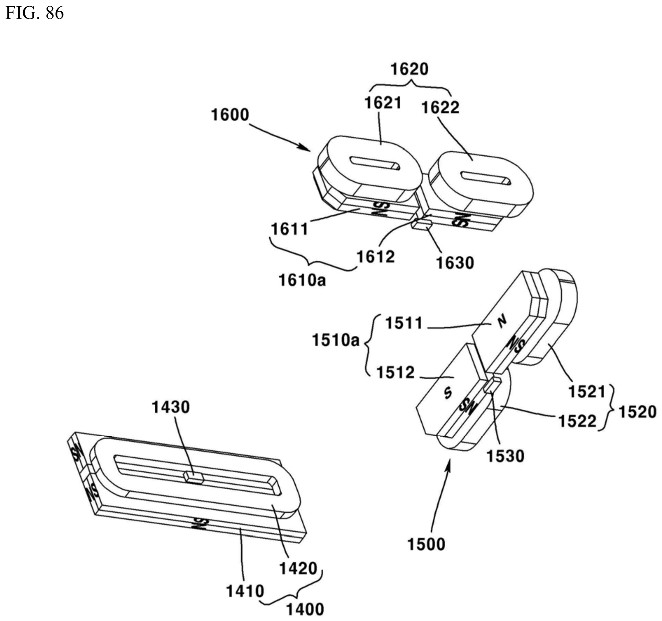

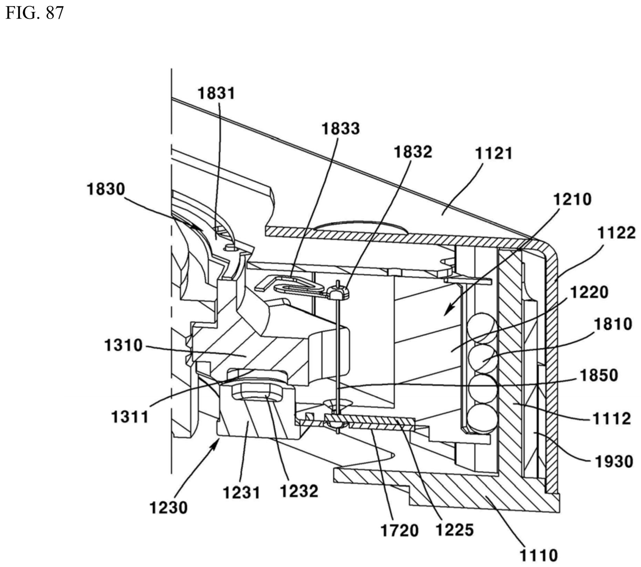

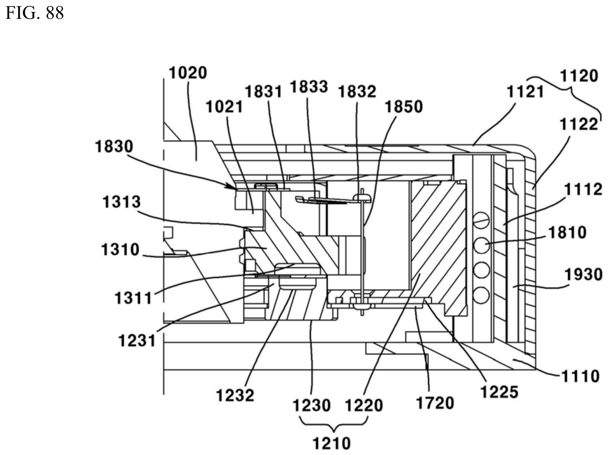

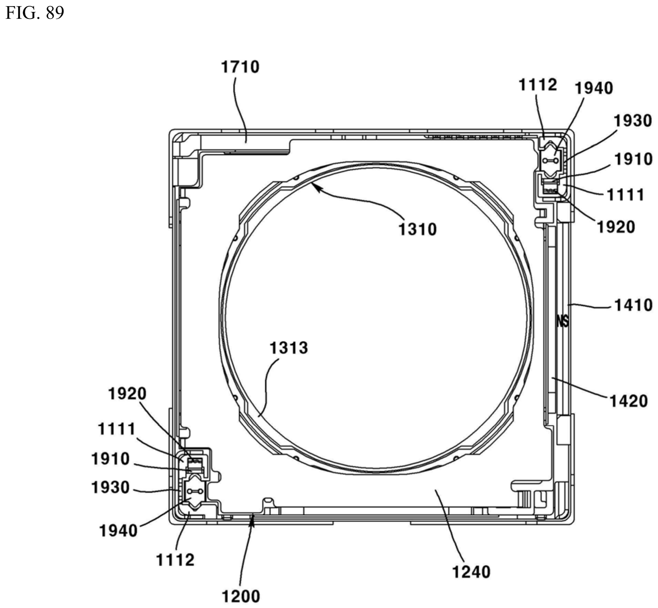

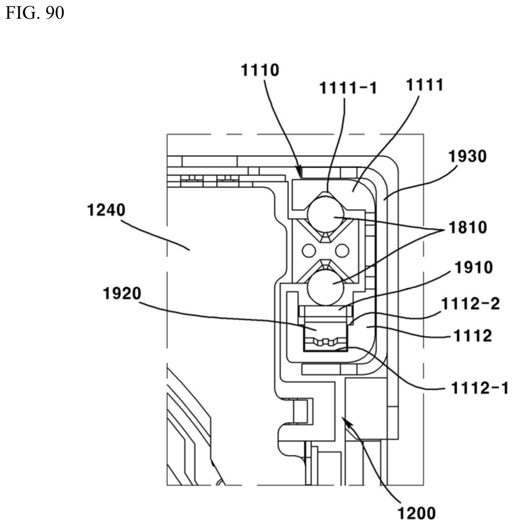

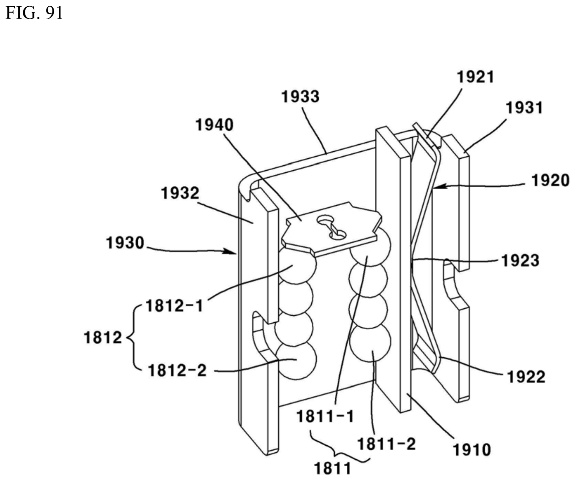

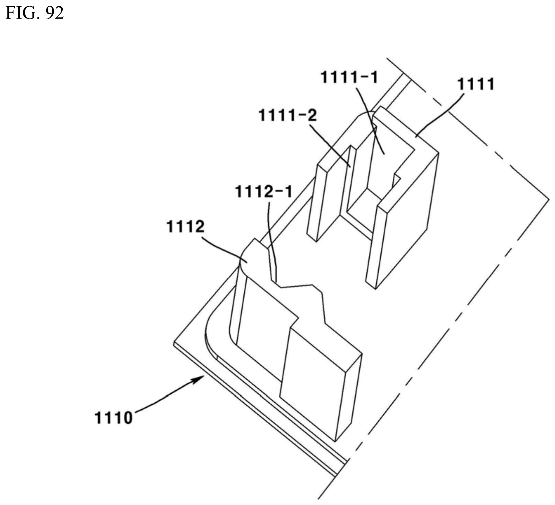

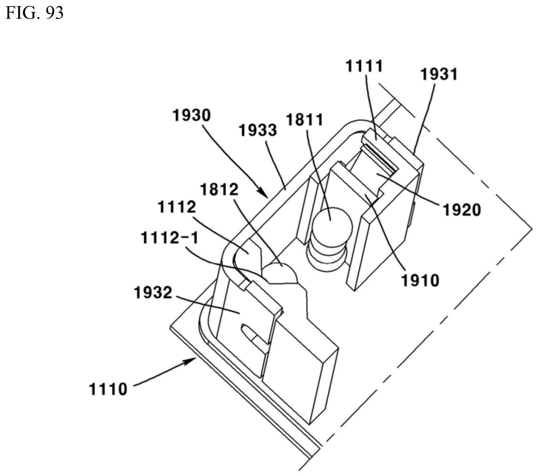

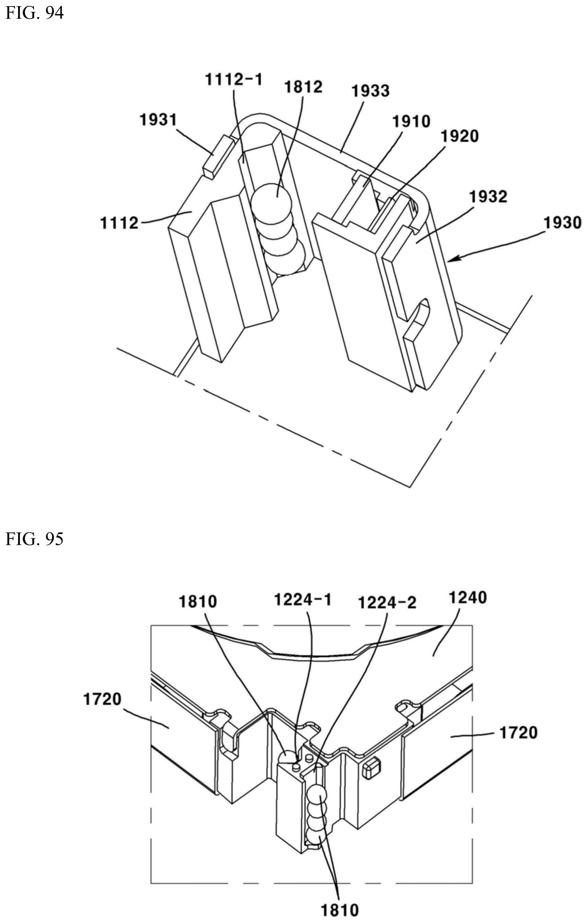

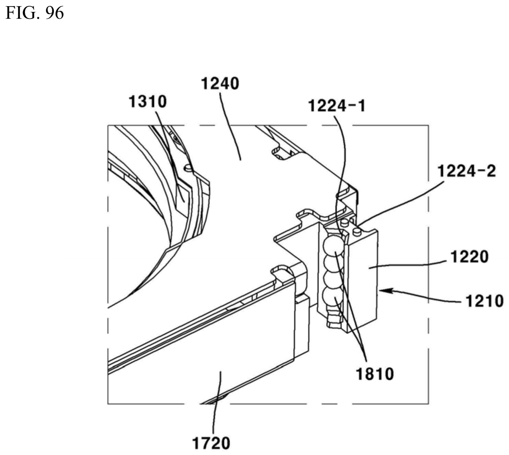

FIG. 54 is a conceptual diagram of a lens actuator according to a second embodiment of the present invention; FIG. 55 is a perspective view of a lens actuator according to a second embodiment of the present invention; FIG. 56 is a cross-sectional view taken along line A-A of FIG. 55; FIG. 57 is a cross-sectional view taken along line B-B of FIG. 55; FIG. 58 is an enlarged view of area F of FIG. 57; FIG. 59 is a cross-sectional view taken along line C-C of FIG. 55; FIG. 60 is an enlarged view of area G of FIG. 59; FIG. 61 is a cross-sectional view taken along line D-D of FIG. 55; FIG. 62 is an enlarged view of area H of FIG. 61; FIG. 63 is a cross-sectional view taken along line E-E of FIG. 55; FIG. 64 is a cross-sectional view taken along line orthogonal to an optical axis and viewed from above of a lens actuator according to a second embodiment of the present invention; FIG. 65 is an exploded perspective view of a lens actuator according to a second embodiment of the present invention; FIG. 66 is an exploded perspective view of a lens actuator according to a second embodiment of the present invention, viewed from a different direction than FIG. 65; FIG. 67 is a perspective view of a lens actuator according to a second embodiment of the present invention with the cover omitted; FIG. 68 is a perspective view illustrating a fixed unit and related components of a lens actuator according to a second embodiment of the present invention; FIG. 69 is a perspective view illustrating a moving unit and related components of a lens actuator according to a second embodiment of the present invention; FIG. 70 is a perspective view illustrating a coupling structure of an inner substrate and an outer substrate of a lens actuator according to a second embodiment of the present invention; FIG. 71 is a bottom perspective view illustrating a moving unit and related components of a lens actuator according to a second embodiment of the present invention; FIG. 72 is a bottom perspective view illustrating a coupling structure of inner and outer substrates of a lens actuator according to a second embodiment of the present invention; FIG. 73 is a perspective view of FIG. 69 with a cover removed; FIG. 74 is a perspective view of FIG. 73 with an OIS moving unit and related components removed; FIG. 75 is an exploded perspective view of FIG. 74 with wires removed; FIG. 76 is a perspective view illustrating an OIS moving unit and related components of a lens actuator according to a second embodiment of the present invention; FIG. 77 is a bottom perspective view viewed from a different direction from FIG. 76; FIG. 78 is a bottom perspective view of FIG. 69 viewed from a different direction; FIG. 79 is a bottom view of FIG. 78 with a preload member and an inner substrate removed; FIG. 80 is a perspective view illustrating a coupling structure of an elastic member, a wire, and a metal member of a lens actuator according to a second embodiment of the present invention; FIG. 81 is an enlarged view of area I of FIG. 80; FIG. 82 is a partial perspective view of a lens actuator according to a second embodiment of the present invention with a cover removed; FIG. 83 is an enlarged view of area A of FIG. 82; FIG. 84 is an enlarged view of area B of FIG. 82; FIG. 85 is a bottom perspective view of a driving unit of a lens actuator according to a second embodiment of the present invention; FIG. 86 is a bottom perspective view of a driving unit of a lens actuator according to a modified embodiment; FIG. 87 is a cross-sectional perspective view illustrating a coupling structure of a wire and a preload member of a lens actuator according to a second embodiment of the present invention; FIG. 88 is a cross-sectional view illustrating a coupling structure of a wire and a preload member of a lens actuator according to a second embodiment of the present invention; FIG. 89 is a plan view of a lens actuator according to a second embodiment of the present invention with a cover removed; FIG. 90 is a plan view of a portion of FIG. 89 enlarged with a cover omitted; FIG. 91 is a perspective view illustrating a ball and related components of a lens actuator according to a second embodiment of the present invention; FIG. 92 is a perspective view illustrating a ball-accommodating structure of a base of a lens actuator according to a second embodiment of the present invention; FIG. 93 is a perspective view illustrating a state in which a ball, a plate member, an elastic member, and a reinforcing member in FIG. 92 are disposed; FIG. 94 is a perspective view of FIG. 93 viewed from a different direction; FIG. 95 is a perspective view illustrating a moving unit and a ball of a lens actuator according to a second embodiment of the present invention; FIG. 96 is a perspective view of FIG. 95 viewed from a different direction; and FIG. 97 (a) is a drawing comparing the heights of a ball and a pressure point when a moving unit moves upward, and (b) is a drawing comparing the heights of a ball and a pressure point when a moving unit moves downward.

The lens actuator **1010** may be a voice coil motor VCM. The lens actuator **1010** may be a lens driving motor. The lens actuator **1010** may be a lens driving actuator. The lens actuator **1010** may comprise an AF module. The lens actuator **1010** may comprise an OIS module.

The lens actuator **1010** may comprise a fixed unit **1100.** The fixed unit **1100** may be a portion that is relatively fixed portion when the moving unit moves. The moving unit may move against the fixed unit **1100.**

The lens actuator **1010** may comprise a base **1110.** The fixed unit **1100** may comprise a base **1110.** The base **1110** may be disposed below the AF carrier **1210.** The base **1110** may be disposed below the OIS carrier **1310.** The base **1110** may be coupled to the cover **1120.** The AF carrier **1210** and the OIS carrier **1310** may be disposed on the base **1110.** The AF carrier **1210** and the OIS carrier **1310** may be disposed on the lower plate portion of the base **1110.** The AF carrier **1210** and the OIS carrier **1310** may be disposed within the base **1110.** The AF carrier **1210** and the OIS carrier **1310** can be disposed within the side wall portion of the base **1110.**

The base **1110** may comprise a lower plate portion. The lower plate portion of the base **1110** may support the lower surface of the AF moving unit **1200.** The lower plate portion of the base **1110** may support the lower surface of the AF carrier **1210.**

The base **1110** may comprise a pillar part **1111.** The pillar part **1111** may be extended from an upper surface of the lower plate portion. The pillar part 1111 may be disposed at an inner side of the outer wall part **1112.**

The base **1110** may comprise a first guide that guides the AF guide ball **1810** to move. The first guide may comprise an inner groove **1111-1** of the base **1110.** The first guide may comprise an outer groove **1112-1** of the base **1110.**

The base **1110** may comprise an inner groove 1111-1. The pillar part **1111** may comprise an inner groove **1111-1.** The inner groove **1111-1** may be formed in the pillar part **1111.** The inner groove 1111-1 may be an 'AF guide ball accommodating groove'. An AF guide ball **1810** may be disposed in the inner groove **1111-1.** The inner ball **1811** may be disposed in the inner groove **1111-1.** The inner groove **1111-1** may be in direct contact with the AF guide ball **1810.** The inner groove **1111-1** may be disposed in an optical axis direction. The inner groove **1111-1** may comprise a plurality of grooves. The inner groove **1111-1** may comprise two grooves. The two grooves can be disposed parallel to each other. The two grooves can be disposed diagonally with respect to the optical axis.

The base **1110** may comprise a step **1111-2.** The step **1111-2** may be formed in the pillar part **1111.** A plate member **1910** may be disposed in the step **1111-2.**

The base **1110** may comprise an outer wall part **1112.** The outer wall part **1112** may be a 'side portion'. The outer wall part **1112** may be a 'side plate'. The outer wall part **1112** may be a 'side wall'. The outer wall part **1112** of the base **1110** may be extended from an upper surface of the lower plate portion.

The base **1110** may comprise an outer groove **1112-1.** The outer wall part **1112** may comprise an outer groove **1112-1.** The outer groove **1112-1** may be formed to face the inner groove **1111-1.** The outer groove **1112-1** may be disposed to face the inner groove **1111-1.** The outer groove **1112-1** may be an 'AF guide ball accommodating groove'. An AF guide ball **1810** may be disposed in the outer groove **1112-1.** An outer ball **1812** may be disposed in the outer groove **1112-1.** The outer groove **1112-1** may be in direct contact with the AF guide ball **1810.** The outer groove **1112-1** may be disposed in an optical axis direction. The outer groove **1112-1** may comprise multiple grooves. The outer groove **1112-1** may comprise two grooves. The two grooves may be disposed parallel to each other. The two grooves may be disposed diagonally with respect to an optical axis. The outer groove **1112-1** may be disposed at an opposite side of the inner groove **1111-1.** The outer groove **1112-1** may be formed to have a shape corresponding to the inner groove **1111-1.** The outer groove **1112-1** and the inner groove **1111-1** may be formed to have the same length in an optical axis direction.

The base **1110** may comprise a protruded portion **1114.** The protruded portion **1114** may be protruded outward. A connecting portion **1712** of an outer substrate **1710** may be disposed above and below the protruded portion **1114.** A groove may be formed in the protruded portion **1114** so as not to interfere with the connecting portion **1712** of the outer substrate **1710** even when it moves.

The base **1110** may comprise a step. The step may be formed at a lower end portion of an outer side surface of the base **1110.** The step may be protruded from an outer side surface of the base **1110.** A side plate **1122** of a cover **1120** may be disposed in the step of the base **1110.**

The lens actuator **1010** may comprise a cover **1120.** The fixed unit **1100** may comprise a cover **1120.** The cover **1120** may be disposed in the base **1110.** The cover **1120** may be disposed on the base **1110.** The cover **1120** may be coupled to the base **1110.** The cover **1120** may be fixed to the base **1110.** The cover **1120** may accommodate an AF carrier **1210** therein. The cover **1120** may accommodate an OIS carrier **1310** therein. The cover **1120** may be a shield member. The cover **1120** may be a shield can.

The cover **1120** may comprise an upper plate **1121.** The upper plate **1121** may be disposed on a moving unit. The upward movement of the moving unit may be limited by the moving unit by being in contact with the upper plate **1121.** The upper plate **1121** may comprise a hole through which light passes.

The cover **1120** may comprise a side plate **1122.** The side plate **1122** may be extended from the upper plate **1121.** The side plate **1122** may be disposed in the base **1110.** The side plate **1122** may be disposed on a step portion being protruded from a lower end portion of an outer side surface of the base **1110.** The side plate **1122** may comprise a plurality of side plates. The side plate **1122** may comprise four side plates. The side plate **1122** may comprise a first side plate and a second side plate being disposed opposite to each other, and a third side plate and a fourth side plate being disposed opposite to each other.

The lens actuator **1010** may comprise a moving unit. The moving unit may be disposed in the fixed unit **1100.** The moving unit may be disposed within the fixed unit **1100.** The moving unit may be disposed on the fixed unit **1100.** The moving unit may be movably disposed in the fixed unit **1100.** The moving unit may be moved with respect to the fixed unit **1100** by the driving unit. The moving unit may be moved during AF driving. The moving unit may be moved during OIS driving. A lens may be coupled to the moving unit.

The lens actuator **1010** may comprise an AF moving unit **1200.** The AF moving unit **1200** may be disposed in the fixed unit **1100.** The AF moving unit **1200** may be disposed within the fixed unit **1100.** The AF moving unit **1200** may be disposed on the fixed unit **1100.** The AF moving unit **1200** may be disposed between the fixed unit **1100** and the OIS moving unit **1300.** The AF moving unit **1200** may be movably disposed in the fixed unit **1100.** The AF moving unit **1200** may move in an optical axis direction against the fixed unit **1100** by the AF driving unit **1400.** The AF moving unit **1200** may move during AF driving.

In a modified embodiment, the AF moving unit **1200** and the AF driving unit **1400** may be omitted. That is, the OIS moving unit **1300** may be disposed in the fixed unit **1100.** Or, the OIS moving unit **1300** may be disposed on the fixed unit **1100** and the AF moving unit **1200** may be disposed within the OIS moving unit **1300.**

The lens actuator **1010** may comprise an AF carrier **1210.** The AF moving unit **1200** may comprise an AF carrier **1210.** The AF carrier **1210** may be an 'AF holder'. The AF carrier **1210** may be a 'housing'. The AF carrier **1210** may be disposed within the base **1110.** The AF carrier **1210** may be disposed on the base **1110.** The AF carrier **1210** may be disposed within the cover **1120.** The AF carrier **1210** may be disposed between the base **1110** and the OIS carrier **1310.** The AF carrier 1210 may be movably disposed in an optical axis direction.

The AF carrier **1210** may comprise a frame, a first upper plate, and a second upper plate. At this time, the frame may be a body part. The frame may be a holder member **1220.** The first upper plate may be a metal member **1225.** The second upper plate may be a preload member **1230.** The AF carrier **1210** may be a housing. The housing may comprise a first housing and a second housing. At this time, the first housing may comprise a holder member **1220** and the second housing may comprise a preload member **1230.** The OIS carrier **1310** may be a bobbin. The OIS guide ball **1820** may be disposed between the housing and the bobbin. The AF guide ball **1810** may be disposed between a side surface of the housing and a cover **1120.** The AF guide ball **1810** can be disposed between the side surface of the housing and the base or the pillar of the base.

The lens actuator **1010** may comprise a holder member **1220.** The AF carrier **1210** may comprise a holder member **1220.** The holder member **1220** may be formed separately from the preload member **1230.** A wire **1850** may be coupled to the holder member **1220.**

The AF carrier **1210** may comprise a lower plate. The lower plate may be disposed below the OIS carrier **1310.** The lower plate may be disposed between the OIS carrier **1310** and the base **1110.**

The AF carrier **1210** may comprise a groove **1222.** The groove **1222** may be a 'preload member passage hole'. The holder member **1220** may comprise a groove **1222.** The lower plate of the holder member **1220** may comprise the groove **1222.** The groove **1222** may be formed on a lower plate of the holder member **1220.** The groove **1222** may be open inward. A preload member **1230** may be inserted into the groove **1222.** A protruded portion **1231** of the preload member **1230** may be inserted into the groove **1222.** The groove **1222** may be formed as a hole. The groove **1222** may be redisposed with a hole. That is, in a modified embodiment, the AF carrier **1210** may comprise a groove **1222** into which the protruded portion **1231** of the preload member **1230** is inserted.

The AF carrier **1210** may comprise a side wall. The side wall may be extended downward from the upper plate. An inner substrate **1720** may be disposed at a side wall. An AF coil **1420** may be disposed at a side wall. An OIS-x coil **1520** may be disposed at a side wall. An OIS-y coil **1620** may be disposed at a side wall. The side wall may comprise a groove for avoiding the coil. The side wall may comprise a plurality of side walls. The side wall may comprise four side walls. The side wall may comprise a first side wall and a second side wall being disposed opposite to each other, and a third side wall and a fourth side wall being disposed opposite to each other.

The AF carrier **1210** may comprise a second guide that guides the AF guide ball **1810** to move. The second guide may comprise an inner groove **1224-1** of the AF carrier **1210.** The second guide may comprise an outer groove **1224-2** of the AF carrier **1210.**

The AF carrier **1210** may comprise an inner groove **1224-1.** The holder member **1220** may comprise an inner groove **1224-1.** The inner groove **1224-1** may be an 'AF guide ball accommodating groove'. An AF guide ball **1810** may be disposed in the inner groove **1224-1.** An inner ball **1811** may be disposed in the inner groove **1224-1.** The inner groove **1224-1** may be in direct contact with the AF guide ball **1810.** The inner groove **1224-1** may be disposed in an optical axis direction. The inner groove **1224-1** may guide the AF guide ball **1810** to move in an optical axis direction. The inner groove **1224-1** may comprise a plurality of grooves. The inner groove **1224-1** may comprise two grooves. The two grooves can be disposed parallel to each other. The two grooves can be disposed diagonally with respect to the optical axis.

The AF carrier **1210** may comprise an outer groove **1224-2.** The holder member **1220** may comprise an outer groove **1224-2.** The outer groove **1224-2** may be an 'AF guide ball accommodating groove'. An AF guide ball **1810** may be disposed in the outer groove **1224-2.** An outer ball **1812** may be disposed in the outer groove **1224-2.** The outer groove **1224-2** may be in direct contact with the AF guide ball **1810.** The outer groove **1224-2** may be disposed in an optical axis direction. The outer groove **1224-2** may guide the AF guide ball **1810** to move in an optical axis direction. The outer groove **1224-2** may comprise a plurality of grooves. The outer groove **1224-2** may comprise two grooves. The two grooves can be disposed parallel to each other. The two grooves can be disposed diagonally with respect to the optical axis. The outer groove **1224-2** can be disposed opposite the inner groove **1224-1.** The outer groove **1224-2** can be formed to have a shape corresponding to the inner groove **1224-1.** The outer groove **1224-2** and the inner groove **1224-1** can be formed to have the same length in an optical axis direction.

The AF carrier **1210** may comprise a metal member **1225.** The holder member **1220** may comprise the metal member **1225.** The metal member **1225** may comprise a lower plate having the metal member **1225.** The metal member **1225** may be disposed in the holder member **1220.** The metal member **1225** may be insert-molded into the holder member **1220.** At least a portion of the metal member **1225** may be disposed on an upper surface of the holder member **1220.** A metal member **1225** may be disposed to reinforce the strength of the holder member **1220.**

The metal member **1225** may comprise a hole. A wire **1850** may be disposed in the hole. The wire **1850** may pass through the hole of the metal member **1225.**

The metal member **1225** may comprise a first hole **1225-1.** The first hole **1225-1** may be disposed adjacent to the wire **1850.** The first hole **1225-1** may be disposed adjacent to a hole through which the wire **1850** passes. The first hole **1225-1** may be disposed adjacent to a conductive member that connects the wire **1850** and the metal member **1225.** The conductive member that connects the wire **1850** and the metal member **1225** may be introduced into the first hole **1225-1.** Solder that connects the wire **1850** and the metal member **1225** may be introduced into the first hole **1225-1.** The first hole **1225-1** may be formed to have a curvature. The first hole **1225-1** may be formed in a U-shape when viewed from below. The first hole **1225-1** may comprise a curved shape when viewed from below.

The metal member **1225** may comprise a second hole **1225-2.** The second hole **1225-2** may be disposed adjacent to the wire **1850.** The second hole **1225-2** may be disposed adjacent to a hole through which the wire **1850** passes. The second hole **1225-**2 may be disposed adjacent to a conductive member that connects the wire **1850** and the metal member **1225.** The conductive member that connects the wire **1850** and the metal member **1225** may be introduced into the second hole **1225-2.** The second hole **1225-2** may be disposed at an opposite side of the first hole **1225-1** with respect to the wire **1850.** The second hole **1225-2** may be disposed at an opposite side of the first hole **1225-1** with respect to the hole of the metal member **1225** in which the wire **1850** is disposed. Solder that connects the wire **1850** and the metal member **1225** may be introduced into the second hole **1225-2.** The second hole **1225-2** may be extended straight.

The AF carrier **1210** may comprise a protruded portion **1226.** The holder member **1220** may comprise a protruded portion **1226.** The protruded portion **1226** may be formed on an outer side surface of the AF carrier **1210.** The protruded portion **1226** may be protruded outward from the AF carrier **1210.** A connecting portion **1712** may be disposed on an upper surface and a lower surface of the protruded portion **1226.**

The lens actuator **1010** may comprise a preload member **1230.** The AF carrier **1210** may comprise a preload member **1230.** The preload member **1230** may be coupled to an upper surface of a holder member **1220.** The preload member **1230** may be coupled to the holder member **1220.** The preload member **1230** may be inserted into and coupled to the holder member **1220** from the upper side. The preload member **1230** may pressurize the OIS guide ball **1820.** The preload member **1230** may be in contact with the OIS guide ball **1820.** The preload member **1230** may be in directly contact with the OIS guide ball **1820.** The preload member **1230** may be coupled to the holder member **1220** to pressurize the OIS guide ball 1820. The preload member **1230** can pressurize a portion of the coil spring **1830** by being in contact with the OIS guide ball **1820.**

The preload member **1230** may be disposed between the AF moving unit **1200** and the base **1110** in an optical axis direction. The preload member **1230** may be disposed between the AF moving unit **1200** and the base **1110.** The preload member **1230** may be disposed between the AF carrier **1210** and the base **1110.**

The AF carrier **1210** may comprise a protruded portion **1231.** The preload member **1230** may comprise a protruded portion **1231.** The protruded portion **1231** may be 'protrusion'. The preload member **1230** may have a protruded portion **1231** that guides the OIS guide ball **1820.** The protruded portion **1231** may be coupled to a groove **1222** of a holder member **1220.** The protruded portion **1231** of the preload member **1230** may be inserted into the groove **1222** of the holder member **1220** from below. The protruded portion **1231** of the preload member **1230** may be disposed in the groove **1222** of the holder member **1220.** At least a portion of the protruded portion **1231** of the preload member **1230** may be disposed in the groove **1222** of the holder member **1220.** The protruded portion **1231** may comprise a plurality of protrusions. The protruded portion **1231** may comprise four protrusions.

The AF carrier **1210** may comprise a groove **1232.** The preload member **1230** may comprise a groove **1232.** The groove **1232** may be an 'OIS guide ball accommodating groove'. The groove **1232** may be formed in the protruded portion **1231.** The groove **1232** may be formed on an upper surface of the protruded portion **1231.** The groove **1232** may be formed on an end portion of the protruded portion **1231.** The groove **1232** may be concavely formed on an upper surface of the protruded portion **1231.** An OIS guide ball **1820** may be disposed in the groove **1232.** The OIS guide ball **1820** may come into contact with the groove **1232.**

The preload member **1230** may comprise a body part **1233.** The body part **1233** may be coupled to a holder member **1220.** The body part **1233** may be disposed on a lower surface of the holder member **1220.** The protruded portion **1231** may protrude upward from the body part **1233.**

The lens actuator **1010** may comprise a cover **1240.** The AF moving unit **1200** may comprise a cover **1240.** The cover **1240** may be coupled to the AF carrier **1210.** The cover **1240** may be coupled to an upper surface of the AF carrier **1210.** The cover **1240** may be coupled to an upper surface of the AF carrier **1210.** The cover **1240** may be coupled to an upper side of the holder member **1220.** The cover **1240** may comprise a hook. The hook of the cover **1240** may be coupled to the AF carrier **1210.** The hook of the cover **1240** may be protruded downward and be coupled to a side surface of the AF carrier **1210.**

The lens actuator **1010** may comprise an OIS moving unit **1300.** The OIS moving unit **1300** may be disposed in the fixed unit **1100.** The OIS moving unit **1300** may be disposed within the fixed unit **1100.** The OIS moving unit **1300** may be disposed on the fixed unit **1100.** The OIS moving unit **1300** may be disposed within the AF moving unit **1200.** The OIS moving unit **1300** may be disposed on the AF moving unit **1200.** The OIS moving unit **1300** may be disposed on a lower plate of the AF moving unit **1200.** The OIS moving unit **1300** may be movably disposed. The OIS moving unit **1300** may move in a direction perpendicular to the optical axis with respect to the fixed unit **1100** and the AF moving unit **1200** by the OIS driving unit. The OIS moving unit **1300** can move in an x-axis direction by the OIS-x driving unit **1500.** The OIS moving unit **1300** can move in a y-axis direction by the OIS-y driving unit **1600.** The OIS moving unit **1300** can move during OIS driving.

The OIS moving unit **1300** may comprise a first side surface and a second side surface which are disposed opposite to each other, and a third side surface and a fourth side surface which are disposed opposite to each other. The OIS-x magnet **1510** may be disposed on a first side surface of the OIS moving unit **1300.** The AF magnet **1410** may be disposed on a third side surface of the OIS moving unit **1300** or may be disposed opposite to the third side surface. That is, the AF magnet **1410** may be disposed at a position corresponding to a third side surface of the OIS moving unit **1300.** The AF magnet **1410** may be disposed closest to a third side surface among the first to fourth side surfaces of the OIS moving unit **1300.** The OIS-y magnet **1610** may be disposed on a fourth side surface of the OIS moving unit **1300.**

The lens actuator **1010** may comprise an OIS carrier **1310.** The OIS moving unit **1300** may comprise an OIS carrier **1310.** The OIS carrier **1310** may be an 'OIS holder'. The OIS carrier **1310** may be a 'bobbin'. The OIS carrier **1310** may be disposed within the AF carrier **1210.** The OIS carrier **1310** may be disposed within the base **1110.** The OIS carrier **1310** may be disposed on the base **1110.** The OIS carrier **1310** may be disposed within the cover **1120.** The OIS carrier **1310** may be movably disposed in a direction perpendicular to the optical axis.

The OIS carrier **1310** may comprise an outer side surface. The OIS carrier **1310** may comprise a plurality of side surfaces. The OIS carrier **1310** may comprise a first side surface and a second side surface being disposed opposite to each other, and a third side surface and a fourth side surface being disposed opposite to each other. The AF coil **1420** may be disposed between the first side surface of the OIS carrier **1310** and the AF magnet **1410.** The OIS-x magnet **1510** may be disposed on a third side surface of the OIS carrier **1310.** The OIS-y magnet **1610** may be disposed on a second side surface of the OIS carrier **1310.**

The OIS carrier **1310** may comprise a groove. The groove may be an 'elastic member interference prevention groove'. The groove may be formed on an upper surface of the OIS carrier **1310.** The groove may be formed concavely on an upper surface of the OIS carrier **1310.** The groove may be disposed corresponding to the coil spring **1830** to prevent interference between the OIS carrier **1310** and the coil spring **1830.**

The OIS carrier **1310** may comprise a groove **1311.** The groove **1311** may be an 'OIS guide ball accommodating groove'. An OIS guide ball **1820** may be disposed in the groove **1311.** The groove **1311** may be in direct contact with the OIS guide ball **1820.** The groove **1311** may be concavely formed on a lower surface of the OIS moving unit **1300.** The groove **1311** may be concavely formed on a lower surface of the OIS carrier **1310.** The groove **1311** may be disposed in a direction perpendicular to the optical axis. The groove **1311** may be recessed in an optical axis direction. The groove **1311** may comprise a plurality of grooves. The groove **1311** may comprise four grooves. The groove **1311** may be formed on a lower surface of the OIS carrier **1310.**

The OIS carrier **1310** may comprise a lateral stopper. The lateral stopper may limit the lateral stroke of the OIS carrier **1310.** That is, when the OIS carrier **1310** moves to the maximum, the lateral stopper of the OIS carrier **1310** may be in contact with at least one of the AF carrier **1210** and the base **1110.** The lateral stopper may be formed on an outer side surface of the OIS carrier **1310.** The lateral stopper may be protruded outward from a side surface of the OIS carrier **1310.**

The OIS carrier **1310** may comprise a protrusion **1312.** The protrusion **1312** may be coupled with an elastic member **1830.** The protrusion **1312** may be a 'coupling protrusion'. The elastic member **1830** may comprise a hole into which the protrusion **1312** of the OIS carrier **1310** is inserted. The protrusion **1312** may be formed on an upper surface of the OIS carrier **1310.**

The OIS carrier **1310** may comprise a groove **1313.** The groove **1313** may be a 'lens adhesive accommodating groove'. The groove **1313** may be formed on an inner surface of the OIS carrier **1310.** The groove **1313** may be formed concavely on an inner surface of the OIS carrier **1310.** An adhesive may be injected between the lens and the OIS carrier **1310** through the groove **1313.** An adhesive for bonding the lens and the OIS carrier **1310** may be disposed in the groove **1313.**

The OIS carrier **1310** may comprise a mounting portion. The mounting portion may be a 'magnet mounting portion.' Magnets **1510** and **1620** may be disposed in the mounting portion. The mounting portion may be formed, for example, as a groove.

The lens actuator **1010** may comprise a driving unit. The driving unit may move the moving unit against the fixed unit **1100.** The driving unit may comprise an AF driving unit **1400.** The driving unit may comprise an OIS driving unit. The driving unit may comprise an OIS-x driving unit **1500.** The driving unit may comprise an OIS-y driving unit **1600.** The driving unit may comprise a coil and a magnet.

The lens actuator **1010** may comprise an AF driving unit **1400.** The AF driving unit **1400** may move the AF moving unit **1200** in an optical axis direction. The AF driving unit **1400** may move the AF carrier **1210** in an optical axis direction. The AF driving unit **1400** may move the AF carrier **1210** in an optical axis direction through electromagnetic force. The AF driving unit **1400** may comprise a coil and a magnet.

The lens actuator **1010** may comprise an AF magnet **1410** and an AF coil **1420** that move the AF moving unit **1200** in an optical axis direction.

In a second embodiment of the present invention, the AF carrier **1210** and the OIS carrier **1310** can move in an optical axis direction by the interaction between the AF coil **1420** and the AF magnet **1410.** The AF coil **1420,** the AF carrier **1210,** and the OIS carrier **1310** can move integrally in an optical axis direction.

The lens actuator **1010** may comprise an AF magnet **1410.** The AF driving unit **1400** may comprise an AF magnet **1410.** The AF magnet **1410** may be an 'AF magnet'. The AF magnet **1410** may be a permanent magnet. The AF magnet **1410** may be disposed in the fixed unit **1100.** The AF magnet **1410** may be disposed in the base **1110.** The AF magnet **1410** may be disposed in the cover **1120.** The AF magnet **1410** may be disposed in the side plate **1122** of the cover **1120.** The AF magnet **1410** may be disposed on an outer side surface of the base **1110.** The AF magnet **1410** may be disposed on an inner side surface of the base **1110.** The AF magnet **1410** can be fixed to the base **1110.** The AF magnet **1410** can be coupled to the base **1110.** The AF magnet **1410** can be bonded to the base **1110** with an adhesive. The AF magnet **1410** can be disposed within the cover **1120.** The AF magnet **1410** can interact with the AF coil **1420.** The AF magnet **1410** can electromagnetically interact with the AF coil **1420.** The AF magnet **1410** can be disposed at a position corresponding to the AF coil **1420.** The AF magnet **1410** can face the AF coil **1420.** The AF magnet **1410** can face the AF coil **1420.** The AF magnet **1410** can be overlapped with the AF coil **1420** in a direction perpendicular to the optical axis.

The AF magnet **1410** may be a four-pole magnet. The AF magnet **1410** may comprise a four-pole magnetizing magnet. The AF magnet **1410** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be disposed spaced apart from each other in a vertical direction, and a neutral portion may be disposed between the first magnet portion and the second magnet portion.

The lens actuator **1010** may comprise an AF coil **1420.** The AF driving unit **1400** may comprise the AF coil **1420.** The AF coil **1420** may interact with the AF magnet **1410.** The AF coil **1420** may face the AF magnet **1410.** The AF coil **1420** may be disposed at a position corresponding to the AF magnet **1410.** The AF coil **1420** may be overlapped with the AF magnet **1410** in a direction perpendicular to the optical axis. The AF coil **1420** may be disposed in the inner substrate **1720.** The AF coil **1420** may be disposed in the AF carrier **1210.** The AF coil **1420** may be disposed in the AF moving unit **1200.**

In a second embodiment of the present invention, the AF coil **1420** can move in an optical axis direction. The AF coil **1420** can move in an optical axis direction through interaction with the AF magnet **1410.** The AF coil **1420** can move together with the AF moving unit **1200.** The AF coil **1420** can move in an optical axis direction together with the AF moving unit **1200.** During the AF driving process, the AF coil **1420** can move in an optical axis direction together with the AF moving unit **1200.** The AF coil **1420** can be disposed in the AF moving unit **1200.** The AF coil **1420** can be fixed to the AF moving unit **1200.** The AF coil **1420** can be coupled to the AF moving unit **1200.**

The lens actuator **1010** may comprise an AF sensor **1430.** The AF driving unit **1400** may comprise an AF sensor **1430.** The AF sensor **1430** may be a Hall sensor. The AF sensor **1430** may be disposed in the inner substrate **1720.** The AF sensor **1430** may detect the AF magnet **1410.** The AF sensor **1430** may detect the movement of the AF magnet **1410.** The movement amount or position of the AF magnet **1410** detected by the AF sensor **1430** may be used for feedback of auto focus driving.

The AF sensor **1430** may be a driver IC. The driver IC may comprise a sensing unit. The sensing unit may comprise a Hall element (Hall IC). The driver IC may be electrically connected to the AF coil **1420.** The driver IC may supply current to the AF coil **1420.**

The AF sensor **1430** may be disposed within the AF coil **1420.** The AF sensor **1430** may be overlapped with the neutral portion of the AF magnet **1410** in a direction perpendicular to the optical axis. In a modified embodiment, the AF sensor **1430** may be disposed outside the AF coil **1420.** The AF sensor **1430** may be overlapped with the AF coil **1420** in an optical axis direction. The AF sensor **1430** may be overlapped with the AF coil **1420** in a direction perpendicular to the optical axis.

The lens actuator **1010** may comprise an AF yoke **1440.** The AF yoke **1440** may be disposed corresponding to the AF magnet **1410.** An attractive force may be applied between the AF yoke **1440** and the AF magnet **1410.** The AF guide ball **1810** may be maintained in contact with the base **1110** and the AF carrier **1210** by the attractive force between the AF yoke **1440** and the AF magnet **1410.** The AF yoke **1440** may be disposed in the inner substrate **1720.** The AF yoke **1440** may be disposed inside the AF coil **1420.**

The lens actuator **1010** may comprise an AF attractive force yoke **1450.** The AF attractive force **1450** may act attractive force with the AF magnet **1410.** The AF attractive force **1450** may be disposed on an inner side of the AF coil **1420.** The attractive force **1450** may be disposed on an inner surface of the side plate portion **1721** of the inner substrate **1720.** The attractive force yoke **1450** may pull the AF magnet **1410** inward.

The lens actuator **1010** may comprise an OIS driving unit. The OIS driving unit may move the OIS moving unit **1300** in a direction perpendicular to the optical axis direction. The OIS driving unit may move the OIS carrier **1310** in a direction perpendicular to the optical axis. The OIS driving unit may move the OIS carrier **1310** in a direction perpendicular to the optical axis through electromagnetic force.

The lens actuator **1010** may comprise an OIS-x driving unit **1500.** The OIS driving unit may comprise an OIS-x driving unit **1500.** The OIS-x driving unit **1500** may move the OIS carrier **1310** in an x-axis direction perpendicular to the optical axis. The OIS-x driving unit **1500** may move the OIS carrier **1310** in an x-axis direction perpendicular to the optical axis through electromagnetic force. The OIS-x driving unit **1500** may comprise a coil and a magnet.

The lens actuator **1010** may comprise an OIS-x magnet **1510** and an OIS-x coil **1520** that move the OIS moving unit **1300** in an x-axis direction perpendicular to the optical axis direction.

In a second embodiment of the present invention, the OIS-x magnet **1510** and the OIS-x coil **1520** can move the OIS moving unit **1300** in a first direction perpendicular to the optical axis direction. At this time, the first direction may be an x-axis direction. The OIS carrier **1310** can move in an x-axis direction perpendicular to the optical axis direction by the interaction between the OIS-x coil **1520** and the OIS-x magnet **1510.** The OIS-x magnet **1510** and the OIS carrier **1310** can move integrally in an x-axis direction.

The lens actuator **1010** may comprise an OIS-x magnet **1510.** The OIS driving unit may comprise an OIS-x magnet **1510.** The OIS-x magnet **1510** may be an 'OIS-x magnet'. The OIS-x magnet **1510** may be a permanent magnet. The OIS-x magnet **1510** may be disposed in the OIS moving unit **1300.** The OIS-x magnet **1510** may be spaced apart from the AF magnet **1410.** The OIS-x magnet **1510** may be disposed in the OIS carrier **1310.** The OIS-x magnet **1510** may be disposed on an outer surface of the OIS carrier **1310.** The OIS-x magnet **1510** may be fixed to the OIS carrier **1310.** The OIS-x magnet **1510** can be coupled to the OIS carrier **1310.** The OIS-x magnet **1510** can be bonded to the OIS carrier **1310** with an adhesive. The OIS-x magnet **1510** can be disposed inside the cover **1120.** The OIS-x magnet **1510** can interact with the OIS-x coil **1520.** The OIS-x magnet **1510** can electromagnetically interact with the OIS-x coil **1520.** The OIS-x magnet **1510** can be disposed at a position corresponding to the OIS-x coil **1520.** The OIS-x magnet **1510** can face the OIS-x coil **1520.** The OIS-x magnet **1510** can face the OIS-x coil **1520.** The OIS-x magnet **1510** can be overlapped with the OIS-x coil **1520** in a direction perpendicular to the optical axis. The OIS-x magnet **1510** can be overlapped with the OIS-x coil **1520** in an x-axis direction. The OIS-x magnet **1510** can move in an x-axis direction perpendicular to the optical axis.

The OIS-x magnet **510** may be a two-pole magnet. The OIS-x magnet **510** may comprise a two-pole magnetizing magnet. The OIS-x magnet **510** may comprise an N pole and an S pole (See **B** in FIG. 85).

The OIS-x magnet **1510** may be a two-pole magnet. The OIS-x magnet **1510** may comprise a two-pole magnetizing magnet. The OIS-x magnet **1510** may comprise an N pole and an S pole.

The OIS-x magnet **1510** may comprise a first magnet portion **1511.** The first magnet portion **1511** may comprise an N pole and an S pole. The first magnet portion **1511** may be disposed on a first side surface of the OIS moving unit **1300.** The first magnet portion **1511** may comprise an inner surface being disposed on a first side surface of the OIS moving unit **1300** and an outer surface opposite to the inner surface. The inner surface of the first magnet portion **1511** may be formed as an N pole in its entirety. The outer surface of the first magnet portion **1511** may be formed as an S pole in its entirety. Or, conversely, the inner surface of the first magnet portion **1511** may be an S pole and the outer surface may be an N pole.

The OIS-x magnet **1510** may comprise a second magnet portion **1512.** The second magnet portion **1512** may comprise a south pole and a north pole. The second magnet portion **1512** may be disposed on a first side surface of the OIS moving unit **1300.** The second magnet portion **1512** may comprise an inner surface disposed on a first side surface of the OIS moving unit **1300** and an outer surface opposite the inner surface. The inner surface of the second magnet portion **1512** may be formed as a south pole in its entirety. The outer surface of the second magnet portion **1512** may be formed as a north pole in its entirety. Or, conversely, the inner surface of the second magnet portion **1512** may be a north pole and the outer surface may be a south pole.

The first magnet portion **1511** and the second magnet portion **1512** may be overlapped with each other in a y-axis direction perpendicular to the optical axis direction and the x-axis direction. The first magnet portion **1511** and the second magnet portion **1512** may be formed to have the same size. The first magnet portion **1511** and the second magnet portion **1512** may be formed to have the same shape.

In a second embodiment of the present invention, the first magnet portion **1511** and the second magnet portion **1512** of the OIS-x magnet **1510** may have outer surfaces formed with different polarities. However, in a modified embodiment, the first magnet portion **1511** and the second magnet portion **1512** of the OIS-x magnet **1510** may have outer surfaces formed with the same polarity.

The polarity of the first magnet portion **1511** facing the first coil portion **1521** and the polarity of the second magnet portion **1512** facing the second coil portion **1522** may be different from each other. The polarity of the entire area of the first magnet portion **1511** facing the first coil portion **1521** may be a south pole. The polarity of the entire area of the first magnet portion **1511** facing the first coil portion **1521** may be a single polarity. The polarity of the entire area of the second magnet portion **1512** facing the second coil portion **1522** may be a north pole. The polarity of the entire area of the second magnet portion **1512** facing the second coil portion **1522** may be a single polarity.

The OIS-x magnet **1510** may comprise a neutral portion **1513.** The neutral portion **1513** may be disposed between the first magnet portion **1511** and the second magnet portion **1512.** The neutral portion **1513** may have a lower polarity than the first magnet portion **1511** and the second magnet portion **1512.** The neutral portion **1513** may have a lower magnetism than the first magnet portion **1511** and the second magnet portion **1512.** The neutral portion **1513** may not have a polarity. The neutral portion **1513** may be non-polar. The neutral portion **1513** may not have magnetism. The neutral portion **1513** may be non-magnetic.

In a first embodiment of the present invention, the first magnet portion **1511,** the second magnet portion **1512,** and the neutral portion **1513** may be formed integrally. That is, the first magnet portion **1511,** the second magnet portion **1512,** and the neutral portion **1513** may be a single four-pole magnetized magnet.

As illustrated in FIG. 86, in a modified embodiment, the first magnet portion **1511** and the second magnet portion **1512** may be formed as separate magnets. That is, the OIS-x magnet **1510a** may comprise the first magnet portion **1511** and the second magnet portion **1512** formed as separate magnets. The first magnet portion **1511** and the second magnet portion **1512** may be spaced apart from each other. A gap, which is not a neutral portion, may be formed between the first magnet portion **1511** and the second magnet portion **1512.** Or, the first magnet portion **1511** and the second magnet portion **1512** may be in contact with each other such that there is no neutral portion or gap between the first magnet portion **1511** and the second magnet portion **1512.**

The lens actuator **1010** may comprise an OIS-x coil **1520.** The OIS driving unit may comprise an OIS-x coil **1520.** The OIS-x coil **1520** may interact with the OIS-x magnet **1510.** The OIS-x coil **1520** may move the OIS-x magnet **1510** in an x-axis direction perpendicular to the optical axis. The OIS-x coil **1520** may move the OIS-x magnet **1510** in an x-axis direction through interaction with the OIS-x magnet **1510.** The OIS-x coil **1520** may face the OIS-x magnet **1510.** The OIS-x coil **1520** may face the OIS-x magnet **1510.** The OIS-x coil **1520** may be disposed corresponding to the OIS-x magnet **1510.** The OIS-x coil **1520** may be overlapped with the OIS-x magnet **1510** in a direction perpendicular to the optical axis. The OIS-x coil **1520** may be disposed in the inner substrate **1720.** The OIS-x coil **1520** may be disposed in the AF carrier **1210.**

In a second embodiment of the present invention, the OIS-x coil **1520** can move together with the AF moving unit **1200.** The OIS-x coil **1520** can move in an optical axis direction together with the AF moving unit **1200.** During the AF driving process, the OIS-x coil **1520** can move in an optical axis direction together with the AF moving unit **1200.** The OIS-x coil **1520** can be disposed in the AF moving unit **1200.** The OIS-x coil **1520** can be fixed to the AF moving unit **1200.** The OIS-x coil **1520** can be coupled to the AF moving unit **1200.**

When a current is applied to the OIS-x coil **1520,** the OIS-x magnet **1510** can move away from or closer to the OIS-x coil **1520** in an x-axis direction.

The OIS-x coil **1520** may comprise a first coil portion **1521.** The first coil portion **1521** may interact with the first magnet portion **1511.** The first coil portion **1521** may be overlapped with the first magnet portion **1511** in an x-axis direction. That is, the first coil portion **1521** and the first magnet portion **1511** may be overlapped in a direction that matches the driving direction due to the interaction.

The OIS-x coil **1520** may comprise a second coil portion **1522.** The second coil portion **1522** may interact with the second magnet portion **1512.** The second coil portion **1522** may be overlapped with the second magnet portion **1512** in an x-axis direction. That is, the second coil portion **1522** and the second magnet portion **1512** may be overlapped with each other in a direction that matches the driving direction due to the interaction.

The OIS-x coil **1520** may comprise two coils. The OIS-x coil **1520** may comprise two bundles of coils. The OIS-x coil **1520** may comprise two ring-shaped coils. The OIS-x coil **1520** may comprise two coil units. The OIS-x coil **1520** may comprise two split coils. The OIS-x coil **1520** may be separated into two coils. The OIS-x coil **1520** may be separated into two regions. Each of the first coil portion **1521** and the second coil portion **1522** may comprise a ring shape. The first coil portion **1521** and the second coil portion **1522** can be formed as separate coils.

The first coil portion **1521** and the second coil portion **1522** can be connected. The first coil portion **1521** can be electrically connected to the second coil portion **1522.** At this time, the winding direction of the first coil portion **1521** can be opposite to the winding direction of the second coil portion **1522.** In this case, when a current is applied, the direction of the electromagnetic force induced in s first coil portion **1521** and s second coil portion **1522** can be opposite.

In a modified embodiment, the first coil portion **1521** and the second coil portion **1522** may have the same winding direction. At this time, the directions of the currents applied to the first coil portion **1521** and the second coil portion **1522** may be opposite.

The lens actuator **1010** may comprise an OIS-x sensor **1530.** The OIS driving unit may comprise an OIS-x sensor **1530.** The OIS-x sensor **1530** may be disposed in an inner substrate **1720.** The OIS-x sensor **1530** may comprise a Hall sensor. The OIS-x sensor **1530** may detect an OIS-x magnet **1510.** The OIS-x sensor **1530** may detect a magnetic force of the OIS-x magnet **1510.** The OIS-x sensor **1530** may be disposed at a lower side of the OIS-x magnet **1510.** The OIS-x sensor **1530** may be overlapped with the OIS-x magnet **1510** in an optical axis direction. In a modified embodiment, the OIS-x sensor **1530** may be disposed within the OIS-x coil **1520.** The OIS-x sensor **1530** may be overlapped with the OIS-x coil **1520** in an optical axis direction. The OIS-x sensor **1530** may be overlapped with the OIS-x coil **1520** in a direction perpendicular to the optical axis. The OIS-x sensor **1530** may face the OIS-x magnet **1510.** The OIS-x sensor **1530** may be disposed at a position corresponding to the OIS-x magnet **1510.** The OIS-x sensor **1530** may detect movement of the OIS-x magnet **1510.** The amount of movement or position of the OIS-x magnet **1510** detected by the OIS-x sensor **1530** may be used for feedback of handshake correction driving in an x-axis direction.

The lens actuator **1010** may comprise an OIS-x yoke **1540.** The OIS-x yoke **1540** may be disposed in an OIS-x magnet **1510.** The OIS-x yoke **1540** may be disposed between the OIS-x magnet **1510** and the OIS carrier **1310.** The OIS-x yoke **1540** may prevent magnetic flux leakage of the OIS-x magnet **1510** and thereby improve interaction with the OIS-x coil **1520.**

The lens actuator **1010** may comprise an OIS-y driving unit **1600.** The OIS driving unit may comprise an OIS-y driving unit **1600.** The OIS-y driving unit **1600** may move the OIS carrier **1310** in a y-axis direction perpendicular to both the optical axis and the x-axis direction. The OIS-y driving unit **1600** may move the OIS carrier **1310** in a y-axis direction perpendicular to both the optical axis and the x-axis direction through electromagnetic force. The OIS-y driving unit **1600** may comprise a coil and a magnet.

The lens actuator **1010** may comprise an OIS-y magnet **1610** and an OIS-y coil **1620** that move the OIS moving unit **1300** in a y-axis direction perpendicular to the optical axis direction and the x-axis direction.

In a second embodiment of the present invention, the OIS-y magnet **1610** and the OIS-y coil **1620** can move the OIS moving unit **1300** in a second direction perpendicular to the optical axis direction and the first direction. At this time, the second direction may be a y-axis direction. By the interaction of the OIS-y coil **1620** and the OIS-y magnet **1610,** the OIS carrier **1310** can move in a y-axis direction perpendicular to both the optical axis direction and the x-axis direction. The OIS-y magnet **1610** and the OIS carrier **1310** can move integrally in a y-axis direction. The OIS-y magnet **1610** can be overlapped with the AF magnet **1410** in a second direction. The OIS-y magnet **1610** can be overlapped with the AF magnet **1410** in a y-axis direction.

The lens actuator **1010** may comprise an OIS-y magnet **1610.** The OIS-y driving unit **1600** may comprise an OIS-y magnet **1610.** The OIS-y magnet **1610** may be an 'OIS-y magnet'. The OIS-y magnet **1610** may be a permanent magnet. The OIS-y magnet **1610** may be disposed in the OIS moving unit **1300.** The OIS-y magnet **1610** may be spaced apart from the OIS-x magnet **1510.** The OIS-y magnet **1610** may be spaced apart from the AF magnet **1410.** The OIS-y magnet **1610** may be disposed in the OIS carrier **1310.** The OIS-y magnet **1610** may be disposed on an outer side surface of the OIS carrier **1310.** The OIS-y magnet **1610** may be fixed to the OIS carrier **1310.** The OIS-y magnet **1610** may be coupled to the OIS carrier **1310.** The OIS-y magnet **1610** may be adhesively bonded to the OIS carrier **1310** with an adhesive. The OIS-y magnet **1610** may be disposed within the cover **1120.** The OIS-y magnet **1610** may interact with the OIS-y coil **1620.** The OIS-y magnet **1610** may electromagnetically interact with the OIS-y coil **1620.** The OIS-y magnet **1610** may be disposed at a position corresponding to the OIS-y coil **1620.** The OIS-y magnet **1610** can face the OIS-y coil **1620.** The OIS-y magnet **1610** can face the OIS-y coil **1620.** The OIS-y magnet **1610** can be overlapped with the OIS-y coil **1620** in a direction perpendicular to the optical axis. The OIS-y magnet **1610** can be overlapped with the OIS-y coil **1620** in a y-axis direction. The OIS-y magnet **1610** can move in a y-axis direction.

The OIS-y magnet **1610** can move in the direction of pushing and pulling the OIS-y coil **1620** through interaction with the OIS-y coil **1620.** (See C in FIG. 85)

The OIS-y magnet **1610** may be a two-pole magnet. The OIS-y magnet **1610** may comprise a two-pole magnetizing magnet. The OIS-y magnet **1610** may comprise an N pole and an S pole.

The OIS-y magnet **1610** may comprise a third magnet portion **1611.** The third magnet portion **1611** may comprise an N pole and an S pole. The third magnet portion **1611** may be disposed on a fourth side surface of the OIS moving unit **1300.** The third magnet portion **1611** may comprise an inner surface being disposed on a fourth side surface of the OIS moving unit **1300** and an outer surface opposite to the inner surface. The inner surface of the third magnet portion **1611** may be formed as an N pole in its entirety. The outer surface of the third magnet portion **1611** may be formed as an S pole in its entirety. Or, conversely, the inner surface of the third magnet portion **1611** may be an S pole and the outer surface may be an N pole.

The OIS-y magnet **1610** may comprise a fourth magnet portion **1612.** The fourth magnet portion **1612** may comprise a south pole and a north pole. The fourth magnet portion **1612** may be disposed on a fourth side surface of the OIS moving unit **1300.** The fourth magnet portion **1612** may comprise an inner surface being disposed on a fourth side surface of the OIS moving unit **1300** and an outer surface opposite to the inner surface. The inner surface of the fourth magnet portion **1612** may be formed as a south pole in its entirety. The outer surface of the fourth magnet portion **1612** may be formed as a north pole in its entirety. Or, conversely, the inner surface of the fourth magnet portion **1612** may be a north pole and the outer surface may be a south pole.

The third magnet portion **1611** and the fourth magnet portion **1612** may be overlapped with each other in a y-axis direction perpendicular to the optical axis direction and the x-axis direction. The third magnet portion **1611** and the fourth magnet portion **1612** may be formed to have the same size. The third magnet portion **1611** and the fourth magnet portion **1612** may be formed to have the same shape.

In a second embodiment of the present invention, the third magnet portion **1611** and the fourth magnet portion **1612** of the OIS-y magnet **1610** may have outer surfaces formed with different polarities. However, in a modified embodiment, the third magnet portion **1611** and the fourth magnet portion **1612** of the OIS-y magnet **1610** may have outer surfaces formed with the same polarity.

The polarity of the third magnet portion **1611** facing the third coil portion **1621** and the polarity of the fourth magnet portion **1612** facing the fourth coil portion **1622** may be different from each other. The polarity of the entire area of the third magnet portion **1611** facing the third coil portion **1621** may be a south pole. The polarity of the entire area of the third magnet portion **1611** facing the third coil portion **1621** may be a single polarity. The polarity of the entire area of the fourth magnet portion **1612** facing the fourth coil portion **1622** may be a north pole. The polarity of the entire area of the fourth magnet portion **1612** facing the fourth coil portion **1622** may be a single polarity.

The OIS-y magnet **1610** may comprise a neutral portion **1613.** The neutral portion **1613** may be disposed between the third magnet portion **1611** and the fourth magnet portion **1612.** The neutral portion **1613** may have a lower polarity than the third magnet portion **1611** and the fourth magnet portion **1612.** The neutral portion **1613** may not have a polarity.

In a second embodiment of the present invention, the third magnet portion **1611,** the fourth magnet portion **1612,** and the neutral portion **1613** may be formed integrally. That is, the third magnet portion **1611,** the fourth magnet portion **1612,** and the neutral portion **1613** may be a single four-pole magnetized magnet.

As illustrated in FIG. 86, in a modified embodiment, the third magnet portion **1611** and the fourth magnet portion **1612** may be formed as separate magnets. That is, the OIS-y magnet **1610a** may comprise the third magnet portion **1611** and the fourth magnet portion **1612** formed as separate magnets. The third magnet portion **1611** and the fourth magnet portion **1612** may be spaced apart from each other. A gap, which is not a neutral portion, may be formed between the third magnet portion **1611** and the fourth magnet portion **1612.** Or, the third magnet portion **1611** and the fourth magnet portion **1612** may be in contact with each other so that there is no neutral portion or gap between the third magnet portion **1611** and the fourth magnet portion **1612.**

The lens actuator **1010** may comprise an OIS-y coil **1620.** The OIS-y driving unit **1600** may comprise the OIS-y coil **1620.** The OIS-y coil **1620** may interact with the OIS-y magnet **1610.** The OIS-y coil **1620** may be disposed on the opposite side of the AF coil 1420 with respect to the optical axis. The OIS-y coil **1620** may move the OIS-y magnet **1610** in a y-axis direction, which is perpendicular to both the optical axis and the x-axis. The OIS-y coil **1620** may move the OIS-y magnet **1610** in a y-axis direction through interaction with the OIS-y magnet **1610.** The OIS-y coil **1620** may face the OIS-y magnet **1610.** The OIS-y coil **1620** may face the OIS-y magnet **1610.** The OIS-y coil **1620** may be disposed corresponding to the OIS-y magnet **1610.** The OIS-y coil **1620** may be overlapped with the OIS-y magnet **1610** in a direction perpendicular to the optical axis. The OIS-y coil **1620** may be disposed on the inner substrate **1720.** The OIS-y coil **1620** may be disposed on the AF carrier **1210.**

In a second embodiment of the present invention, the OIS-y coil **1620** can move together with the AF moving unit **1200.** The OIS-y coil **1620** can move in an optical axis direction together with the AF moving unit **1200.** During the AF driving process, the OIS-y coil **1620** can move in an optical axis direction together with the AF moving unit **1200.** The OIS-y coil **1620** can be disposed in the AF moving unit **1200.** The OIS-y coil **1620** can be fixed to the AF moving unit **1200.** The OIS-y coil **1620** can be coupled to the AF moving unit **1200.**

When a current is applied to the OIS-y coil **1620,** the OIS-y magnet **1610** can move away from or closer to the OIS-y coil **1620** in a y-axis direction.

The OIS-y coil **1620** may comprise a third coil portion **1621.** The third coil portion **1621** may interact with the third magnet portion **1611.** The third coil portion **1621** may be overlapped with the third magnet portion **1611** in an x-axis direction. That is, the third coil portion **1621** and the third magnet portion **1611** may be overlapped with each other in a direction that matches the driving direction due to the interaction.

The OIS-y coil **1620** may comprise a fourth coil portion **1622.** The fourth coil portion **1622** may interact with the fourth magnet portion **1612.** The fourth coil portion **1622** may be overlapped with the fourth magnet portion **1612** in an x-axis direction. That is, the fourth coil portion **1622** and the fourth magnet portion **1612** may be overlapped with each other in a direction that matches the driving direction due to the interaction.

The OIS-y coil **1620** may comprise two coils. The OIS-y coil **1620** may comprise two bundles of coils. The OIS-y coil **1620** may comprise two ring-shaped coils. The OIS-y coil **1620** may comprise two coil units. The OIS-y coil **1620** may comprise two split coils. The OIS-y coil **1620** may be separated into two coils. The OIS-y coil **1620** may be separated into two regions. Each of the third coil portion **1621** and the fourth coil portion **1622** may comprise a ring shape. The third coil portion **1621** and the fourth coil portion **1622** can be formed as separate coils.

The third coil portion **1621** and the fourth coil portion 1622 can be connected. The third coil portion **1621** can be electrically connected to the fourth coil portion **1622.** At this time, the winding direction of the third coil portion **1621** can be opposite to the winding direction of the fourth coil portion **1622.** In this case, when a current is applied, the direction of the electromagnetic force induced in the third coil portion **1621** and the fourth coil portion **1622** can be opposite.

In a modified embodiment, the third coil portion **1621** and the fourth coil portion **1622** may have the same winding direction. At this time, the directions of currents applied to the third coil portion **1621** and the fourth coil portion **1622** may be opposite.

The lens actuator **1010** may comprise an OIS-y sensor **1630.** The OIS-y driving unit **1600** may comprise the OIS-y sensor **1630.** The OIS-y sensor **1630** may be disposed in the inner substrate **1720.** The OIS-y sensor **1630** may comprise a Hall sensor. The OIS-y sensor **1630** may detect the OIS-y magnet **1610.** The OIS-y sensor **1630** may detect the magnetic force of the OIS-y magnet **1610.** The OIS-y sensor **1630** may be disposed below the OIS-y magnet **1610.** The OIS-y sensor **1630** may be overlapped with the OIS-y magnet **1610** in an optical axis direction. The OIS-y sensor **1630** may be overlapped with the OIS-y magnet **1610** in a direction perpendicular to the optical axis. In a modified embodiment, the OIS-y sensor **1630** may be disposed within the OIS-y coil **1620.** The OIS-y sensor **1630** may be overlapped with the OIS-y coil **1620** in an optical axis direction. The OIS-y sensor **1630** may face the OIS-y magnet **1610.** The OIS-y sensor **1630** may be disposed at a position corresponding to the OIS-y magnet **1610.** The OIS-y sensor **1630** may detect the movement of the OIS-y magnet **1610.** The movement amount or position of the OIS-y magnet **1610** detected by the OIS-y sensor **1630** may be used for feedback of the handshake correction driving in a y-axis direction.

The lens actuator **1010** may comprise an OIS-y yoke **1640.** The OIS-y yoke **1640** may be disposed on an OIS-y magnet **1610.** The OIS-y yoke **1640** may be disposed between the OIS-y magnet **1610** and the OIS carrier **1310.** The OIS-y yoke **1640** may prevent magnetic flux leakage of the OIS-y magnet **1610** and thereby enhance interaction with the OIS-y coil **1620.**

When viewed from above, the AF magnet **1410,** the AF coil **1420,** the OIS-y magnet **1610,** and the OIS-y coil **1620** can be disposed in order on an imaginary straight line. When viewed from above, the AF magnet **1410,** the AF coil **1420,** the OIS-y magnet **1610,** and the OIS-y coil **1620** can be disposed in order on an imaginary straight line. When viewed from above, the AF magnet **1410,** the AF coil **1420,** the OIS-y magnet **1610,** and the OIS-y coil **1620** can be disposed in order. When viewed from above, the AF magnet **1410,** the AF coil **1420,** the OIS-y magnet **1610,** and the OIS-y coil **1620** can be disposed in order in a y-axis direction. When viewed from above, the AF magnet **1410,** the AF coil **1420,** the OIS-y magnet **1610,** and the OIS-y coil **1620** can be overlapped in a y-axis direction.

The lens actuator **1010** may comprise substrates **1710** and **1720.** The substrates **1710** and **1720** may comprise a flexible printed circuit board (FPCB). The substrates **1710** and **1720** may be electrically connected to coils **1420, 1520** and **1620.** The substrates **1710** and **1720** may be electrically connected to sensors **1430, 1530** and **1630.**

The lens actuator **1010** may comprise an outer substrate **1710.** The outer substrate **1710** may be disposed in the base **1110.** The outer substrate **1710** may be electrically connected to coils **1420, 1520** and **1620.** The outer substrate **1710** may be electrically connected to sensors **1430, 1530** and **1630.** The outer substrate **1710** may connect the AF carrier **1210** and the base **1110.** The outer substrate **1710** may elastically connect the AF carrier **1210** and the base **1110.** The outer substrate **1710** may connect the fixed unit **1100** and the inner substrate **1720.** The outer substrate **1710** may support the AF carrier **1210** to be movable against the base **1110.** The outer substrate **1710** can guide the AF carrier **1210** to move in an optical axis direction with respect to the base **1110.** The outer substrate **1710** can comprise a flexible substrate. The outer substrate **1710** can comprise a flexible printed circuit board (FPCB). The outer substrate **1710** can comprise an elastic portion. The outer substrate **1710** can comprise an elastic member. The outer substrate **1710** can comprise an outer portion **1711** disposed in the fixed unit **1100,** and a connecting portion **1712** being extended from the outer portion **1711** and coupled to the inner substrate **1720.**

The outer substrate **1710** may comprise an outer side portion **1711.** The outer side portion **1711** may be disposed on the base **1110.** The outer side portion **1711** may be formed to surround a side surface of the base **1110.** The outer side portion **1711** may be disposed on three side surfaces of the base **1110.** The outer side portion **1711** may comprise two terminal portions. The two terminal portions may be disposed on opposite sides with respect to the optical axis. The terminal portion may comprise a terminal **1711-1.**

The outer substrate **1710** may comprise a terminal **1711-1.** The outer side portion **1711** of the outer substrate **1710** may comprise a terminal **1711-1.** The terminal **1711-1** may be electrically connected to a terminal **1712-1.** The terminal **1711-1** may be disposed at a lower end portion of the base **1110.** The terminal **1711-1** may be coupled to a printed circuit board **1050.** The terminal **1711-1** may be coupled to a terminal of the printed circuit board **1050** via solder. The terminal **1711-1** may be coupled to a terminal of the printed circuit board **1050** via a conductive member. The terminal **1711-1** may be connected to a terminal of the printed circuit board **1050.** The terminal **1711-1** can be electrically connected to a terminal of a printed circuit board **1050.**

The outer substrate **1710** may comprise a connecting portion **1712.** The connecting portion **1712** may be an 'extension portion'. The connecting portion **1712** may be a 'leg portion'. The connecting portion **1712** may be extended from the outer side portion **1711.** At least a portion of the connecting portion **1712** may move together with the AF carrier **1210.** The extending portion may extend from the outer side portion **1711.** At least a portion of the extending portion may move together with the AF carrier **1210.** At least a portion of the connecting portion **1712** may be disposed perpendicular to the optical axis direction. The connecting portion **1712** of the outer substrate **1710** may be coupled to the inner substrate **1720** such that the inner substrate **1720** may move in an optical axis direction. At least a portion of the connecting portion **1712** may be disposed parallel to the optical axis direction.

The connecting portion **1712** may comprise a plurality of connecting portions. The connecting portion **1712** may comprise a first connecting portion and a second connecting portion. The second connecting portion may be disposed below the first connecting portion.

The outer substrate **1710** may comprise a terminal **1712-1.** The connecting portion **1712** of the outer substrate **1710** may comprise a terminal **1712-1.** The terminal **1712-1** may be coupled to a terminal **1721-1** of the inner substrate **1720.** The terminal **1712-1** of the outer substrate **1710** may be coupled to the terminal **1721-1** of the inner substrate **1720** through solder. The terminal **1712-1** of the outer substrate **1710** may be coupled to the terminal **1721-1** of the inner substrate **1720** through a conductive member. The terminal **1712-1** of the outer substrate **1710** may be connected to the terminal **1721-**1 of the inner substrate **1720.** The terminal **1712-1** of the outer substrate **1710** can be electrically connected to the terminal **1721-1** of the inner substrate **1720.**

The outer substrate **1710** may comprise a bent portion **1712-2.** The bent portion **1712-2** may be formed in the connecting portion **1712.** The bent portion **1712-2** may be formed in each of the first connecting portion and the second connecting portion. The bent portion **1712-2** may comprise a shape that is bent at least 55 times. The bent portion **1712-2** may comprise a shape that is bent in a U shape. The bent portion **1712-2** may comprise a rounded shape. The bent portion **1712-2** may comprise a portion that is disposed parallel to an optical axis.

Hereinafter, one of the 'terminal **1711-1'** and the 'terminal **1712-1'** of the outer substrate **1710** may be referred to as a 'first terminal' and the other may be referred to as a 'second terminal'.

The lens actuator **1010** may comprise an inner substrate **1720.** The inner substrate **1720** may be electrically connected to coils **1420, 1520** and **1620.** The inner substrate **1720** may be electrically connected to sensors **1430, 1530** and **1630.** The inner substrate **1720** may be disposed in the AF moving unit **1200.** The inner substrate **1720** may be disposed in the AF carrier **1210.** The inner substrate **1720** may be fixed to the AF carrier **1210.** The inner substrate **1720** may be coupled to the AF carrier **1210.** The inner substrate **1720** may be bonded to the AF carrier **1210** with an adhesive. The inner substrate **1720** may comprise a flexible substrate. The inner substrate **1720** may comprise a flexible printed circuit board (FPCB). The inner substrate **1720** may comprise an elastic portion. The inner substrate **1720** may comprise an elastic member.

The inner substrate **1720** can be coupled to a lower surface of the holder member **1220.** The preload member **1230** can be coupled to the inner substrate **1720.**

The inner substrate **1720** may comprise a side plate portion **1721.** The side plate portion **1721** may be disposed on the side surface of the AF carrier **1210.** The side plate portion **1721** may be disposed on an outer side surface of the AF carrier **1210.** In another embodiment, the side plate portion **1721** may be disposed on an inner side surface of the AF carrier **1210.** The side plate portion **1721** of the inner substrate **1720** may comprise a plurality of portions. The side plate portion **1721** may comprise first to fourth portions.

The inner substrate **1720** may comprise a first portion. The first portion may be disposed on the AF carrier **1210.** The AF coil **1420** may be disposed in a first portion of the inner substrate **1720.** The AF sensor **1430** may be disposed in a first portion of the inner substrate **1720.** The AF yoke **1440** may be disposed in a first portion of the inner substrate **1720.**

The inner substrate **1720** may comprise a second portion. The second portion may be disposed opposite to the first portion. The second portion may be disposed in the AF carrier **1210.** The second portion may be disposed at a second side surface of the AF carrier **1210.** The OIS-y coil **1620** may be disposed at a second portion of the inner substrate **1720.** The OIS-y sensor **1630** may be disposed at a second portion of the inner substrate **1720.** More specifically, the OIS-y sensor **1630** may be disposed at a lower plate portion **1722** being bent and disposed at an upper side of a second portion of the inner substrate **1720.** The OIS-y sensor **1630** may be disposed at a lower surface of the lower plate portion **1722.**

The inner substrate **1720** may comprise a third portion. The third portion may be disposed in the AF carrier **1210.** The third portion may be disposed at a third side surface of the AF carrier **1210.** The OIS-x coil **1520** may be disposed at a third portion of the inner substrate **1720.** The OIS-x sensor **1530** may be disposed at a third portion of the inner substrate **1720.** More specifically, the OIS-x sensor **1530** may be disposed at a lower plate portion **1722** being bent and disposed at an upper side of a third portion of the inner substrate **1720.** The OIS-x sensor **1530** may be disposed at a lower surface of the lower plate portion **1722.**

The inner substrate **1720** may comprise a fourth portion. The fourth portion may be disposed opposite to the third portion. The fourth portion may be disposed in the AF carrier **1210.** The fourth portion may be disposed at a fourth side surface of the AF carrier **1210.**

The inner substrate **1720** may comprise a terminal **1721-1.** The terminal **1721-1** may be disposed in the fourth portion of the inner substrate **1720.** The terminal **1721-1** may be electrically connected to the coils **1420, 1520** and **1620.** The terminal **1721-1** may be electrically connected to the sensors **1430, 1530** and **1630.** The terminal **1721-1** may be coupled to the terminal **1712-1** of the outer substrate **1710.**

The inner substrate **1720** may comprise a terminal **1722-1.** The terminal **1722-1** may be disposed in the lower plate portion **1722** of the inner substrate **1720.** The terminal **1722-1** may be electrically connected to the coils **1420, 1520** and **1620.** The terminal **1722-1** may be electrically connected to the sensors **1430, 1530** and **1630.** The terminal **1722-1** may be coupled to the terminal **1712-1** of the outer substrate **1710.**

The inner substrate **1720** may comprise a hole **1722-2.** Through the hole **1722-2,** a terminal **1722-1** of the inner substrate **1720** may be soldered to a terminal **1712-1** of the outer substrate **1710.**

The lens actuator **1010** may comprise a guide member. The guide member may comprise a ball. The guide member may comprise a pin. The guide member may comprise a cylindrical member. The guide member may guide the movement of the moving unit against the fixed unit **1100** in a specific direction.

The lens actuator **1010** may comprise an AF guide ball **1810.** The AF guide ball **1810** may guide movement of the AF moving unit **1200** against the fixed unit **1100** in an optical axis direction. The AF guide ball **1810** may guide movement of the AF carrier **1210** against the base **1110** in an optical axis direction. The AF guide ball **1810** may be disposed between the fixed unit **1100** and the AF moving unit **1200.** The AF guide ball **1810** may be disposed between the base **1110** and the AF carrier **1210.** The AF guide ball **1810** may be disposed between the housing and the base **1110.** The AF guide ball **1810** may be disposed between the base **1110** and the AF carrier **1210** in an x direction. Or, the AF guide ball **1810** may be disposed between the base **1110** and the AF carrier **1210** in a y direction. The AF guide ball **1810** may be disposed in a groove of the base **1110.** The AF guide ball **1810** may be disposed in a groove of the AF carrier **1210.** The AF guide ball **1810** may be spherical. The AF guide ball **1810** may be formed of metal. Grease may be applied to the surface of the AF guide ball **1810.**

The AF guide ball **1810** may be disposed at a first corner of the base **1110.** The AF guide ball **1810** may be disposed at a second corner in diagonal direction of the first corner of the base **1110.** The AF guide ball **1810** may be disposed at each of the first and second corners of the base **1110.** The first and second corner regions of the fixed unit **1100** may be disposed diagonally against an optical axis. The AF guide ball **1810** may be disposed at the first and second corner regions of the fixed unit **1100.** Two sets of AF guide balls **1810** may be disposed at each of the first and second corners of the base **1110.** At this time, one set may comprise four balls. The two sets may be disposed at opposite sides of the pillar part of the AF carrier **1210.**

In a modified embodiment, the AF guide ball **1810** may be disposed at a first corner and a third corner. Or, the AF guide ball **1810** may be disposed at a first corner and a fourth corner. That is, the AF guide ball **1810** may not be disposed diagonally.

The AF guide ball **1810** may comprise a first unit ball disposed at a first corner region of the fixed unit **1100** when viewed from above, and a second unit ball being disposed at a second corner region diagonally from a first corner region of the fixed unit **1100.** At this time, the OIS guide ball **1820** may comprise a first guide member and a second guide member being spaced apart from each other and disposed diagonally between the first unit ball and the second unit ball of the AF guide ball **1810,** when viewed from above.

The AF guide ball **1810** may comprise a first unit ball and a second unit ball being disposed at a first corner region of the fixed unit **1100** when viewed from above, and a third unit ball and a fourth unit ball being disposed at a second corner region diagonally opposite to the first corner region of the fixed unit **1100.** The AF guide balls **1810** may be disposed in sets of two per corner.

The AF guide ball **1810** may comprise a ball being overlapped with the OIS guide ball **1820** in a direction perpendicular to the optical axis direction. At least a portion of the AF guide ball **1810** may be overlapped with the OIS guide ball **1820.**

The AF guide ball **1810** may comprise an inner ball **1811.** The inner ball **1811** may be disposed in the pillar part **1111** of the base **1110.** The inner ball **1811** may be disposed in the inner groove **1111-1** of the base **1110.** The inner ball **1811** may be disposed in the inner groove **1224-1** of the AF carrier **1210.** The inner ball **1811** may be disposed in the inner groove **1224-1** of the AF moving unit **1200.** The inner ball **1811** may be disposed in the inner groove **1111-1** of the base **1110** and the inner groove **1224-1** of the AF carrier **1210.** The inner ball **1811** may be disposed between the inner groove **1111-1** of the base **1110** and the inner groove **1224-1** of the AF carrier **1210.** The inner ball **1811** can be disposed between the AF moving unit **1200** and the pillar part **1111** of the fixed unit **1100.**

The AF guide ball **1810** may comprise an outer ball **1812.** The outer ball **1812** may be disposed in the outer wall part **1112** of the base **1110.** The outer ball **1812** may be disposed in the outer groove **1112-1** of the base **1110.** The outer ball **1812** may be disposed in the outer groove **1224-2** of the AF carrier **1210.** The outer ball **1812** may be disposed in the outer groove **1112-1** of the base 1110 and the outer groove **1224-2** of the AF carrier **1210.** The outer ball **1812** may be disposed between the outer groove **1112-1** of the base **1110** and the outer groove **1224-2** of the AF carrier **1210.** The outer ball **1812** may be disposed between the outer groove **1112-1** of the fixed unit **1100** and the outer groove **1224-2** of the AF moving unit **1200.** The outer ball **1812** may be disposed between the AF moving unit **1200** and the outer wall part **1112** of the fixed unit **1100.**

The inner ball **1811** may comprise a plurality of inner balls **1811.** The plurality of inner balls **1811** may be disposed in the optical axis direction. The inner ball **1811** may comprise four inner balls **1811.** The inner ball **1811** may comprise first to fourth inner balls. Two of the four inner balls **1811** may have large diameters and the remaining two may have small diameters. The two balls with large diameters may be disposed at the uppermost end and the lowermost end. In other words, two balls with small diameters may be disposed between the two balls with large diameters.

The inner ball **1811** may comprise an inner uppermost ball **1811-1.** The inner uppermost ball **1811-1** may be disposed highest among the inner balls **1811.** The inner uppermost ball **811-1** may be disposed closest to the upper plate **1121** of the cover **1120** among the inner balls **1811.** The inner ball **1811** may comprise an inner lowermost ball **1811-2.** The inner lowermost ball **1811-2** may be disposed lowest among the inner balls **1811.** The inner lowermost ball **1811-2** may be disposed closest to the lower plate portion of the base **1110** among the inner balls **1811.** The plurality of inner balls **1811** may comprise balls having a smaller diameter than each of the inner uppermost ball **1811-1** and the inner lowermost ball **1811-2.** The plurality of inner balls **1811** may comprise balls being disposed between the inner uppermost ball **1811-1** and the inner lowermost ball **1811-2.**

The outer ball **1812** may comprise a plurality of outer balls **1812.** The plurality of outer balls **1812** may be disposed in an optical axis direction. The outer ball **1812** may comprise four outer balls **1812.** The outer ball **1812** may comprise first to fourth outer balls. Two of the four outer balls **1812** may have large diameters and the remaining two may have small diameters. The two balls with large diameters may be disposed at the uppermost end and the lowermost end. That is, two balls with small diameters may be disposed between the two balls with large diameters.

The outer ball **1812** may comprise an outer uppermost ball **1812-1.** The outer uppermost ball **1812-1** may be disposed highest among the outer balls **1812.** The outer uppermost ball **1812-1** may be disposed closest to the upper plate **1121** of the cover **1120** among the outer balls **1812.** The outer ball **1812** may comprise an outer lowermost ball **1812-2.** The outer lowermost ball **1812-2** may be disposed lowest among the outer balls **1812.** The outer lowermost ball **1812-2** may be disposed closest to the lower plate portion of the base **1110** among the outer balls **1812.** The plurality of outer balls **1812** may comprise balls having a diameter smaller than each of the outer uppermost ball **1812-1** and the outer lowermost ball **1812-2.** The plurality of outer balls **1812** may comprise balls being disposed between the outer uppermost ball **1812-1** and the outer lowermost ball **1812-2.**

The AF guide ball **1810** may comprise a plurality of balls disposed in an optical axis direction. At this time, the plurality of balls may comprise uppermost balls **1811-1** and **1812-1** being disposed at the highest position and lowermost balls **1811-2** and **1812-2** being disposed at the lowest position. The height of the point where the elastic member **1920** pressurizes the plate member **1910** may be disposed between the height of the uppermost balls **1811-1** and **1812-1** and the height of the lowermost balls **1811-2** and **1812-2.**

The lens actuator **1010** may comprise an OIS guide ball **1820.** The OIS guide ball **1820** may guide the movement of the OIS carrier **1310** against the AF carrier **1210** in a direction perpendicular to the optical axis. The OIS guide ball **1820** may be disposed between the AF moving unit **1200** and the OIS moving unit **1300.** The OIS guide ball **1820** may be disposed between the lower plate of the AF moving unit **1200** and the OIS moving unit **1300.** The OIS guide ball **1820** may be disposed between the AF carrier **1210** and the OIS carrier **1310.** The OIS guide ball **1820** may be disposed between the lower side of the AF carrier **1210** and the OIS carrier **1310.** The OIS guide ball **1820** may be disposed between the housing and the bobbin. The OIS guide ball **1820** may be disposed between the housing and the lower side of the bobbin. The OIS guide ball **1820** may be disposed between the AF carrier **1210** and the OIS carrier **1310** in an optical axis direction.

The OIS guide ball **1820** may be disposed in the protruded portion **1231** of the preload member **1230.** The OIS guide ball **1820** may be disposed in the groove **1232** of the protruded portion **1231.** The OIS guide ball **1820** may be disposed in the groove **1311** of the OIS moving unit **1300.** The OIS guide ball **1820** may be disposed between the groove **1232** of the protruded portion **1231** of the AF moving unit **1200** and the groove 311 of the OIS moving unit **1300.**

The OIS guide ball **1820** may be disposed between the preload member **1230** of the AF carrier **1210** and the OIS carrier **1310.** The OIS guide ball **1820** may be pressurized between the AF carrier **1210** and the OIS carrier **1310** by the pressurizing force of the coil spring **1830.** The preload member **1230** may pressurize the OIS guide ball **1820** upward during the process of being coupled to the holder member **1220.** The preload member **1230** may pressurize the OIS guide ball **1820** toward the OIS carrier **1310** during the process of being coupled to the holder member **1220.** At this time, the OIS carrier **1310** may pressurize the OIS guide ball **1820** toward the preload member **1230** by the restoring force of the coil spring **1830.** Accordingly, the OIS guide ball **1820** can be pressurized between the preload member **1230** and the OIS carrier **1310.**

The OIS guide ball **1820** can guide the OIS moving unit **1300** to move in an x-axis direction and a y-axis direction. The OIS guide ball **1820** can guide the movement of the OIS moving unit **1300** in an x-axis direction and a y-axis direction. The OIS guide ball **1820** can guide the OIS carrier **1310** to move in an x-axis direction and a y-axis direction perpendicular to the optical axis direction against the AF carrier **1210.** That is, the OIS guide ball **1820** can guide the OIS carrier **1310** to move in an x-axis direction and a y-axis direction. That is, the OIS guide ball **1820** can guide the movement in both an x-axis direction and a y-axis direction. For reference, in a first embodiment of the present invention in which the ball guiding an x-axis direction and the ball guiding a y-axis direction are provided as a single unit, the size of the lens actuator 1010 can be minimized compared to the comparative example in which the ball guiding an x-axis direction and the ball guiding a y-axis direction are provided separately. In particular, the height of the lens actuator **1010** in an optical axis direction can be reduced. Through this, the height being protruded from the smartphone, that is, the shoulder height can be minimized. The OIS guide ball **1820** may comprise a plurality of balls. The OIS guide ball **1820** may comprise four balls.

In a modified embodiment, the OIS guide ball **1820** may be provided with a separate ball that guides an x-axis driving and a ball that guides a y-axis driving.

The lens actuator **1010** may comprise an elastic member. The elastic member may be formed to support OIS driving. The elastic member may support movement of the OIS moving unit **1300.** The elastic member may be a 'supporting member'. The elastic member may be formed to pressurize the OIS guide ball **1820.** The elastic member may be a 'pressurizing member'. The elastic member may be formed to guide both an OIS-x-axis driving and an OIS-y-axis driving with only the OIS guide ball **1820.** The elastic member may have elasticity. The elastic member may be formed of metal.

The elastic member can pressurize the OIS guide ball **1820** between the AF moving unit **1200** and the OIS moving unit **1300.** The elastic member can pressurize the OIS moving unit **1300** toward the AF moving unit **1200.** The elastic member can pressurize the AF moving unit **1200** toward the OIS moving unit **1300.**

The lens actuator **1010** may comprise an elastic member **1830.** The elastic member **1830** may be an 'upper elastic member'. The elastic member **1830** may be an 'upper spring'. The elastic member **1830** may be a leaf spring. The elastic member **1830** may have elasticity. The elastic member **1830** may be disposed in the OIS moving unit **1300.** The elastic member **1830** may be coupled to the OIS moving unit **1300.** The elastic member **1830** may be connected to the OIS moving unit **1300.** The elastic member **1830** may be coupled to an upper surface of the OIS moving unit **1300.** The elastic member **1830** may be disposed on an upper surface of the OIS moving unit **1300.** The elastic member **1830** may be disposed on the upper portion of the OIS carrier **1310.** The elastic member **1830** may be disposed on the OIS carrier **1310.** The elastic member **1830** may be disposed at an upper portion of the OIS carrier **1310.** The elastic member **1830** may be disposed above the OIS carrier **1310.** The elastic member **1830** may be disposed perpendicular to the optical axis.

The elastic member **1830** may comprise an inner side portion **1831.** The inner side portion **1831** may be coupled with the OIS moving unit **1300.** The elastic member **1830** may comprise an outer side portion **1832.** The outer side portion **1832** may be coupled with a wire **1850.** The elastic member **1830** may comprise a connecting portion **1833.** The connecting portion **1833** may connect the inner side portion **1831** and the outer side portion **1832.** The connecting portion **1833** may elastically connect the inner side portion **1831** and the outer side portion **1832.** The connecting portion **1833** may comprise elasticity. The connecting portion **1833** may be an elastic portion. The connecting portion **1833** may be a 'leg portion'.

The inner side portion **1831** of the elastic member **1830** may be disposed higher than the outer side portion **1832.** The inner side portion **1831** of the elastic member **1830** may be located higher than the outer side portion **1832.** The inner side portion **1831** of the elastic member **1830** may be disposed higher than the outer side portion **1832** by a first distance. The reason why the inner side portion **1831** of the elastic member **1830** is disposed higher than the outer side portion **1832** may be due to the pressurizing force of the preload member **1230.** Through this structure, the OIS guide ball 1820 may be maintained in contact with the preload member **1230** of the AF carrier **1210** and the OIS carrier **1310.**

The OIS carrier **1310** may comprise a first region being coupled with the elastic member **1830.** The wire **1850** may comprise a second region being coupled with the elastic member **1830.** The first region of the OIS carrier **1310** may be disposed above the second region of the wire **1850.** The first region of the OIS carrier **1310** may be disposed above the second region of the wire **1850** by 0.2 to 0.6 mm. The first region of the OIS carrier **1310** may be disposed above the second region of the wire **1850** by 0.3 to 0.5 mm.

The lens actuator **1010** may comprise a wire **1850.** The wire **1850** may be a 'side portion elastic member'. The wire **1850** may be a wire. The wire **1850** may be a wire spring. The wire **1850** may be a suspension wire. The wire **1850** may have elasticity. The wire **1850** may connect the elastic member **1830** and the AF carrier **1210.** The wire **1850** may connect the elastic member **1830** and the lower side of the AF carrier **1210.** The wire **1850** may connect the elastic member **1830** and the housing. The wire **1850** may connect the elastic member **1830** and the lower side of the housing. The wire **1850** can elastically connect the elastic member **1830** and the AF carrier **1210.** The wire **1850** can connect the elastic member **1830** and the metal member **1225** of the AF carrier **1210.** The wire **1850** can elastically connect the elastic member **1830** and the metal member **1225** of the AF carrier **1210.** The wire **1850** can be disposed parallel to the optical axis. The wire **1850** can be disposed in an optical axis direction.

An upper end portion of the wire **1850** can be coupled with the elastic member **1830.** The first portion of the wire **1850** can be coupled with the elastic member **1830.** The lower end portion of the wire **1850** can be coupled with the AF moving unit **1200.** The lower end portion of the wire **1850** can be coupled with a lower surface of the AF moving unit **1200.** The second portion of the wire **1850** can be coupled with the AF moving unit **1200.** The lower end portion of the wire **1850** can be coupled with the AF carrier **1210.** The lower end portion of the wire **1850** can be coupled with the holder member **1220.** The lower end portion of the wire **1850** can be coupled with the metal member **1225.** The lower end portion of the wire **1850** can be soldered to the metal member **1225.** The lower end portion of the wire **1850** can be welded to the metal member **1225.** The lower end portion of the wire **1850** can be bonded to the metal member **1225** by a conductive epoxy. The lower end portion of the wire **1850** can be bonded to the metal member **1225** through a conductive material. The lower end portion of the wire **1850** can be directly bonded to the metal member **1225.** The wire **1850** can connect the elastic member **1830** and the AF moving unit **1200.** The wire **1850** can connect the elastic member **1830** and the AF carrier **1210.** The wire **1850** can connect the elastic member **1830** and the holder member **1220.** The wire **1850** can connect the elastic member **1830** and the metal member **1225.**

The lens actuator **1010** may comprise a pressurizing member. The pressurizing member may be an 'AF guide ball pressurizing member'. The pressurizing member may pressurize the AF guide ball **1810.** The pressurizing member may be formed to pressurize the ball. The AF guide ball **1810** pressurized by the pressurizing member may be sandwiched between the fixed unit **1100** and the AF moving unit **1200.** The AF guide ball **1810** pressurized by the pressurizing member may be sandwiched between the base **1110** and the AF carrier **1210.** The pressurizing member may allow the AF guide ball **1810** to be maintained in contact with the fixed unit **1100** and the AF moving unit **1200.** The pressurizing member may allow the AF guide ball **1810** to be maintained in contact with the base **1110** and the AF carrier **1210.**

The lens actuator **1010** may comprise a plate member **1910.** The pressurizing member may comprise the plate member **1910.** The plate member **1910** may be disposed at the AF guide ball 1810. The plate member **1910** may contact the AF guide ball **1810.** The plate member **1910** may be disposed at the elastic member **1920.** The plate member **1910** may be disposed in the base **1110.** The plate member **1910** may be disposed between the elastic member **1920** and the AF guide ball **1810.** The plate member **1910** may pressurize the AF guide ball **1810** toward the AF carrier **1210** by the elastic member **1920.** The plate member **1910** may be disposed between the AF guide ball **1810** and the fixed unit **1100.** The plate member **1910** can be disposed between the inner ball **1811** and the pillar part **1111** of the fixed unit **1100**

The lens actuator **1010** may comprise an elastic member **1920.** The pressurizing member may comprise the elastic member **1920.** The elastic member **1920** may be a spring. The elastic member **1920** may be a tapered spring. The elastic member **1920** may be disposed in the fixed unit **1100.** The elastic member **1920** may pressurize the AF guide ball **1810** toward the AF moving unit **1200.** The elastic member **1920** may pressurize the plate member **1910** toward the AF guide ball **1810.** The elastic member **1920** may be disposed between the plate member **1910** and the fixed unit **1100.** The elastic member **1920** may push the plate member **1910** against the fixed unit **1100.** The elastic member **1920** can pressurize the plate member **1910** in an opposite direction of the fixed unit **1100.** The elastic member **1920** can be disposed between the plate member **1910** and the pillar part **1111** of the fixed unit **1100.** The elastic member **1920** can be disposed in the inner groove **1111-1** of the fixed unit **1100.** The elastic member **1920** can pressurize the AF guide ball **1810** between the fixed unit **1100** and the AF moving unit **1200.**

In a modified embodiment, the elastic member **1920** may be disposed in the AF moving unit **1200.** At this time, the elastic member **1920** may pressurize the AF guide ball **1810** toward the fixed unit **1100.** The elastic member **1920** may be disposed in one of the fixed unit **1100** and the AF moving unit **1200** to pressurize the AF guide ball **1810** toward the other of the fixed unit **1100** and the AF moving unit **1200.** The elastic member **1920** may pressurize the plate member **1910.** The elastic member **1920** may be disposed between the plate member **1910** and the base **1110.** The elastic member **1920** may be disposed between the AF guide ball **1810** and the base **1110.** The elastic member **1920** may be disposed in the base **1110.** The elastic member **1920** can be disposed in the inner groove **1111-1** of the base **1110.** The elastic member **1920** can pressurize the AF guide ball **1810** toward the AF carrier **1210.** Through this, the AF guide ball **1810** can be maintained in contact with the plate member **1910** and the AF carrier **1210.**

The elastic member **1920** may comprise a bent portion. The bent portion may comprise a bent shape. The bent portion may comprise a plurality of bent portions. The bent portion may comprise three bent portions. The elastic member **1920** may be bent at least three times. The elastic member **1920** may comprise an upper bent portion **1921.** The elastic member **1920** may comprise a lower bent portion **1922.** The elastic member **1920** may comprise a connecting bent portion **1923.** The connecting bent portion **1923** may be disposed between the upper bent portion **1921** and the lower bent portion **1922.** The upper bent portion **1921** may form an obtuse angle. The lower bent portion **1922** may form an obtuse angle. The connecting bent portion **1923** may form an obtuse angle. The upper bent portion **1921** may be disposed in the fixed unit **1100.** The lower bent portion **1922** may be disposed in the fixed unit **1100.** The connecting bent portion **1923** may be disposed in the plate member **1910.** Through this structure, the elastic member **1920** may push the plate member **910** against the fixed unit **1100.** The connecting bent portion **1923** may be in contact with the plate member **1910** and pressurize the plate member **1910** toward the AF guide ball **1810.**

The height of the point where the elastic member **1920** pressurizes the plate member **1910** may be lower than the height of the ball that is disposed lower between the inner uppermost ball **1811-1** and the outer uppermost ball **1812-1** and higher than the height of the ball being disposed higher between the inner lowermost ball **1811-2** and the outer lowermost ball **1812-2.** More specifically, as shown in (a) of FIG. 97, when the AF moving unit **1200** moves upward, the height (b) of the point where the elastic member **1920** the plate member **1910** may be higher than the height (a) of the ball that is disposed higher between the inner lowermost ball **1422** and the outer lowermost ball **1412.** A gap **c** may exist in the height between the two points. In addition, as shown in (b) of FIG. 97, when the AF moving unit **1200** moves downward, the height e of the point where the elastic member **1920** pressurizes the plate member **1910** may be lower than the height **d** of the ball that is disposed lower between the inner uppermost ball **1421** and the outer uppermost ball **1411.** A gap **f** may exist between the two points. Through this, the generation of a moment being generated as the elastic member **1920** pressurizes the plate member **1910** can be prevented or minimized. In other words, the phenomenon in that the plate member **1910** is tilted or detached can be prevented.

The lens actuator **1010** may comprise a reinforcing member **1930.** The reinforcing member **1930** may be disposed in the base **1110.** The reinforcing member **1930** may be disposed to reinforce the strength of the base **1110.** The reinforcing member **1930** may prevent damage to the base **1110.** The reinforcing member **1930** may prevent damage to the pillar part **1111** of the base **1110.** The reinforcing member **1930** may prevent damage to the outer wall part **1112** of the base **1110.** The reinforcing member **1930** may have elasticity. The reinforcing member **1930** may be formed of metal. The reinforcing member **1930** may comprise a shape that is bent at least 55 times. The reinforcing member **1930** may be formed in a '⊂' shape when viewed from above. The reinforcing member **1930** can be opened inward.

The reinforcing member **1930** may comprise an inner side portion **1931.** The inner side portion **1931** may be disposed on an opposite surface of the inner groove **1111-1** of the pillar part **1111** of the fixed unit **1100.** The reinforcing member **1930** may comprise an outer side portion **1932.** The outer side portion **1932** may be disposed on an opposite surface of the outer groove **1112-1** of the outer wall part **1112** of the fixed unit **1100.** The reinforcing member **1930** may comprise a connecting portion **1933.** The connecting portion **1933** may connect the inner side portion **1931** and the outer side portion **1932.**

The lens actuator **1010** may comprise a cover **1940.** The cover **1940** may be disposed on the AF guide ball **1810.** The cover **1940** may be overlapped with the AF guide ball **1810** in an optical axis direction. The cover **1940** may be overlapped with the inner ball **1811** in an optical axis direction. The cover **1940** may be overlapped with the outer ball **1812** in an optical axis direction. The cover **1940** may be disposed on the inner groove **1224-1** and the outer groove **1224-2** of the AF carrier **1210** to prevent the AF guide ball **1810** from being separated upward.

In a second embodiment of the present invention, one side of the wire **1850** can be coupled to the AF moving unit **1200** that is fixed during OIS driving, thereby reducing the characteristic of the wire **1850** vibrating as a point mass.

In a second embodiment of the present invention, the base **1110,** preload member **1230,** inner substrate **1720,** holder member **1220,** and OIS carrier **1310** may be disposed in this order from the bottom up. In a first embodiment of the present invention, the base **1110,** preload member **1230,** inner substrate **1720,** holder member **1220,** and OIS carrier **1310** may be laminated in this order from the bottom up. In a first embodiment of the present invention, a stable coupling surface with the lens module **1020** can be secured through the lamination direction. In a first embodiment of the present invention, the rib of the lens module **1020** can be disposed in the groove **1313** of the OIS carrier **1310.**

In a second embodiment of the present invention, two coils may be provided for each of the OIS-x driving unit **1500** and the OIS-y driving unit **1600.** By forming the distribution of the driving force into two points on the outside, the driving linearity may be improved. The magnets of each of the OIS-x driving unit **1500** and the OIS-y driving unit **1600** may be formed with four poles. Or, a total of four magnets may be formed, with two each of the two poles.

According to a second embodiment of the present invention, the attraction and repulsive forces between the AF magnet **1410** and the OIS-x magnet **1510** or the AF magnet **1410** and the OIS-y magnet **1610** can be reduced. Accordingly, the driving noise can be reduced.

Hereinafter, the auto focus (AF) operation of the lens actuator according to a second embodiment of the present invention will be described with reference to the drawings.

FIGS. 98 to 100 are drawings for explaining an auto focus driving of a lens actuator according to a second embodiment of the present invention. FIG. 98 is a cross-sectional view illustrating the appearance of a moving unit in an initial state where no current is applied to an AF coil. FIG. 99 is a cross-sectional view illustrating the appearance where a moving unit moves upward in an optical axis direction when a forward current is applied to an AF coil. FIG. 100 is a cross-sectional view illustrating the appearance where a moving unit moves downward in an optical axis direction when a reverse current is applied to an AF coil.

As illustrated in FIG. 98, the moving unit may be disposed at a position spaced apart from both the upper plate **1121** of the cover **1120** and the base **1110** in an initial position where no current is applied to the AF coil **1420.** At this time, the moving unit may be an AF moving unit **1200.** In addition, the moving unit may comprise an AF moving unit **1200** and an OIS moving unit **1300.**

When a positive current is applied to the AF coil **1420,** the AF coil **1420** can move upward in an optical axis direction due to the electromagnetic interaction between the AF coil **1420** and the AF magnet **1410** (See A of FIG. 99). At this time, the AF carrier **1210** can move upward in an optical axis direction together with the AF coil **1420.** Furthermore, the OIS carrier **1310** and the lens can move upward in an optical axis direction together with the AF carrier **1210.** Accordingly, the distance between the lens and the image sensor can be changed, so that the focus of the image formed on the image sensor through the lens can be adjusted.

When a reverse current is applied to the AF coil **1420,** the AF coil **1420** can move downward in an optical axis direction due to the electromagnetic interaction between the AF coil **1420** and the AF magnet **1410** (See **B** of FIG. 100). At this time, the AF carrier **1210** can move downward in an optical axis direction together with the AF coil **1420.** Furthermore, the OIS carrier **1310** and the lens can move downward in an optical axis direction together with the AF carrier **1210.** Accordingly, the distance between the lens and the image sensor can be changed, so that the focus of the image being formed on the image sensor through the lens can be adjusted.

Meanwhile, during the movement of the AF coil **1420,** the AF sensor **1430** moves together with the AF coil **1420** and detects the strength of the magnetic field of the AF magnet **1410** to detect the amount of movement or position of the lens in an optical axis direction. The amount of movement or position of the lens in an optical axis direction detected by the AF sensor **1430** can be used for auto focus feedback control.

Hereinafter, the handshake correction (OIS, optical image stabilization) operation of the lens actuator according to a second embodiment of the present invention will be described with reference to the drawings.

FIGS. 101 to 103 are diagrams for explaining the handshake correction driving of a lens actuator according to a second embodiment of the present invention. FIG. 101 is a cross-sectional view illustrating the appearance of an OIS moving unit in an initial state in which no current is applied to an OIS-x coil and an OIS-y coil. FIG. 102 is a cross-sectional view illustrating the appearance in which an OIS moving unit moves in an x-axis direction perpendicular to the optical axis when a current is applied to an OIS-x coil. FIG. 103 is a cross-sectional view illustrating the appearance in which an OIS moving unit moves in a y-axis direction perpendicular to both an optical axis and an x-axis when a current is applied to an OIS-y coil.

As illustrated in FIG. 101, the moving unit may be disposed at an initial position in a state in which no current is applied to the OIS-x coil **1520** and the OIS-y coil **1620.** At this time, the moving unit may be the OIS moving unit **1300**

When current is applied to the OIS-x coil **1520,** the OIS-x magnet **1510** can move in an x-axis direction perpendicular to the optical axis due to the electromagnetic interaction between the OIS-x coil **1520** and the OIS-x magnet **1510** (See A of FIG. 102). At this time, the OIS carrier **1310** can move in an x-axis direction together with the OIS-x magnet **1510.** Furthermore, the lens can move in an x-axis direction together with the OIS carrier **1310.** More specifically, when a positive current is applied to the OIS-x coil **1520,** the OIS-x magnet **1510,** the OIS carrier **1310,** and the lens can move in one direction on the x-axis. In addition, when a reverse current is applied to the OIS-x coil **1520,** the OIS-x magnet **1510,** the OIS carrier **1310,** and the lens can move in the other direction along the x-axis.

When a current is applied to an OIS-y coil **1620,** the OIS-y magnet **1610** can move in a y-axis direction perpendicular to the optical axis due to the electromagnetic interaction between the OIS-y coil **1620** and the OIS-y magnet **1610** (See **B** of FIG. 103). At this time, the OIS carrier **1310** can move in a y-axis direction together with the OIS-y magnet **1610.** Furthermore, the lens can move in a y-axis direction together with the OIS carrier **1310.** More specifically, when a positive current is applied to the OIS-y coil **1620,** the OIS-y magnet **1610,** the OIS carrier **1310,** and the lens can move in one direction on a y-axis. In addition, when a reverse current is applied to the OIS-y coil **1620,** the OIS-y magnet **1610,** the OIS carrier **1310,** and the lens can move in the other direction on a y-axis.

Meanwhile, the OIS-x sensor **1530** can detect the amount of movement or position of the OIS-x magnet **1510** by detecting the strength of the magnetic field of the OIS-x magnet **1510.** The amount of movement or position detected by the OIS-x sensor **1530** can be used for x-axis direction handshake correction feedback control. The OIS-y sensor **1630** can detect the amount of movement or position of the OIS-y magnet **1610** by detecting the strength of the magnetic field of the OIS-y magnet **1610.** The amount of movement or position detected by the OIS-y sensor **1630** can be used for y-axis direction handshake correction feedback control.

Hereinafter, a camera device according to a second embodiment of the present invention will be described with reference to the drawings.

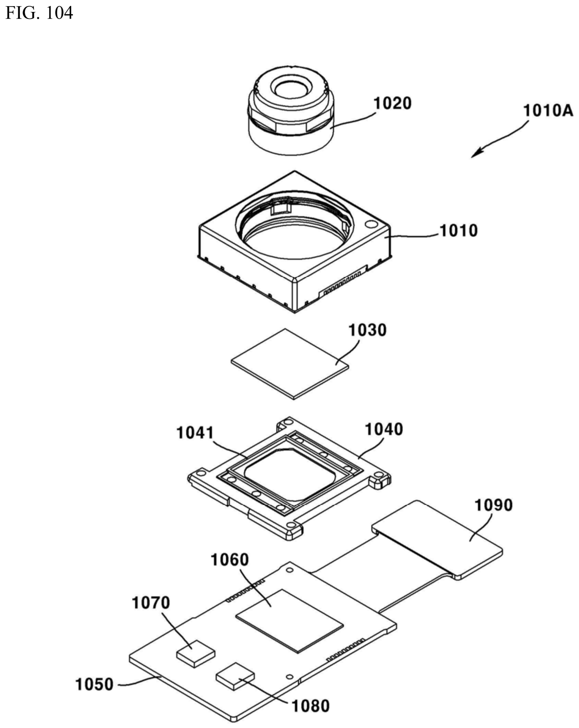

FIG. 104 is an exploded perspective view of a camera device according to a second embodiment of the present invention.

The camera device **1010A** may comprise a camera module.

The camera device **1010A** may comprise a lens module **1020.** The lens module **1020** may comprise at least one lens. The lens may be disposed corresponding to the image sensor **1060.** The lens module **1020** may comprise a lens and a barrel. The lens module **1020** may be coupled to the OIS carrier **1310** of the lens actuator **1010.** The lens module **1020** may be coupled to the OIS carrier **1310** by screw coupling and/or an adhesive. The lens module **1020** may move integrally with the OIS carrier **1310.**

The camera device **1010A** may comprise a filter **1030.** The filter **1030** may block light of a specific frequency band from passing through the lens module **1020** from being incident on the image sensor **1060.** The filter **1030** may be disposed parallel to an x-y plane. The filter **1030** may be disposed between the lens module **1020** and the image sensor **1060.** The filter **1030** may be disposed in the sensor base **1040.** In a modified embodiment, the filter **1030** may be disposed in the base **1110.** The filter **1030** may comprise an infrared filter. The infrared filter may block light in the infrared region from being incident on the image sensor **1060.**

The camera device **1010A** may comprise a sensor base **1040.** The sensor base **1040** may be disposed between the lens actuator **1010** and the printed circuit board **1050.** The sensor base **1040** may comprise a protruded portion **1041** in which a filter **1030** is disposed. An opening may be formed in a portion of the sensor base **1040** in which the filter **1030** is disposed so that light passing through the filter **1030** may be incident on the image sensor **1060.** An adhesive member may couple or attach the base 1110 of the lens actuator **1010** to the sensor base **1040.** The adhesive member may additionally serve to prevent foreign substances from entering the interior of the lens actuator **1010.** The adhesive member may comprise at least one among an epoxy, a thermosetting adhesive, and an ultraviolet-curable adhesive.

The camera device **1010A** may comprise a printed circuit board (PCB) **1050.** The printed circuit board **1050** may be a substrate or a circuit board. A lens actuator **1010** may be disposed in the printed circuit board **1050.** A sensor base **1040** may be disposed between the printed circuit board **1050** and the lens actuator **1010.** The printed circuit board **1050** may be electrically connected to the lens actuator **1010.** An image sensor **1060** may be disposed on the printed circuit board **1050.** Various circuits, elements, control units, and the like may be provided on the printed circuit board **1050** to convert an image being formed on the image sensor **1060** into an electrical signal and transmit it to an external device.

The camera device **1010A** may comprise an image sensor **1060.** The image sensor **1060** may be a configuration in which a light passing through a lens and a filter **1030** is incident thereon to form an image. The image sensor **1060** may be mounted on a printed circuit board **1050.** The image sensor **1060** may be electrically connected to the printed circuit board **1050.** For example, the image sensor **1060** may be coupled to the printed circuit board **1050** by surface mounting technology (SMT). As another example, the image sensor **1060** may be coupled to the printed circuit board **1050** by flip chip technology. The image sensor **1060** may be disposed such that its optical axis is aligned with that of the lens. That is, the optical axis of the image sensor **1060** and the optical axis of the lens may be aligned. The image sensor **1060** can convert light irradiated to the effective image area of the image sensor **1060** into an electrical signal. The image sensor **1060** can be any one among a charge coupled device (CCD), a metal oxide semi-conductor (MOS), a CPD, and a CID.

The camera device **1010A** may comprise a motion sensor **1070.** The motion sensor **1070** may be mounted on a printed circuit board **1050.** The motion sensor **1070** may be electrically connected to the control unit **1080** through a circuit pattern being provided on the printed circuit board **1050.** The motion sensor **1070** may output rotational velocity information due to the movement of the camera device **1010A.** The motion sensor **1070** may comprise a two-axis or three-axis gyro sensor or an angular velocity sensor.

The camera device **1010A** may comprise a control unit **1080.** The control unit **1080** may be disposed on a printed circuit board **1050.** The control unit **1080** may be electrically connected to a coil **1330** of a lens driving device **1010.** The control unit **1080** may individually control the direction, intensity, amplitude, and the like of the current supplied to the coil **1330.** The control unit **1080** may control the lens driving device **1010** to perform an auto focus function and/or a shake correction function. Furthermore, the control unit **1080** may perform auto focus feedback control and/or handshake correction feedback control for the lens driving device **1010.**

The camera device **1010A** may comprise a connector **1090.** The connector **1090** may be electrically connected to the printed circuit board **1050.** The connector **1090** may comprise a port for electrically connecting to an external device.

Hereinafter, an optical instrument according to a second embodiment of the present invention will be described with reference to the drawings.

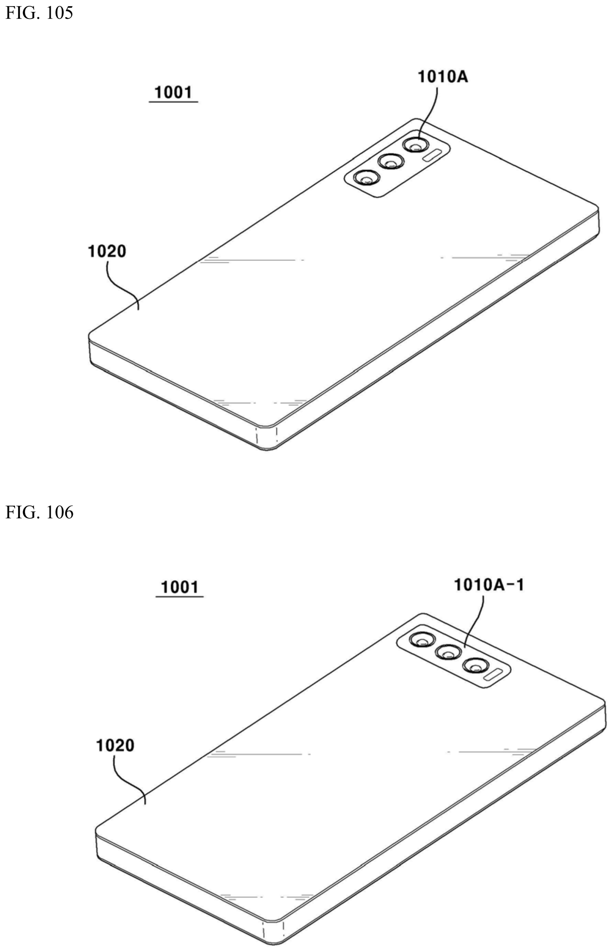

FIG. 105 is a perspective view of an optical instrument according to a second embodiment of the present invention. FIG. 106 is a perspective view of an optical instrument according to a modified embodiment.

The optical instrument **1001** may comprise at least one among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optical instrument **1001** may comprise any device for photographing videos or pictures.

The optical instrument **1001** may comprise a main body **1020.** The optical instrument **1001** may comprise a camera device **1010A.** The camera device **1010A** may be disposed in the main body **1020.** The camera device **1010A** may capture a subject. The optical instrument **1001** may comprise a display. The display may be disposed in the main body **1020.** The display may output one or more of an image and a video captured by the camera device **1010A.** The display may be disposed on a first surface of the main body **1020.** The camera device **1010A** may be disposed on one or more of the first surface of the main body **1020** and the second surface opposite to the first surface. As illustrated in FIG. 105, in the camera device **1010A,** a triple camera may be disposed in a vertical direction. As illustrated in FIG. 106, in the camera device **1010A-1,** a triple camera may be disposed in a horizontal direction.

Although the embodiments of the present invention have been described with reference to the attached drawings, those skilled in the art will appreciate that the present invention can be implemented in other specific forms without altering the technical concept or essential features thereof. Therefore, the embodiments described above should be understood to be illustrative in all respects and not restrictive.

## Claims

1. A lens actuator comprising:
a base;
a housing disposed on the base;
a bobbin disposed in the housing;
a first ball disposed between the housing and the base;
a second ball disposed between the housing and a lower side of the bobbin; and
a coil spring coupled with the bobbin and the housing,
wherein the coil spring is configured to press the second ball.

2. The lens actuator of claim 1, wherein the base comprises a first guide configured to guide movement of the first ball.

3. The lens actuator of claim 2, wherein the housing comprises a second guide configured to guide movement of the first ball and formed on a side surface of the housing.

4. The lens actuator of claim 3, wherein the first guide and the second guide comprise grooves.

5. The lens actuator of claim 1, wherein the housing comprises a first housing comprising a lower plate having a metal member and a second housing coupled with the first housing and having a protrusion configured to guide the second ball.

6. The lens actuator of claim 5, comprising a first substrate disposed between the first housing and the second housing,
wherein the first substrate is coupled with a lower surface of the first housing,
and
wherein the second housing is coupled with the first substrate.

7. The lens actuator of claim 5, wherein the second housing is in contact with the second ball to press a portion of the coil spring.

8. The lens actuator of claim 1, comprising a cover coupled with the base,
wherein the first ball is disposed between the cover and a pillar of the base.

9. The lens actuator of claim 1, wherein the coil spring has a circular ring shape when viewed from above.

10. The lens actuator of claim 1, wherein the coil spring is formed by bending one strand so that it is overlapped with one another multiple times in an optical axis direction.
